(19) Europäisches Patentamt
European Patent Office
Office européen des brevets

(11) **EP 3 997 329 B1**

(12) **EUROPÄISCHE PATENTSCHRIFT**

(45) Veröffentlichungstag und Bekanntmachung des Hinweises auf die Patenterteilung:
**15.11.2023   Patentblatt 2023/46**

(21) Anmeldenummer: **20740552.3**

(22) Anmeldetag: **06.07.2020**

(51) Internationale Patentklassifikation (IPC):
**F03B 13/06** *(2006.01)*

(52) Gemeinsame Patentklassifikation (CPC):
**F03B 13/06;** F05B 2240/40; F05B 2260/42;
Y02E 10/20; Y02E 60/16; Y02P 90/50

(86) Internationale Anmeldenummer:
**PCT/EP2020/069028**

(87) Internationale Veröffentlichungsnummer:
**WO 2021/005016 (14.01.2021 Gazette 2021/02)**

(54) **VERFAHREN ZUR ERRICHTUNG EINES PUMPSPEICHERKRAFTWERKS IN EINER BODENVERTIEFUNG, INSBESONDERE IN EINER TAGEBAUGRUBE**

METHOD FOR CONSTRUCTING A PUMPED STORAGE POWER PLANT IN A GROUND DEPRESSION, IN PARTICULAR IN AN OPEN-CAST MINE

PROCÉDÉ POUR LA CONSTRUCTION D'UNE CENTRALE DE POMPAGE-TURBINAGE DANS UNE FOSSE, EN PARTICULIER DANS UNE MINE À CIEL OUVERT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2019   DE 102019118725**

(43) Veröffentlichungstag der Anmeldung:
**18.05.2022   Patentblatt 2022/20**

(73) Patentinhaber:
• **Schmidt-Böcking, Horst**
**65779 Kelkheim (DE)**
• **Luther, Gerhard**
**66119 Saarbrücken (DE)**

(72) Erfinder:
• **Schmidt-Böcking, Horst**
**65779 Kelkheim (DE)**
• **Luther, Gerhard**
**66119 Saarbrücken (DE)**

(74) Vertreter: **Blumbach · Zinngrebe Patentanwälte PartG mbB**
**Alexandrastraße 5**
**65187 Wiesbaden (DE)**

(56) Entgegenhaltungen:
CN-A- 108 643 140      DE-A1-102013 020 984
DE-U1-202017 002 559      JP-A- H1 037 840

**Beschreibung**

GEBIET DER ERFINDUNG

Die Erfindung betrifft die Errichtung eines Unterwasser-Pumpspeicherkraftwerks in einer trockenliegenden aber flutbaren Bodenvertiefung, insbesondere in einer aufgelassenen oder noch betriebenen Tagebaugrube. Die Erfindung eignet sich insbesondere zur Nachnutzung des Tagebaus Hambach oder anderer Braunkohlereviere und besitzt bereits bei Verwirklichung im Rheinischen Revier das Potential, die gesamte nach der Energiewende in Deutschland (und ggf. sogar in Europa) erforderliche Kurzzeitspeicherkapazität bereitzustellen. Ferner betrifft die Erfindung eine Errichtung und Teilinbetriebnahme parallel zur auslaufenden Nutzung, insbesondere des Braunkohleabbaus (bis 2038), so dass keine nennenswerte Zahl bisheriger Arbeitsplätze verloren geht.

HINTERGRUND DER ERFINDUNG

Die Energiewende erfordert Kurz- und Langzeitspeicher

Die "Energiewende" umfasst die nahezu vollständige Abdeckung der elektrischen Stromversorgung durch regenerative Energien (RE) und hier vor allem durch Wind und Photovoltaik (PV), wobei gleichzeitig der Stromeinsatz auch auf den Wärmebereich und den Verkehrsbereich ausgedehnt werden soll (Sektorkopplung). Wegen des durch Wetter und Astronomie bedingten ungleichmäßigen Dargebotes der RE, wobei sogar kurzzeitige regelrechte "Dunkelflauten" auftreten können, lässt sich die Energiewende nur mit dem Einsatz von Speichern durchführen. Im Gegensatz zu abschreckenden Kalkulationen, die ausschließlich von Kurzzeitspeichern (wie Pumpspeicherkraftwerken (PSKW)) ausgehen und dann vor einer "Energiewende in's Nichts" (/Sinn 2013/) warnen, lässt sich das Speicherproblem nur durch eine Kombination von Kurz- und Langzeitspeichern (in Form von P2G -Gasspeichern) bewältigen. Diese Kombination wurden mit dem "Zwei-Speichermodell" (e.g. /LuSchmB_2014/; /AKE2014F/, /Lu2016/, /Düren 2017/) modelliert. Es ergab sich, dass eine Kapazität des Kurzzeitspeichers von nur 0,20 bis 0,30 Volllasttage für Deutschland ausreichen wird (/Lu2016/), sofern man nicht extreme Kostensteigerungen unterstellt.

Hierbei wurde jedoch immer von einer Ausspeicherzeit um die 5 oder 6 Stunden, wie sie bisher typisch für PSKW ist, ausgegangen. Gelänge es, die partiellen spezifischen Kosten für das reine Speichervolumen deutlich zu verringern, könnte man auch über das Vorhalten größerer Volumina nachdenken, die zwar seltener zum Ausspeichen kommen und dann aber die Turbinen von bereits energetisch entleerten Kurzzeitspeichern weiter nutzen. Auf die entsprechenden Überlegungen zu den "Reserve-Speichern" in (/LuSchmB Bergei2/) und dort insbesondere im Kapitel: "3.3 Reserve-Tiefspeicher 1b: - Blindschächte für etwas längere Speicherzeiten" wird verwiesen.

Der derzeitige Stromverbrauch der Bundesrepublik Deutschland liegt bei ca. 600 [TWh/a], Wegen der Sektorkopplung gehen wir für die vollendete Energiewende -trotz aller Einsparbemühungen- von einer deutlichen Steigerung des Stromverbrauchs aus und legen unseren Berechnungen einen deutschen Jahresverbrauch von $Q\_a= 1000$ [TWh/a] zugrunde, was einem mittleren Tagesverbrauch von $Q\_d= 2,74$ [TWh/a] entspricht. Die mittlere Leistung liegt dann bei 114 GW.

Braunkohletagebau als Standort für PSKW

Insgesamt kann gesagt werden, dass es in Deutschland eine starke Forschungsaktivität im Bereich Untertage-PSKW mit Bezug auf den Steinkohlebergbau gibt, aber nur vereinzelte Publikationen zur Nachnutzung der Braunkohle-Tagebaue. Dies spiegelt sich beispielsweise auch in den Einträgen der Themenseite Unterflur-PSKW (http://www.upsw.de/index.php/de/startseite.html) wider.

Schon frühzeitig wurde aber auch das große Potential von aufgelassenen Flächen des Braunkohle-Tagebaues als Standort für Pumpspeicherkraftwerke erkannt. So beschreibt Siol (/Siol 1995/) in DE19513817B4 ein dadurch gekennzeichnetes Pumpspeicherwerk, "daß das untere und das obere Speicherbecken in einer bestehenden oder ausgeräumten Braunkohlelagerstätte angeordnet sind".

Der Stand der Technik bis 2012 wird umfassend in zwei Forschungsberichten des Forschungszentrum Jülich dargestellt. Im STE -Research Report 08/2011 (/Baufume e.a. 2011/), einer Kurzsynopse über "Unterflur-Pumpspeicher", ist das Kapitel III.2 den PSKW im Braunkohletagebau gewidmet. Es werden zwei grundsätzliche Konzepte unterschieden:

(1.) In dem Unterflur-PSKW Konzept nach (/Schreiber e.a. 2010/) können bereits während des Betriebes des Tagebaues die später benötigten Rohre, Hohlräume und Installationen auf der untersten Sohle errichtet und die Maschinenkomponenten bestückt werden. Danach erfolgt eine Überdeckung mit Abraummaterial und schließlich wird das Oberbecken als Restsee auf der Abdeckung gestaltet.

(2.) In dem Konzept "PSKW in einem Tagebau Restsee" nach /Schulz 2009/ werden zwei Teilseen durch eine Staumauer voneinander getrennt. Der im flacheren Bereich angeordnete Teilsee dient als Oberbecken; der wesentlich tiefer liegende Teilsee dient als Unterbecken, dessen Pegel soweit abgesenkt ist, dass sich eine möglichst große Höhendifferenz zum Obersee ergibt, und das übrigbleibende Restvolumen in den zunächst leeren Obersee gepumpt werden kann.

Im STE -Research Report 03/2012 /Stenzel e.a. 2011/, "Unkonventionelle Energiespeicher", werden die beiden Grundkonzepte in Kapitel IV 1.5 bzw. IV 1.6 weiter ausgeführt, Variationen und Projekte angegeben und insbesondere die Betriebseigenschaften untersucht.

Das darauffolgende Kapitel IV 1.7 dieses Berichtes ist dem Prinzip des Hohlkugelspeichers gewidmet, bei welchem Hohlkugeln von der Meeresoberfläche auf den Meeresgrund abgesenkt werden. Hierbei wird der mögliche Einsatz dieser Speicher im Meeresbereich behandelt und die "höffigen" Küstenbereiche durchmustert.

Eine neue Studie des Wuppertal Institutes /Thema 2019/ zeigt in einer einfachen Überschlagsrechnung für ein großangelegtes Pumpspeicherwerk in den heutigen Tagebauen Hambach, Garzweiler und Inden, dass dort ein signifikantes technisches Speicherpotenzial von -in ihrer Rechnung- bis zu 400 GWh bereitliegt; dies entspricht etwa der zehnfachen Kapazität aller derzeitigen deutschen PSKW zusammengenommen.

Die Vorgehensweise der Autoren besteht darin, dass ein großer und tiefer Tagebau als Unterbecken und ein kleinerer Tagebau als Oberbecken genutzt werden. Beim Energie-Einspeichern wird das Wasser des Unterbeckens bis auf einen kleinen Rest vollständig in das zunächst weitgehend entleerte Oberbecken hochgepumpt.

Diese konventionelle Idee wird auf den derzeit tiefsten und größten Braunkohle-Tagebau Hambach als Unterbecken und die benachbarten, miteinander hydraulisch zu verbindenden kleineren Tagebaue Garzweiler und Inden als Oberbecken angewendet. Zum Betrieb des PSKW wird vorausgesetzt, dass in jedem Betriebszustand eine minimale Höhendifferenz von 100 m eingehalten wird.

Bei einer Realisierung müsste man wohl kritisch einwenden, dass die betriebsbedingte abwechselnd nahezu vollständige Leerung der Becken einen maximal brutalen landschaftlichen Eingriff darstellt und das Gebot der Rekultivierung aufhebt. Der einst als vorübergehend genehmigte Anblick der "Tagebau-Löcher" würde unverändert fortbestehen; auch das bisher in das Tagebauloch zufließende Grundwasser müsste man weiterhin abpumpen.

Unterirdische und Untersee-PSKW

Das "Meerei- Prinzip": Das "Meerei- Prinzip", einen künstlich erstellten Hohlraum auf den Meeresboden zu verbringen und dort als Unterbecken eines PSKW mit dem Meer selbst als Oberbecken zu nutzen, wurde unabhängig voneinander und sich ergänzend von Alexander Slocum und Mitarbeiter /Slocum/ einerseits und von Schmidt-Böcking und Luther (/Meerei_1/ und /Meerei_2/ andererseits publiziert. Der "MeerEi"-Gedanke fand Resonanz in der Tagespresse /Küffner FAZ 2011.0401/ und wurde in Deutschland von einem Konsortium unter Federführung der Firma Hochtief als Projekt StEnSea (= Stored Energy in the Sea) aufgegriffen (/StEnSea/). Die Ergebnisse der Vorplanung wurde von Hochtief-Solutions AG in einem Vortrag auf der 7. Internationalen Speicherkonferenz, 7th IRES Conference 7-12. November 2012, präsentiert und in den Proceedings dieser Konferenz als ppt- Folien veröffentlicht /Garg e.a.2012/. Als Ergebnis wurde ein geplantes Pilotprojekt für ein "Meerei" mit den folgenden Daten vorgestellt:

- Hohlkugel mit innerem Durchmesser von ca. 30 [m]
- Wanddicke. ca.- 3 [m]
- Speichervolumen ca.: 12.000 [m3]
- Speicherkapazität von ca. 20 MWh bei einer Wassertiefe von 700 [m]
- Pumpturbine für ca. 5-6 [MW]; wenn wir die kleinere Leistungsangabe als Turbinenleistung interpretieren ergibt sich also eine Ausspeicherzeit von 4 [h]

Für diese Anlage wurden Konstruktions- Zielkosten ("Construction Target Costs") vorgelegt, die auf den folgenden Einheitspreisen beruhen:

- Betonkosten incl. Verschalung und Verstärkung ("reinforcement") = 225 [€/m3]; dies entspricht bei Bezug auf die installierte Leistung spezifischen Kosten von 413 [€/kW].
- Pump-Turbine und elektromechanisches Zubehör = 525 [€/kW]

Zusätzlich wurden erhebliche Kosten für die Installation der Hohlkugel auf dem Meeresboden einkalkuliert, die sich bei Normierung auf die installierte Leistung auf 300 €/kW beliefen. Auch mit diesen Kosten wäre das Meerei mit anderen PSKW wettbewerbsfähig.

Wie man etwa beim Vergleich des inneren Durchmessers mit dem angegebenen Volumen sieht, handelt es sich bei den Angaben um grobe und auf mehreren Ebenen "runde" Rechenwerte, die mathematisch nicht immer streng zueinander passen. Im Folgenden werden wir uns auf die mitgeteilten Daten unter dem Namen "die StEnSea -Kugel" öfters beziehen und dabei aber - um ein Nachrechnen zu erleichtern - alle vom Volumen abhängige Werte auf den angegebenen Innendurchmesser von 30 m beziehen, was einem "idealen" Volumen von 14.100 [m3] entspricht.

Weiterhin wurde aufgezeigt, dass das Entwicklungsziel in der Ausbringung und Zusammenschaltung von sehr vielen Einzelkugeln zu einem großen PSKW besteht. Als ein mögliches Einsatzgebiet wurde dabei die "Norwegische Rinne" angegeben, siehe z.B. /BMWi2017/.

In /LuSchmB 2011+13 -Bergei1+2/ wird ferner eine Anwendung innerhalb eines zu Speicherzwecken errichteten Bergwerkes beschrieben, bei dem tiefliegende Blindschächte als Speicherbehälter, groß dimensionierte Schächte als Druckleitungen mit Zwischenstationen für die Pumpturbinen und ein Oberflächengewässer als Oberbecken verwendet werden. In /LuSchmB 2014 - langeSaar/ wird ein Verfahren vorgestellt, mit dem Bundes-Wasserstraßen durch einen proaktiven Betrieb ihrer Stauhaltungen ihre Kapazität als Oberbecken eines großen PSKW mit unterirdischen bergwerklichen Speichern erheblich steigern können.

In einem Report der Ruhr Uni /Ruhr Uni 2013/ behandeln mehrere Einzelbeiträge den baulichen Entwurf und die Optimierung von Betonkonstruktionen als Unterbecken am Boden eines in einem ehemaligen Braunkohletagebau errichteten Restsee, welcher als Oberbecken dient. Alle Entwürfe sind dadurch gekennzeichnet, dass sie einen zentralen Turm für Be- und Entlüftung, Versorgung und Zugang zu einer darunterliegenden Kaverne besitzen. Das Wasser aus dem ausgedehnten Speicherbauwerk fließt in dieser Kaverne zusammen und wird dort den Pumpturbinen zugeführt.

Als Unterbecken werden unterschiedliche Konstruktionen untersucht. Sanio und Mark untersuchen ein kuppelförmiges flaches Speicher-Unterbecken, das durch Querwände oder Pfeiler abgestützt ist und durch Pfähle im Unterboden verankert wird. (siehe Seite 151 aus /Sanio-Mark2013/)

Perau und Korn /Perau-Korn 2013/ untersuchen etwas allgemeinere geotechnische Fragestellungen beim Bau von Unterflur-Pumpspeicherwerken. Sie wollen resultierende Auftriebskräfte der Speicherkonstruktion durch Überschüttung der gesamten Speicherkonstruktion mit Sedimenten verhindern. (siehe Seite 141 und Seite 144 von /Perau-Korn 2013/)

Das Dokument DE102013020984A1 betrifft ein Pumpspeicherwerk bestehend aus einem Oberbecken als See oder Meer und einem am Seegrund fixierten Unterbecken. Das Unterbecken besteht aus kommunizierenden Stahlröhren als Stahlhohlkörpersystem.

## Aufgabe der Erfindung

Der Erfindung liegt die Aufgabe zugrunde, die Errichtung eines Groß-Pumpspeicherkraftwerks zu ermöglichen, um die nötige Kurzzeitspeicherkapazität für die Energiewende bereitzustellen und dabei trotz gewaltiger Speicherkapazität den ökologischen Eingriff möglichst gering zu halten. Die Konstruktion des Pumpspeicherkraftwerks soll möglichst einfach, flexibel und kostengünstig erfolgen können und das errichtete Pumpspeicherkraftwerk möglichst fehlerfreundlich und sicher sein. Ein Aspekt der Aufgabe ist es, eine Erweiterbarkeit der Speicherkapazität zu ermöglichen. Ein weiterer Aspekt der Aufgabe ist es, das Pumpspeicherkraftwerk bereits während der Errichtung testen oder sogar nutzen zu können.

## ALLGEMEINE BESCHREIBUNG DER ERFINDUNG

Die Erfindung betrifft ein Verfahren zur Errichtung eines Unterwasser-Pumpspeicherkraftwerks in einer Bodenvertiefung, insbesondere in einer aufgelassenen oder noch betriebenen Tagebaugrube. Erfindungsgemäß handelt es sich bei der trockenliegenden Bodenvertiefung um eine Vertiefung, die also zumindest nicht wesentlich mit Wasser gefüllt ist, aber grundsätzlich derart geflutet werden kann, dass darin ein künstlicher See gebildet werden kann.

Bei dem erfindungsgemäßen Verfahren werden eine Vielzahl von Druckbehältern bereitgestellt oder vor Ort gebaut, wobei es sich insbesondere um eine große Vielzahl gleichartiger Druckbehälter handelt, die aus Kostengründen idealerweise in Massenproduktion gefertigt sind oder werden. Der Bau bzw. Massenproduktion der vielen Druckbehälter erfolgt insbesondere in der trockenliegenden Bodenvertiefung, so dass diese vorzugsweise direkt unten in der Bodenvertiefung zur Verfügung stehen.

Im Fall einer Tagebaugrube können die Druckbehälter z.B. auf einer unteren Sohle der Tagebaugrube oder auch auf der untersten Sohle gebaut werden.

Die vielen Druckbehälter werden erfindungsgemäß in der trockenliegenden Bodenvertiefung nebeneinander und/oder übereinander angeordnet, um dort ein unteres Reservoir für das zu errichtende Unterwasser- Pumpspeicherkraftwerk zu bilden. Im Fall einer Tagebaugrube werden die Druckbehälter vorzugsweise auf einer unteren Sohle oder auch auf der untersten Sohle nebeneinander und/oder übereinander angeordnet. Die im Trockenen erfolgende Anordnung der Druckbehälter kann dabei derart erfolgen, dass die Druckbehälter nebeneinander, insbesondere unmittelbar aneinander angrenzend, angeordnet werden, d.h., dass die Druckbehälter z.B. entlang einer Richtung in Reihe nebeneinander angeordnet werden oder auch entlang zweier Richtungen in einem Raster oder einer Matrix nebeneinander angeordnet werden. Außerdem können die Druckbehälter auch übereinander angeordnet werden, beispielsweise in mehreren Schichten, die wiederum insbesondere unmittelbar aneinander angrenzen können, so dass die Druckbehälter sich gegenseitig berühren oder aneinander abstützen.

Erfindungsgemäß sind die Druckbehälter derart ausgebildet, werden derart gebaut werden oder werden derart bearbeitet, dass diese jeweils zumindest eine Durchflussöffnung zum Einlassen und/oder Auslassen von Wasser aufweisen, damit sie als unteres Reservoir für das zu errichtende Unterwasser- Pumpspeicherkraftwerk dienen können. Besonders bevorzugt sind die Druckbehälter außerdem derart ausgebildet, werden derart gebaut oder ggf. bearbeitet, dass sie ausreichend druckfest sind, um formstabil gegen einen hydrostatischen Wasserdruck leergepumpt werden können, der von außen auf ihnen lastet, wenn die Bodenvertiefung mit Wasser geflutet ist, d.h. darin ein künstlicher See gebildet ist, der die Druckbehälter überdeckt.

Eine Anordnung der Druckbehälter in der Bodenvertiefung solange diese noch trocken liegt hat zahlreiche Vorteile. So können die Druckbehälter beispielsweise direkt an der Position gebaut werden, an der sie angeordnet sein sollen, d.h. die Verfahrensschritte des Bauens und des Anordnens können einen gemeinsamen Schritt bilden. Aber auch, wenn die Druckbehälter zunächst an anderer Stelle gebaut werden, kann die nachfolgende Anordnung sehr zielgenau erfolgen, solange die Bodenvertiefung noch trocken liegt. Darüber können für Bau, Bearbeitung und/oder Anordnung der Druckbehälter in der trockenliegenden Vertiefung im Trockenen arbeitende Maschinen zum Einsatz kommen, insbesondere Tagebaumaschinen, die ggf. ohnehin bereits vor Ort sind. Die Anordnung im Trockenen ermöglicht auch die komfortable Verknüpfung oder Ausstattung der Druckbehälter mit Verbindungsrohren, Turbinen, Pumpen, Pumpturbinen, Schächten, oder weiteren baulichen Elementen. Zu bemerken ist auch, dass im Trockenen größere und kompaktere Anordnungen von Druckbehältern errichtet werden können, als diese nachträglich versenkbar wären. Nicht zuletzt ist die Anordnung von Druckbehältern in der noch trockenliegenden Bodenvertiefung besonders kostengünstig und flexibel.

Der Einsatz einer Vielzahl von Druckbehältern, insbesondere einer großen Vielzahl, hat unter anderem den Vorteil, dass die Druckbehälter in Massenproduktion gebaut werden können, was wiederum Kosten spart und es erlaubt, Druckbehälter mit möglichst schlichter oder geometrisch einfacher Form zu verwenden, die wenig fehleranfällig sind und im Hinblick auf ihre Statik sehr zuverlässig sind. Indem sich das untere Reservoir des zu errichtenden Pumpspeicherkraftwerks aus einer Vielzahl von Druckbehältern zusammensetzt, wird auch ein hohes Maß an Sicherheit erreicht, weil im Fall eines Defekts nur einzelne Druckbehälter betroffen sind, welche dann vorübergehend oder dauerhaft nicht mehr zum unteren Reservoir beitragen. Zugleich erlaubt der Einsatz vieler, insbesondere gleichartiger, Druckbehälter ein hohes Maß an konstruktiver Flexibilität und nachträglicher Erweiterbarkeit.

Die Vielzahl von Druckbehältern wird vorzugsweise mit einer oder mehreren Turbinen, Pumpen und/oder Pumpturbinen ausgestattet, so dass, wenn die trockenliegende Bodenvertiefung mit Wasser geflutet ist, das Unterwasser-Pumpspeicherkraftwerk derart betrieben werden kann, dass elektrische Energie gewonnen wird, wenn Wasser aus der gefluteten Bodenvertiefung in die Druckbehälter eingelassen wird, und elektrische Energie gespeichert wird, wenn Wasser aus den Druckbehältern in die geflutete Bodenvertiefung ausgelassen wird. Es kann dabei vorgesehen sein, dass die Druckbehälter mit einer oder mehreren Turbinen, Pumpen und/oder Pumpturbinen ausgestattet werden, nachdem diese bereits angeordnet sind. Andererseits kann die Ausstattung mit Turbinen, Pumpen und/oder Pumpturbinen auch bereits an einem Druckbehälter selbst erfolgen, bevor dieser an seiner gewünschten Position angeordnet wird.

Hinsichtlich der Ausstattung der Druckbehälter mit Turbinen, Pumpen und/oder Pumpturbinen stehen verschiedene Möglichkeiten zur Verfügung.

Eine Möglichkeit ist es, dass von der Vielzahl von Druckbehältern einzelne Druckbehälter als eigenständige Druckbehälter eingerichtet werden, indem diese Druckbehälter jeweils über ihre zumindest eine Durchflussöffnung mit einer eigenen Turbine, Pumpe und/oder Pumpturbine ausgestattet werden. Auch im Fall mehrerer Durchflussöffnungen kann ein Druckbehälter als eigenständiger Druckbehälter eingerichtet werden, z.B. indem eine Durchflussöffnung mit einer Turbine verbunden wird und eine andere Durchflussöffnung mit einer Pumpe. Die Einrichtung eines Druckbehälters als eigenständigen Druckbehälter wird im Rahmen dieser Offenbarung auch als "autarker Fall" bezeichnet. Es kann dabei z.B. vorgesehen sein, dass zumindest einer der Druckbehälter, zumindest einige der Druckbehälter, die Mehrzahl der Druckbehälter oder auch alle Druckbehälter als eigenständige Druckbehälter eingerichtet werden.

Gemäß einer anderen Möglichkeit, die zusätzlich oder alternativ in Betracht kommt, können von der Vielzahl von Druckbehältern mehrere als Druckbehälter-Gruppe eingerichtet werden indem diese Druckbehälter über zumindest eine Druckleitung oder mehrere Druckleitungen zwischen jeweiligen Durchflussöffnungen miteinander verbunden werden und mit einer gemeinsamen Turbine, Pumpe und/oder Pumpturbine ausgestattet werden. Bei den mehreren zu einer Gruppe zusammengeschalteten Druckbehältern kann es sich z.B. um zwei oder mehrere benachbarte, insb. unmittelbar nebeneinander und/oder übereinander angeordnete, Druckbehälter handeln. Die Einrichtung mehrerer Druckbehälter als Gruppe wird im Rahmen dieser Offenbarung auch als "oligotarker Fall" bzw. "zentraler Fall" bezeichnet, wie weiter unten noch näher ausgeführt wird. Es kann insbesondere vorteilhaft sein, mehrere Druckbehälter-Gruppen einzurichten, z.B. indem jeweils einige benachbarte Druckbehälter zu einer Gruppe verbunden werden.

Wie bereits ausgeführt macht die Erfindung von einer Vielzahl, insbesondere von einer großen Vielzahl, von Druckbehältern Gebrauch. Grundsätzlich können z.B. zumindest 4 oder zumindest 10 Druckbehälter vorgesehen sein. Insbesondere umfasst die Vielzahl von Druckbehältern aber zumindest 100 Druckbehälter, vorzugsweise mindestens 1000 Druckbehälter, noch bevorzugter mindestens 10000 Druckbehälter.

Aufgrund der Vielzahl von Druckbehältern, die zu dem Gesamtvolumen des unteren Reservoirs beitragen, können die Druckbehälter insbesondere verhältnismäßig kleine Volumina aufweisen. Demnach ist es vorgesehen, dass die oder zumindest ein Druckbehälter ein Volumen von weniger als 600.000 Kubikmeter aufweist, vorzugweise von weniger als 100.000 Kubikmeter aufweist, besonders bevorzugt von weniger als 15.000 Kubikmeter aufweist. Andererseits sollten die Druckbehälter auch nicht zu klein sein. Denn es ist insbesondere bei kugelförmigen Druckbehältern vorteilhaft, wenn Engpässe von Freiräumen zwischen den Druckbehältern nicht zu klein werden. Ein Grund ist, dass dann Turbinen, Pumpen und/oder Pumpturbinen besser in den Freiräumen angeordnet, betrieben bzw. gewartet werden können, insbesondere weil die Freiräume zwischen den Druckbehältern für Wasserströme dienen können oder Pumpturbinen im Revisionsfall gut zugänglich bleiben. Ein weiterer Grund ist es, ein günstiges Kosten-Nutzen-Verhältnis von Pumpturbinen sicherzustellen. Vorgesehen ist demnach insbesondere ein Volumen von mindestens 1000 Kubikmeter, vorzugweise von mindestens als 5000 Kubikmeter, besonders bevorzugt von mindestens 10.000 Kubikmeter aufweisen. Insgesamt kann es demnach z.B. sinnvoll sein, dass einer, einige oder alle der Druckbehälter ein Volumen zwischen 5000 und 600.000 Kubikmeter, vorzugsweise zwischen 5000 und 100.000 Kubikmeter und besonders bevorzugt zwischen 5000 und 15.000 Kubikmeter aufweisen.

Um die Druckbehälter geeignet nebeneinander und/oder übereinander anordnen zu können, kommen viele verschiedenen Formen in Betracht. So können beispielsweise rohrförmige oder torusförmige Druckbehälter vorgesehen sein. Aus statischen Gründen eignen sich besonders Druckbehälter mit einer kugelähnlichen Form. Demnach kann vorgesehen sein, dass die oder zumindest einige der Druckbehälter eine Form aufweisen, welche eine kleinstmögliche (hypothetische) Hüllkugel volumenmäßig zu mindestens 25 Prozent, vorzugsweise mindestens 50 Prozent, besonders bevorzugt mindestens 75 Prozent, und ganz besonders bevorzugt mindestens 90 Prozent ausfüllt. Mit der Form der Druckbehälter ist hierbei insbesondere die Außenform der die Druckfestigkeit gewährleistenden Bestandteile der Druckbehälter gemeint. Konkret können die oder zumindest einige der Druckbehälter insbesondere als druckfeste Kugel, Ei-Form, Ellipsoid oder Polyeder ausgebildet sein.

Druckbehälter mit kugelähnlicher oder kugelförmiger Geometrie sind besonders vorteilhaft, weil diese durch den Druck von außen stabilisert werden. Selbst wenn z.B. bereits Risse vorhanden sein sollten, bleiben die Druckbehälter häufig funktionsfähig, weil solche Risse durch den Druck von außen zusammengedrückt werden. Dies kann zu einer sehr langen Lebensdauer der Druckbehälter führen, welche z.B. über 100 oder über 1000 Jahre betragen kann. Weiterhin können die Druckbehälter z.B. durch einem Beton ohne Eisenarmierung hergestellt sein. Durch Verwendung eines Betons z.B. für Off-Shore-Montage, welcher ohne Eisenarmierung auskommt, erfolgt keine Rostbildung, was genannte die lange Lebensdauer ebenfalls begünstigt. Durch eine Lebensdauer von über 100 oder über 1000 Jahren sind sehr lange Abschreibungszeiten für die Betonkugeln möglich und damit eine Investition in die zukünftige Energieversorgung von der viele Generationen profitieren. Die Erfindung zeichnet sich daher insbesondere durch eine große Nachhaltigkeit aus.

Wie weiter unten noch näher ausgeführt ist, kann die Wandstärke der Druckbehälter anhand verschiedener Faktoren abgeschätzt werden. In einem günstigen Fall weisen die Druckbehälter aber jeweils eine Wandstärke zwischen 5% und 15%, vorzugsweise zwischen 7,5% und 12,5%, z.B. von 10% des äquivalenten Kugeldurchmessers des Speichervolumens auf. Hierdurch kann in vorteilhafter Weise auch der Auftrieb des leeren Druckbehälters kompensiert werden.

Wie bereits ausgeführt sieht das erfindungsgemäße Verfahren vor, dass die Druckbehälter nebeneinander und/oder übereinander in der trockenliegenden Bodenvertiefung, also z.B. auf einer unteren Sohle der Tagebraugrube, positioniert werden. Dabei werden die Druckbehälter vorzugsweise regelmäßig nebeneinander und/oder übereinander angeordnet.

Eine bevorzugte Möglichkeit ist es, dass die Vielzahl von Druckbehältern in der trockenliegenden Bodenvertiefung, derart angeordnet werden, dass eine unmittelbar auf dem Untergrund liegende untere Druckbehälter-Schicht mit regelmäßiger Anordnung von Druckbehältern gebildet wird, welche sich vorzugsweise als Unterlage für eine darüber liegende zweite Druckbehälter-Schicht mit regelmäßiger Anordnung eignet, derart, dass die Druckbehälter der zweiten Druckbehälter-Schicht in Vertiefungen der darunter liegenden unteren Druckbehälter-Schicht stabil angeordnet werden können. Damit ist insbesondere gemeint, dass Druckbehälter einer zweiten Schicht nicht ohne Weiteres seitlich abgleiten oder abrutschen können.

Eine untere Schicht von Druckbehältern umfasst vorzugsweise mindestens 100, besonders bevorzugt mindestens 500, noch bevorzugter mindestens 1000 Druckbehälter in regelmäßiger Anordnung. Hieran zeigt sich wiederum der Vorteil, dass die Druckbehälter bereits im trockenliegenden Zustand der Vertiefung angeordnet werden, denn es wäre weitaus schwieriger, eine regelmäßige Anordnung von Druckbehältern in Form einer unteren Schicht durch nachträgliches Absenken in einem bereits bestehenden See zu schaffen. Dies liegt auch darin begründet, dass im trocken-

**EP 3 997 329 B1**

liegenden Zustand der Untergrund zuvor leichter geebnet werden kann, wie weiter unten noch ausgeführt wird. In diesem Zusammenhang wird jedoch auf die weiter unten noch näher beschriebene besondere Verfahrensweise des "seegestützen Ausbringens" verwiesen.

Vorzugsweise wird, insbesondere solange die Bodenvertiefung noch trockenliegt, auf der auf dem Untergrund liegenden unteren Druckbehälter-Schicht eine zweite Druckbehälter-Schicht angeordnet und darauf besonders bevorzugt eine dritte Druckbehälter-Schicht und darauf gegebenenfalls noch weitere Druckbehälter-Schichten, wobei sich die Druckbehälter-Schichten - wie vorstehend beschrieben - wiederum jeweils vorzugsweise als Unterlage mit Vertiefungen für eine jeweils darüber liegende Druckbehälter-Schicht eignen.

Bei den meisten Formen, die für die Druckbehälter gewählt werden, insbesondere bei kugelähnlichen oder kugelförmigen Druckbehältern, verbleiben bei der Anordnung der Druckbehälter Freiräume zwischen diesen. In einer bevorzugten Verfahrensvariante der Erfindung werden die vielen Druckbehältern in der trockenliegenden Bodenvertiefung derart nebeneinander und/oder übereinander angeordnet, insbesondere derart als untere, zweite und dritte Druckbehälter-Schicht angeordnet, dass zwischen den Druckbehältern Freiräume verbleiben, die sich von oben, vorzugsweise geradlinig von oben, bis zum Untergrund erstrecken, insbesondere durch alle Schichten hindurch, und vorzugsweise derart, dass die Freiräume in einer durch die Anordnung der Druckbehälter definierten Regelmäßigkeit auftreten. Derartige Freiräume können in vorteilhafter Weise wasserführende Zugänge zu den Durchflussöffnungen bzw. Turbinen, Pumpen und/oder Pumpturbinen bilden.

Insbesondere in diesem Fall, aber auch unabhängig davon, können einer oder mehrere zwischen Druckbehältern verbleibende Freiräume als durchgängig nach oben, gegebenenfalls nach oben herausragende, Schächte ausgebaut werden.

Wie weiter unten noch näher anhand von Beispielen besprochen und illustriert wird, kann die Vielzahl von Druckbehältern insbesondere gemäß der Struktur einer dichtesten, insbesondere hexagonal dichtesten, Kugelpackung angeordnet werden, vorzugsweise indem Druckbehälter der unteren und gegebenenfalls der zweiten Druckbehälter-Schicht gemäß der Struktur einer dichtesten Kugelpackung angeordnet werden und gegebenenfalls die Druckbehälter der dritten Druckbehälter-Schicht gemäß der Struktur einer hexagonal dichtesten Kugelpackung (und somit wiederum deckungsgleich zur unteren Schicht) angeordnet werden.

Wenn die Druckbehälter in Schichten, z.B. in dichtester Kugelpackung, angeordnet werden, aber auch unabhängig davon, kann - bezugnehmend auf den "autarken" Fall - ein als eigenständiger Druckbehälter einzurichtender oder eingerichteter Druckbehälter z.B. derart angeordnet oder bearbeitet werden, dass eine Durchflussöffnung zum Einlassen und/oder Auslassen von Wasser in den Druckbehälter unten oder seitlich unten an dem Druckbehälter angeordnet ist, vorzugsweise derart, dass die Durchflussöffnung im Inneren des Druckbehälters am tiefsten Punkt angelangt.

Alternativ oder zusätzlich kann - bezugnehmend auf den "oligotarken" oder "zentralen" Fall - vorgesehen sein, dass mehrere als Druckbehälter-Gruppe einzurichtende oder eingerichtete Druckbehälter derart angeordnet oder bearbeitet werden, dass zumindest eine Durchflussöffnung eines oder vorzugsweise jedes Druckbehälters der Druckbehälter-Gruppe unten oder seitlich unten an dem Druckbehälter angeordnet ist, insbesondere derart, dass die Durchflussöffnung im Inneren des Druckbehälters am tiefsten Punkt angelangt und wobei vorzugsweise zwei übereinander angeordnete Druckbehälter über Druckleitungen zwischen einer unten oder seitlich unten angeordneten Durchflussöffnung des weiter oben angeordneten Druckbehälters und einer Durchflussöffnung des weiter unten angeordneten Druckbehälters miteinander verbunden werden.

Entsprechend der Überlegung, dass Freiräume zwischen den Druckbehältern als wasserführende Zugänge dienen können, kann es - bezugnehmend auf den "autarken" Fall - zweckmäßig sein, dass eine eigene Turbine, Pumpe und/oder Pumpturbine eines eigenständigen Druckbehälters mit einer Durchflussöffnung des Druckbehälters derart verbunden wird und/oder in einem zwischen Druckbehältern gebildeten Freiraum derart angeordnet wird, dass, wenn die trockenliegende Bodenvertiefung mit Wasser geflutet ist, Wasser das in den Druckbehälter eingelassen wird, vorzugsweise von oben, besonders bevorzugt geradlinig von oben, über den Freiraum bezogen wird und/oder Wasser das aus dem Druckbehälter ausgelassen wird, vorzugsweise nach oben, besonders bevorzugt geradlinig nach oben, über den Freiraum abgegeben wird.

Alternativ oder zusätzlich kann - bezugnehmend auf den "oligotarken" oder "zentralen" Fall - auch vorgesehen sein, dass eine gemeinsame Turbine, Pumpe und/oder Pumpturbine einer Druckbehälter-Gruppe mit einer Durchflussöffnung eines Druckbehälters oder mit einer die Druckbehälter verbindenden Druckleitung derart verbunden wird und/oder in einem zwischen Druckbehältern gebildeten Freiraum derart angeordnet wird, dass, wenn die trockenliegende Bodenvertiefung mit Wasser geflutet ist, Wasser das in die Druckbehälter-Gruppe eingelassen wird, vorzugsweise von oben, besonders bevorzugt geradlinig von oben, über den Freiraum bezogen wird und/oder Wasser das aus der Druckbehälter-Gruppe ausgelassen wird, vorzugsweise nach oben, besonders bevorzugt geradlinig nach oben, über den Freiraum abgegeben wird, wobei die gemeinsame Turbine, Pumpe und/oder Pumpturbine vorzugsweise auf dem Untergrund oder vertieft im Untergrund angeordnet wird.

Hinsichtlich der Anordnung der Druckbehälter kann es günstig sein, wenn zumindest einige der Druckbehälter, insbesondere die Druckbehälter der unteren Druckbehälter-Schicht, in der trockenliegenden Bodenvertiefung, z.B. auf einer unteren Sohle der Tagebraugrube, derart angeordnet werden, dass benachbarte Druckbehälter sich jeweils seitlich aneinander abstützen und/oder randständige Druckbehälter sich vorzugsweise seitlich an einer Wand oder einem Teil der trockenliegenden Bodenvertiefung abstützen.

Um eine seitliche Abstützung für randständige Druckbehälter zu schaffen können in der trockenliegenden Bodenvertiefung, insbesondere der Tagebaugrube, Wände und/oder eine von Wänden begrenzte Rinne hergestellt werden, so dass sich Druckbehälter, insbesondere solche der unteren Schicht, seitlich daran abstützen können. Hierbei kann man sich wiederum zunutze machen, dass die Bodenvertiefung trocken liegt, d.h. die Herstellung von Stützwänden kann mit normalen Baumaschinen erfolgen, oder, im Falle einer Tagebaugrube, auch mit bereits vor Ort vorhandenen Tagebaumaschinen. Vorzugsweise werden Stützwände und/oder eine Rinne in der Bodenvertiefung hergestellt, bevor die Druckbehälter darin angeordnet werden. Im gleichen Zuge kann im Übrigen auch der Untergrund für die Druckbehälter geebnet werden.

Es ist vorteilhaft, wenn die Druckbehälter ohne erhebliche Beschwerung oder Verankerung, oder sogar gänzlich ohne Beschwerung oder Verankerung, unten in der Bodenvertiefung verbleiben, wenn diese mit Wasser geflutet wird. Daher weisen zumindest einige der Druckbehälter eine Masse auf, die größer oder zumindest nicht wesentlich kleiner ist, als die Masse des von dem Druckbehälter verdrängten Wassers, wenn die trockenliegende Bodenvertiefung mit Wasser geflutet ist.

Unabhängig davon kann vorgesehen sein, dass zumindest einige der Druckbehälter, insbesondere die Druckbehälter einer unteren Druckbehälter-Schicht, am Untergrund fixiert oder verankert werden und/oder dass zumindest einige der Druckbehälter, insbesondere die Druckbehälter einer oberen Druckbehälter-Schicht, mit Ballast, insbesondere mit Aushub aus der Bodenvertiefung, beschwert werden. Diese Maßnahmen können einerseits dazu dienen, dass die Druckbehälter am Untergrund bleiben, wenn die Bodenvertiefung mit Wasser geflutet wird, können aber auch dann vorgesehen sein, wenn die Druckbehälter bereits aufgrund ihrer Masse am Untergrund verbleiben würden, z.B. um die Druckbehälter gegen Verrutschen zu stabilisieren.

Wie bereits angesprochen wurde verbleiben zwischen den nebeneinander und/oder übereinander angeordneten Druckbehältern in der Regel Freiräume, insbesondere wenn die Druckbehälter kugelähnlich oder kugelförmig ausgebildet sind. Während solche Freiräume - wie oben beschrieben - als Verbindung zwischen dem späteren künstlichen See und den Turbinen, Pumpen und/oder Pumpturbinen dienen können, sind nicht unbedingt sämtliche Freiräume dafür nötig oder geeignet.

Demnach kann vorgesehen sein, dass zwischen Druckbehältern verbleibende Freiräume, welche nicht als Zugang zu Turbinen, Pumpen und/oder Pumpturbinen dienen, mit Aushub oder Baustoff verfüllt oder ausgegossen werden (z.B. Sand, Steine, Geröll und/oder Zement). Diese kann z.B. im Hinblick auf eine Stabilisierung oder auch zur Beeinflussung des Strömungsverhaltens des Wassers erfolgen.

Eine Beschwerung der Druckbehälter und/oder eine Verfüllung von Freiräumen zwischen den Druckbehältern sollte vorzugsweise so erfolgen, dass das Beschwerungsmaterial bzw. Verfüllungsmaterial ortsfest bleibt und nicht etwa durch strömendes Wasser fortgespült wird, das Wasser verunreinigt oder Turbinen, Pumpen / Pumpturbinen beschädigt. Hierzu kann das Material z.B. mit Zement befestigt werden.

In einer besonderen Ausführungsform der Erfindung können die Vielzahl von Druckbehältern auch als eine Druckbehälter-Gesamtheit eingerichtet werden, indem diese Druckbehälter über jeweilige Durchflussöffnungen miteinander kommunizieren und mit einer gemeinsamen Verschalung nach außen abgeschlossen werden, wobei die gemeinsame Verschalung zumindest eine Durchflussöffnung nach außen aufweist, um die Druckbehälter-Gesamtheit mit einer gemeinsamen Turbine, Pumpe und/oder Pumpturbine ausstatten zu können.

Wie weiter unten noch im Detail ausgeführt wird, kann es sich lohnen, die Bodenvertiefung, insbesondere, wenn diese bereits als Tagebaugrube existiert, zunächst weiter zu verbreitern und/oder zu vertiefen, vorzugsweise mit bereits vor Ort vorhandenen Tagebaumaschinen. Insbesondere kann die Bodenvertiefung derart weiter vertieft und/oder verbreitert werden, dass eine Tiefe (Teufe) von über 100 Metern, vorzugsweise über 300 Metern, noch bevorzugter über 400 Metern, nochmals bevorzugter über 500 Metern, besonders bevorzugt über 700 Meter und ggf. sogar von über 1000 Metern erreicht wird.

Auch wenn die Bodenvertiefung nicht bereits als natürliche Vertiefung oder als Tagebaugrube existiert kann es sich lohnen diese auf der "grünen Wiese" oder auf dem "gelben Wüstensand" zunächst zu errichten. Demnach kann vorgesehen sein, dass die trockenliegende Bodenvertiefung für die Errichtung des Unterwasser-Pumpspeicherkraftwerks zunächst geschaffen wird, insbesondere derart, dass eine Tiefe (Teufe) von über 100 Metern, insbesondere über 200 Metern, vorzugsweise über 300 Metern, noch bevorzugter über 400 Metern, nochmals bevorzugter über 500 Metern, besonders bevorzugt über 700 Meter und ggf. sogar von über 1000 Metern erreicht wird.

In einer bevorzugten Verfahrensvariante kann in der der trockenliegende Bodenvertiefung unter einem als Untergrund für die Anordnung der Druckbehälter geplanten Boden ein Hohlraum, z.B. ein Schacht oder ein Tunnel, zur Installation technischer Einrichtungen wie Kabeln, Druckleitungen, Turbinen, Pumpen und/oder Pumpturbinen geschaffen werden. Dies wird weiter unten noch näher beschrieben und illustriert.

Alternativ oder zusätzlich kann aber auch vorgesehen sein, dass in der der trockenliegenden Bodenvertiefung unter einem als Untergrund für die Anordnung der Druckbehälter geplanten Boden, gegebenenfalls nochmals unter einem - wie vorstehend beschriebenen - Hohlraum zur Installation technischer Einrichtungen, ein begehbarer und/oder befahrbarer Hohlraum, z.B. ein Schacht oder ein Tunnel, insbesondere zur Versorgung und/oder Wartung technischer Einrichtungen geschaffen wird. Ein solcher begehbarer und/oder befahrbare Hohlraum kann vorzugsweise mit einem äußeren Zugang verbunden werden, welcher insbesondere in einem Hang oder an einem Hang der Bodenvertiefung geschaffen wird.

Das im Rahmen der vorliegenden Erfindung geschaffene untere Reservoir kann insbesondere ohne Verbindungen zur Außenluft betrieben werden. Insbesondere ist demnach eine Errichtung entsprechender Verbindungen, z.B. von Türmen bis zur Oberfläche des später in der Vertiefung geplanten künstlichen Sees, nicht erforderlich. Dies hat insbesondere den Vorteil, dass größere Tiefen (Teufen) der Bodenvertiefung in Betracht kommen. Luft in den Hohlräumen hat außerdem den Nachteil, dass sie die Effizienz der Energiespeicherung reduziert, da sie bei Druckerhöhung in den Hohlräumen nicht kondensiert, sondern einen Gegendruck aufbaut und sich dabei erwärmt. Diese Wärmeenergie kann ein großer Verlustfaktor bei der hier vorgeschlagenen Art der Energiespeicherung sein.

Die oder zumindest einige der Druckbehälter sind demnach vorzugsweise derart ausgebildet, werden derart angeordnet, derart mit einer oder mehreren Turbinen, Pumpen und/oder Pumpturbinen ausgestattet und/oder derart über Druckleitungen zwischen jeweiligen Durchflussöffnungen miteinander verbunden, dass beim Auslassen von Wasser aus dem Druckbehälter keine Luft in den Druckbehälter nachströmt, sondern vorzugsweise ein nur durch den Partialdruck des Wasserdampfes begrenztes Vakuum in dem Druckbehälter entsteht.

Ferner kann vorgesehen sein, dass beim Einlassen von Wasser in den Druckbehälter, der Druckbehälter nicht vollständig mit Wasser gefüllt wird, sondern vorzugsweise ein gewisses Restvolumen mit einem insbesondere nur durch den Partialdruck des Wasserdampfes begrenztem Vakuum verbleibt. Ein solches Restvolumen kann sehr klein sein, es kann z.B. ein Restvolumen von weniger als 100 Kubikmeter, vorzugsweise von weniger als 10 Kubikmeter oder sogar ein Restvolumen von weniger als 1 Kubikmeter vorgesehen sein.

Wenn die Druckbehälter in mehreren Schichten angeordnet werden, kann sich möglicherweise ein "seegestütztes Ausbringen" der Druckbehälter anbieten. Insbesondere kann demnach vorgesehen sein, dass die Vielzahl von Druckbehältern in der trockenliegenden Bodenvertiefung z.B. auf einer unteren Sohle der Tagebraugrube, derart schichtweise angeordnet werden, dass in der trockenliegenden Bodenvertiefung zunächst eine unmittelbar auf dem Untergrund liegende untere Druckbehälter-Schicht von Druckbehältern gebildet wird und danach die Bodenvertiefung soweit mit Wasser gefüllt wird, dass Druckbehälter für eine zweite Druckbehälter-Schicht schwimmend an jeweils vorgesehene Positionen oberhalb der unteren Druckbehälter-Schicht befördert werden können, und die zweite Druckbehälter-Schicht gebildet wird indem die Druckbehälter für diese Schicht schwimmend an die jeweils vorgesehene Positionen befördert werden, z.B. indem diese schwimmfähig gemacht werden, und auf die untere Druckbehälter-Schicht abgesenkt werden, z.B. indem diese tauchfähig oder wieder tauchfähig gemacht werden.

In analoger Weise kann die Bodenvertiefung danach selbstverständlich schrittweise weiter soweit mit Wasser gefüllt werden, dass Druckbehälter für eine dritte Druckbehälter-Schicht und gegebenenfalls weitere Druckbehälter-Schichten jeweils schwimmend an vorgesehene Positionen befördert und abgesenkt werden können.

Ein derartiges "seegestütztes Ausbringen" der Druckbehälter stellt eine besondere Verfahrensweise dar, um mit speziell ausgewählter Wasserfüllung der Bodenverfüllung zielgenau und einfach insbesondere sehr schwere Druckbehälter absetzen zu können.

In einer Weiterführung der Erfindung ist zudem ein Verfahren zur Errichtung eines Unterwasser-Pumpspeicherkraftwerks vorgesehen, bei welchem nachdem die Vielzahl von Druckbehältern in der Bodenvertiefung angeordnet wurde, die Bodenvertiefung mit Wasser geflutet wird, um einen als oberes Reservoir für das zu errichtende Pumpspeicherkraftwerk dienenden künstlichen See in der Bodenvertiefung zu bilden.

Die Flutung der Bodenvertiefung kann mitunter lange Zeit, ggf. sogar Jahre, in Anspruch nehmen. Daher kann es günstig sein, bei der Flutung der Bodenvertiefung bereits Energie mit den ohnehin vorhandenen Turbinen, Pumpen und/oder Pumpturbinen zu gewinnen. Es kann sich daher anbieten, dass die Bodenvertiefung derart mit Wasser geflutet wird, dass das Wasser zunächst über eine dafür vorgesehene Druckleitung unter Abgabe elektrischer Energie in einen oder mehrere der Druckbehälter eingelassen wird, und danach unter Aufnahme elektrischer Energie aus dem oder den Druckbehältern in die Bodenvertiefung hinausgepumpt wird, um die Bodenvertiefung schrittweise zu fluten und dabei (netto) elektrische Energie zu gewinnen.

Gemäß einer anderen Weiterführung der Erfindung kann es vorgesehen sein, ein bereits unter Wasser befindliches unteres Reservoir aus Druckbehältern nachträglich zu erweitern. Dazu können - nachdem die Vielzahl von Druckbehältern in der Bodenvertiefung angeordnet wurde und die Bodenvertiefung zumindest teilweise mit Wasser geflutet wurde, derart, dass ein als oberes Reservoir dienender künstlicher See gebildet ist - ein oder mehrere weitere Druckbehälter von der Oberfläche des Sees auf die bereits angeordneten Druckbehälter abgesenkt werden.

Vorzugsweise sind die bereits angeordneten Druckbehälter dabei als eine oder mehrere Druckbehälter-Schichten angeordnet, so dass die weiteren abgesenkten Druckbehälter in Vertiefungen einer der Druckbehälter-Schichten stabil angeordnet werden können. Die weiteren abgesenkten Druckbehälter werden insbesondere als eigenständige Druckbehälter mit einer eigenen Turbine, Pumpe und/oder Pumpturbine eingerichtet.

Die Erfindung betrifft - neben den vorstehend beschriebenen Verfahren - ferner ein unteres Reservoir für ein Unterwasser-Pumpspeicherkraftwerk, welches sich in einer trockenliegenden aber flutbaren Bodenvertiefung, insbesondere in einer aufgelassenen oder noch betriebenen Tagebaugrube befindet und vorzugsweise gemäß einem Verfahren wie vorstehend beschrieben errichtet ist.

Das erfindungsgemäße untere Reservoir umfasst eine Vielzahl von Druckbehältern, die in der trockenliegenden Bodenvertiefung, z.B. auf einer unteren Sohle der Tagebraugrube, nebeneinander und/oder übereinander angeordnet sind, wobei die Druckbehälter derart ausgebildet sind, dass diese jeweils zumindest eine Durchflussöffnung zum Einlassen und/oder Auslassen von Wasser aufweisen und vorzugsweise derart druckfest sind, dass sie formstabil gegen einen hydrostatischen Wasserdruck leergepumpt werden können, der von außen auf den Druckbehältern lastet, wenn die trockenliegende Bodenvertiefung mit Wasser geflutet ist.

Die Vielzahl von Druckbehältern sind vorzugsweise mit einer oder mehreren Turbinen, Pumpen und/oder Pumpturbinen ausgestattet, so dass, wenn die trockenliegende Bodenvertiefung mit Wasser geflutet ist, das Unterwasser-Pumpspeicherkraftwerk derart betrieben werden kann, dass elektrische Energie abgegeben werden kann, indem Wasser in die Druckbehälter eingelassen wird, und Wasser aus den Druckbehältern ausgelassen werden kann, indem elektrische Energie aufgenommen wird.

Die oben im Rahmen des Verfahrens genannten Varianten und Details gelten analog für das erfindungsgemäße untere Reservoir für ein Pumpspeicherkraftwerk.

Demnach können z.B. von der Vielzahl von Druckbehältern einzelne als eigenständige Druckbehälter eingerichtet sein, indem diese Druckbehälter jeweils über ihre zumindest eine Durchflussöffnung mit einer eigenen Turbine, Pumpe und/oder Pumpturbine ausgestattet sind. Auch können von der Vielzahl von Druckbehältern mehrere, insbesondere benachbarte Druckbehälter, als Druckbehälter-Gruppe eingerichtet sein, indem diese Druckbehälter über Druckleitungen zwischen jeweiligen Durchflussöffnungen miteinander verbunden sind und mit einer gemeinsamen Turbine, Pumpe und/oder Pumpturbine ausgestattet sind, wobei auch mehrere Druckbehälter-Gruppen vorgesehen sein können.

Hinsichtlich der bevorzugt vorgesehenen Anzahl von Druckbehältern, deren Volumen, deren Form und/oder deren Wandstärke wird auf die vorstehenden Ausführungen verwiesen.

Vorzugsweise sind die vielen Druckbehälter in der trockenliegenden Bodenvertiefung, z.B. auf einer unteren Sohle der Tagebraugrube, regelmäßig nebeneinander und/oder übereinander angeordnet. Beispielsweise können die Druckbehälter derart angeordnet sein, dass eine unmittelbar auf dem Untergrund liegende untere Druckbehälter-Schicht mit regelmäßiger Anordnung von Druckbehältern gebildet ist, welche sich vorzugsweise als Unterlage für eine darüber liegende zweite Druckbehälter-Schicht mit regelmäßiger Anordnung eignet, derart, dass die Druckbehälter der zweiten Druckbehälter-Schicht in Vertiefungen der darunter liegenden unteren Druckbehälter-Schicht stabil angeordnet werden können. Ferner kann auf der auf dem Untergrund liegenden unteren Druckbehälter-Schicht eine zweite Druckbehälter-Schicht angeordnet sein und darauf bevorzugt eine dritte Druckbehälter-Schicht und darauf ggf. noch weitere Druckbehälter-Schichten, wobei sich die Druckbehälter-Schichten wiederum jeweils vorzugsweise als Unterlage für eine jeweils darüber liegende Druckbehälter-Schicht eignen.

Bevorzugt ist die Vielzahl von Druckbehältern in der trockenliegenden Bodenvertiefung derart nebeneinander und/oder übereinander angeordnet, insbesondere derart als untere, zweite und dritte Druckbehälter-Schicht angeordnet, dass zwischen der Vielzahl von Druckbehältern Freiräume verbleiben die sich von oben, vorzugsweise geradlinig von oben, bis zum Untergrund erstrecken, insbesondere durch alle Schichten hindurch, und vorzugsweise derart, dass die Freiräume in einer durch die Anordnung der Druckbehälter definierten Regelmäßigkeit auftreten. Dabei können einer oder mehrere zwischen Druckbehältern verbleibende Freiräume als durchgängig nach oben, gegebenenfalls nach oben herausragende, Schächte ausgebaut sein.

Gemäß einer bevorzugten Ausführungsform des unteren Reservoirs ist die Vielzahl von Druckbehältern gemäß der Struktur einer dichtesten, insbesondere hexagonal dichtesten, Kugelpackung angeordnet, vorzugsweise indem Druckbehälter der unteren und gegebenenfalls der zweiten Druckbehälter-Schicht gemäß der Struktur einer dichtesten Kugelpackung angeordnet sind und gegebenenfalls die Druckbehälter der dritten Druckbehälter-Schicht gemäß der Struktur einer hexagonal dichtesten Kugelpackung angeordnet sind.

Bezugnehmend auf den "autarken Fall" kann ein als eigenständiger Druckbehälter einzurichtender oder eingerichteter Druckbehälter derart angeordnet sein, dass eine Durchflussöffnung zum Einlassen und/oder Auslassen von Wasser in den Druckbehälter unten oder seitlich unten an dem Druckbehälter angeordnet ist, vorzugsweise derart, dass die Durchflussöffnung im Inneren des Druckbehälters am tiefsten Punkt angelangt.

Bezugnehmend auf den "oligotarken Fall" bzw. den "zentralen Fall" können mehrere als Druckbehälter-Gruppe einzurichtende oder eingerichtete Druckbehälter derart angeordnet sein, dass zumindest eine Durchflussöffnung eines oder vorzugsweise jedes Druckbehälters der Druckbehälter-Gruppe unten oder seitlich unten an dem Druckbehälter angeordnet ist, insbesondere derart, dass die Durchflussöffnung im Inneren des Druckbehälters am tiefsten Punkt angelangt. Vorzugsweise sind zumidnest zwei übereinander angeordnete Druckbehälter über Druckleitungen zwischen einer unten oder seitlich unten angeordneten Durchflussöffnung des weiter oben angeordneten Druckbehälters und einer Durchflussöffnung des weiter unten angeordneten Druckbehälters miteinander verbunden.

Wieder bezugnehmend auf den "autarken Fall" kann eine eigene Turbine, Pumpe und/oder Pumpturbine eines eigenständigen Druckbehälters mit einer Durchflussöffnung des Druckbehälters derart verbunden sein und/oder in einem zwischen Druckbehältern gebildeten Freiraum derart angeordnet sein, dass, wenn die trockenliegende Bodenvertiefung mit Wasser geflutet ist, Wasser das in den Druckbehälter eingelassen wird, vorzugsweise von oben, besonders bevorzugt geradlinig von oben, über den Freiraum bezogen wird und/oder Wasser das aus dem Druckbehälter ausgelassen wird, vorzugsweise nach oben, besonders bevorzugt geradlinig nach oben, über den Freiraum abgegeben wird.

Wieder bezugnehmend auf den "oligotarken Fall" bzw. den "zentralen Fall" kann eine gemeinsame Turbine, Pumpe und/oder Pumpturbine einer Druckbehälter-Gruppe mit einer Durchflussöffnung eines Druckbehälters oder mit einer die Druckbehälter verbindenden Druckleitung derart verbunden sein und/oder in einem zwischen Druckbehältern gebildeten Freiraum derart angeordnet sein, dass, wenn die trockenliegende Bodenvertiefung mit Wasser geflutet ist, Wasser das in die Druckbehälter-Gruppe eingelassen wird, vorzugsweise von oben, besonders bevorzugt geradlinig von oben, über den Freiraum bezogen wird und/oder Wasser das aus der Druckbehälter-Gruppe ausgelassen wird, vorzugsweise nach oben, besonders bevorzugt geradlinig nach oben, über den Freiraum abgegeben wird. Eine gemeinsame Turbine, Pumpe und/oder Pumpturbine kann insbesondere auf dem Untergrund oder vertieft im Untergrund angeordnet sein.

Zumindest einige der Druckbehälter, insbesondere die Druckbehälter der unteren Druckbehälter-Schicht, sind in der trockenliegenden Bodenvertiefung, z.B. auf einer unteren Sohle der Tagebraugrube, vorzugsweise derart angeordnet, dass benachbarte Druckbehälter sich jeweils seitlich aneinander abstützen und/oder randständige Druckbehälter sich vorzugsweise seitlich an einer Wand oder einem Teil der trockenliegenden Bodenvertiefung abstützen.

Vorzugsweise weisen zumindest einige der Druckbehälter eine Masse auf, die größer oder zumindest nicht wesentlich kleiner ist, als die Masse des von dem Druckbehälter verdrängten Wassers, wenn die trockenliegende Bodenvertiefung mit Wasser geflutet ist, so dass die Druckbehälter ohne Beschwerung oder Verankerung oder zumindest ohne erhebliche Beschwerung oder Verankerung unten in der gefluteten Bodenvertiefung verbleiben.

Zugleich oder unabhängig davon können zumindest einige der Druckbehälter, insbesondere die Druckbehälter einer unteren Druckbehälter-Schicht, am Untergrund fixiert oder verankert sein und/oder zumindest einige der Druckbehälter, insbesondere die Druckbehälter einer oberen Druckbehälter-Schicht, mit Ballast, insbesondere mit Aushub aus der Bodenvertiefung, beschwert sein.

Es kann vorgesehen sein, dass zwischen Druckbehältern verbleibende Freiräume, welche nicht als Zugang zu Turbinen, Pumpen und/oder Pumpturbinen dienen, mit Aushub oder Baustoff verfüllt oder ausgegossen sind.

Gemäß einer besonderen Ausführungsform der Erfindung kann die Vielzahl von Druckbehältern als eine Druckbehälter-Gesamtheit eingerichtet sein indem diese Druckbehälter über jeweilige Durchflussöffnungen miteinander kommunizieren und mit einer gemeinsamen Verschalung nach außen abgeschlossen sind, wobei die gemeinsame Verschalung zumindest eine Durchflussöffnung nach außen aufweist, um die Druckbehälter-Gesamtheit mit einer gemeinsamen Turbine, Pumpe und/oder Pumpturbine ausstatten zu können.

Vorzugsweise befindet sich das untere Reservoir in einer Bodenvertiefung mit einer Tiefe von mindestens 100 Metern, insbesondere mindestens 200 Metern, bevorzugt mindestens 300 Metern, noch bevorzugter mindestens 400 Metern, nochmals bevorzugter mindestens 500 Metern, nochmals bevorzugter mindestens 700 Metern und ggf. sogar mindestens 1000 Metern.

In einer Weiterbildung der Erfindung umfasst das untere Reservoir unter einem als Untergrund für die Anordnung der Druckbehälter dienenden Boden einen Hohlraum, z.B. ein Schacht oder ein Tunnel, zur Installation technischer Einrichtungen wie Kabeln, Druckleitungen, Turbinen, Pumpen und/oder Pumpturbinen.

Alternativ oder zusätzlich kann unter einem als Untergrund für die Anordnung der Druckbehälter dienenden Boden, gegebenenfalls nochmals unter einem Hohlraum zur Installation technischer Einrichtungen, ein begehbarer und/oder befahrbarer Hohlraum, z.B. ein Schacht oder ein Tunnel, insbesondere zur Versorgung und/oder Wartung technischer Einrichtungen vorgesehen sein, wobei ein solcher begehbarer und/oder befahrbarer Hohlraum vorzugsweise mit einem äußeren Zugang verbunden ist, welcher z.B. in einem Hang oder an einem Hang der Bodenvertiefung umfasst ist.

Die Druckbehälter sind vorzugsweise derart ausgebildet, derart angeordnet, derart mit einer oder mehreren Turbinen, Pumpen und/oder Pumpturbinen ausgestattet und/oder derart über Druckleitungen zwischen jeweiligen Durchflussöffnungen miteinander verbunden, dass beim Auslassen von Wasser aus dem Druckbehälter keine Luft in den Druckbehälter nachströmt, sondern vorzugsweise ein nur durch den Partialdruck des Wasserdampfes begrenztes Vakuum in dem Druckbehälter entsteht und/oder dass beim Einlassen von Wasser in den Druckbehälter, der Druckbehälter nicht vollständig mit Wasser gefüllt wird, sondern vorzugsweise ein gewisses Restvolumen mit einem insbesondere nur durch den Partialdruck des Wasserdampfes begrenztem Vakuum verbleibt.

Neben dem vorstehend beschriebenen unteren Reservoir betrifft die Erfindung auch ein Unterwasser-Pumpspeicherkraftwerk, welches zusätzlich ein oberes Reservoir in Form eines in der Bodenvertiefung künstlich gebildeten Sees umfasst.

Schließlich betrifft die Erfindung noch ein weiter unten noch näher als "Interims-Verfahren" erläutertes Verfahren zur vorläufigen Nutzbarmachung eines in einer trockenliegenden Bodenvertiefung errichteten unteren Reservoirs für ein Unterwasser-Pumpspeicherkraftwerk (z.B. wie vorstehend beschrieben) als vorläufiges Pumpspeicherkraftwerk und vorzugsweise zur späteren Umwandlung in ein Unterwasser-Pumpspeicherkraft (z.B. wie vorstehend beschrieben).

Bei diesem "Interims-Verfahren" werden die oder einige der das untere Reservoir bildenden in der Bodenvertiefung angeordneten Druckbehälter über eine (vorläufige) Druckleitung verbunden mit einem ein vorläufiges oberes Reservoir bildenden Behälter oder Becken welches abgegrenzt von der trockenliegenden Bodenvertiefung und oberhalb des unteren Reservoirs angeordnet ist. Ein solches vorläufiges, abgegrenztes, oberes Reservoir ist so zu verstehen, dass es nicht identisch mit der Bodenvertiefung ist. Es kann beispielsweise am Hang der noch trockenliegenden Bodenvertiefung angeordnet sein, vorzugsweise möglichst weit oben. Beispielsweise kann im seichten Bereich des Tagesbaus ein Oberbecken durch einen Damm geschaffen werden, der mit Wasser geflutet wird, wobei der eigentliche tiefe Tagebau trocken bleibt. Die schon montierten Kugelspeicher können durch Rohre mit diesem Oberbecken verbunden werden, so dass parallel zum Braunkohleabbau im Tagebaubecken schon das System Kugelspeicher-Oberbecken als Wasserpumpspeicherwerk in Betrieb gehen kann.

Mit dem vorläufigen Reservoir kann das vorläufige Pumpspeicherkraftwerk derart betrieben werden, dass elektrische Energie gewonnen wird, wenn Wasser aus dem vorläufigen oberen Reservoir (über die vorläufige Druckleitung) in die Druckbehälter eingelassen wird, und elektrische Energie gespeichert wird, wenn Wasser aus den Druckbehältern (über die vorläufige Druckleitung) in das obere Reservoir gepumpt wird.

Vorzugsweise wird die trockenliegende Bodenvertiefung später mit Wasser geflutet, um das vorläufige obere Reservoir durch ein als künstlicher See in der Bodenvertiefung ausgebildetes oberes Reservoir zu ersetzen und damit das vorläufige Pumpspeicherkraft in ein endgültiges Unterwasser-Pumpspeicherkraftwerk umzuwandeln, so dass dieses derart betrieben werden kann, dass elektrische Energie gewonnen wird, wenn Wasser aus der gefluteten Bodenvertiefung in die Druckbehälter eingelassen wird, und elektrische Energie gespeichert wird, wenn Wasser aus den Druckbehältern in die geflutete Bodenvertiefung ausgelassen wird. Die vorläufige Druckleitung kann dann entfernt werden.

## KURZBESCHREIBUNG DER FIGUREN

Es zeigen:

Fig. 1 eine schematische Darstellung eines Speichersees, der beim Energie-Einspeichern bilanzmäßig Wasser mit dem Volumen Vob = Ffüll * Vu aus der mittleren Teufe $h_u$ des auf dem Seeboden als Bauwerk errichteten Unterbeckens in das Oberbecken auf die mittlere Teufe $h_{ob}$ befördert,

Fig. 2 der Speichersee aus Fig. 1 mit Installationsstrecke / unterirdischer Verbindungsebene, z.B. mit Kanal für Stromleitung, Wasserverbindungsrohre oder Zugangs- / Zufahrt-Strecke,

Fig. 3 eine schematische Darstellung einer Tagebau-Rinne mit eingebetteten Hohlraum-Kugelspeichern in regelmäßiger Anordnung,

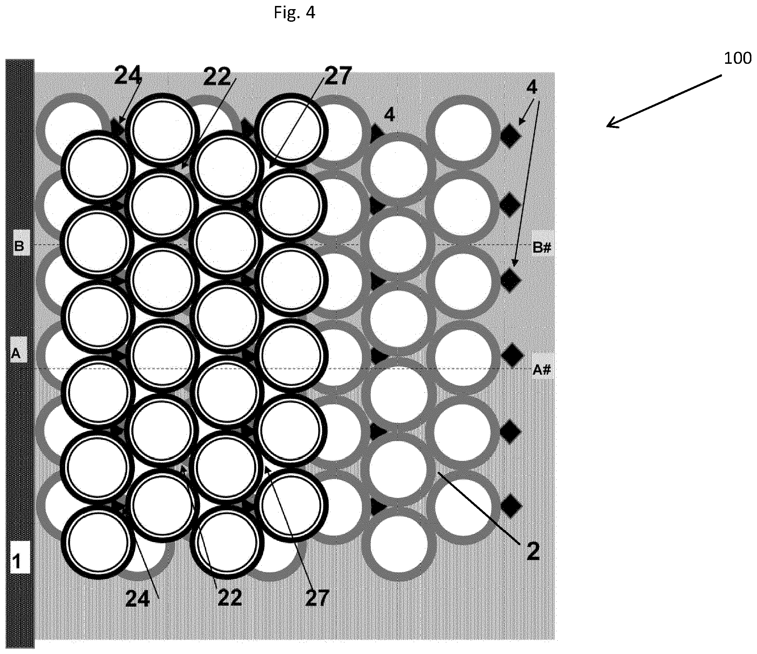

Fig. 4 eine schematische Draufsicht auf eine Tagebaugrube, z.B. der Hambacher Rinne, mit eingebetteten Hohlraum-Kugelspeichern in hexagonal dichtester Packung. Die Kugeln sind nur zweidimensional durch ihre waagerechten Querschnitts-Großkreise dargestellt. Man sieht flächendeckend die zweitoberste Lage und auf der linken Seite einen Teilbereich der obersten Lage. Die dargestellte hexagonal dichteste Kugelpackung ergibt aus Symmetriegründen von unten nach oben durchgehende senkrechte Freiräume 24 und 22, deren eine Hälfte (nämlich 24) wie dargestellt als Zugangs- oder Verbindungsschächte mit einem lichten Engpass-Schacht 4 genutzt werden können. In der hexagonal dichtesten Kugelpackung liegen die Kugeln jeder dritten Ebene wieder exakt über den Kugeln einer ersten Ebene,

Fig. 5a einen Querschnitt in Ebene A-A# aus der Draufsicht in Fig. 4 in schematischer, vergröberter Darstellung, wobei die Kleinkreise nicht maßstabsgerecht sind und nur den Ort anzeigen, an dem sich die direkt vor und hinter der Querschnittsebene liegenden seitlichen Kugelenden berühren. Zu sehen ist eine Rinne mit eingebetteten, in hexagonal dichtester Kugelpackung angeordneten Hohlraumspeichern 3 und lichten Zugangsschächten 4 zu den Pumpturbinen,

Fig. 5b einen Querschnitt in Ebene B-B# der Draufsicht in Fig. 4 wiederum in schematischer, Darstellung wie in Fig. 5a, wobei der Verfüllungsraum 22 mit Steinen, Kies und Sand verfüllt werden kann,

Fig. 6 einen vergrößerten Ausschnitt aus Fig. 4, der Draufsicht auf ein kleines Teilstück der obersten Lage und auf ein etwas größeres Teilstück der zweit obersten Schicht,

Fig. 7 einen schematischen Querschnitt einer Tagebaugrube, z.B. der Hambacher Rinne, mit in den Hohlraumkugeln direkt eingebauten Pumpturbinen 7, wobei durch den freien Raum 24 zwischen den Kugeln 3 ein ausreichender Zugang zum Seewasser gewährleistet ist,

Fig. 8a einen schematischen Querschnitt einer Tagebaugrube, z.B. der Hambacher Rinne, mit Verbindungsrohren 6 von den Speicherkugeln 3 zu auf dem Seeboden 1 installierten Bunkern, die eine gemeinschaftliche Pumpturbine 77 für eine Gruppe von Speicherkugeln enthält,

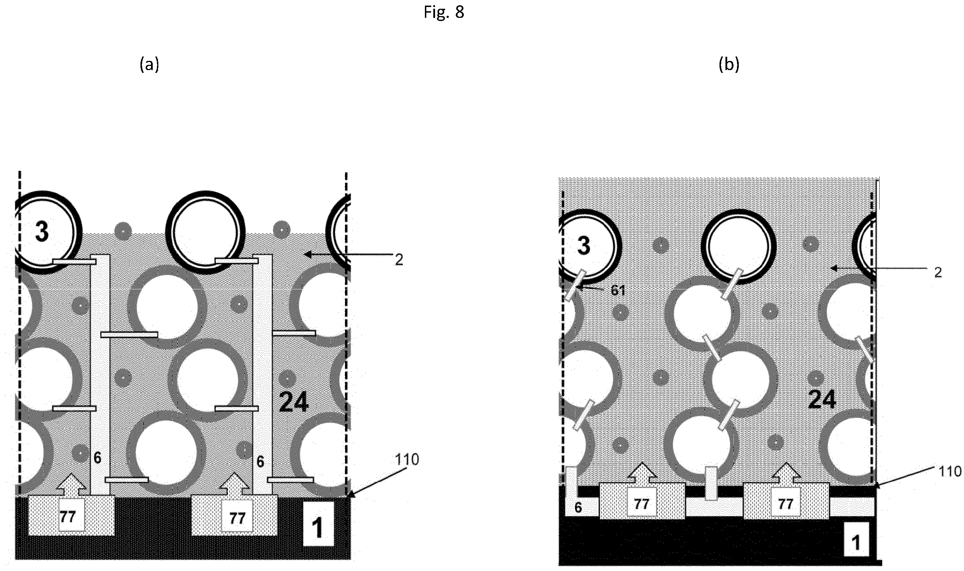

Fig. 8b    einen schematischen Querschnitt einer Tagebaugrube, z.B. der Hambacher Rinne, mit kurzen Verbindungsrohren 61 von Speicherkugeln zu Speicherkugel und auf dem Seeboden installierten Bunkern, die die gemeinschaftliche Pumpturbine 77 für eine größere Gruppe von Speicherkugeln enthält, wobei die 2*8=16 Kugeln, die sich knapp hinter und knapp vor der dargestellten Querschnittsebene befinden und in der Figur nur angedeutet sind, sich ebenfalls mit dem Verteilungsrohrwerk 6 verschalten lassen, das sich auf oder im Boden 1 auch senkrecht zur dargestellten Querschnittsfläche erstrecken kann,

Fig. 9a    einen schematischen Querschnitt einer Tagebaugrube, z.B. der Hambacher Rinne, mit Verbindungsrohren 6 von Speicherkugeln zu auf dem Seeboden installierten Bunkern, die die gemeinschaftliche Pumpturbine 77 für eine größere Gruppe von Speicherkugeln enthält,

Fig. 9b    einen schematischen Querschnitt einer Tagebaugrube, z.B. der Hambacher Rinne, mit kurzen Verbindungsrohren 61 von Speicherkugel zu Speicherkugel und auf dem Seeboden installiertem Bunker, der die gemeinschaftliche Pumpturbine 77 für eine größere Gruppe von Speicherkugeln enthält,

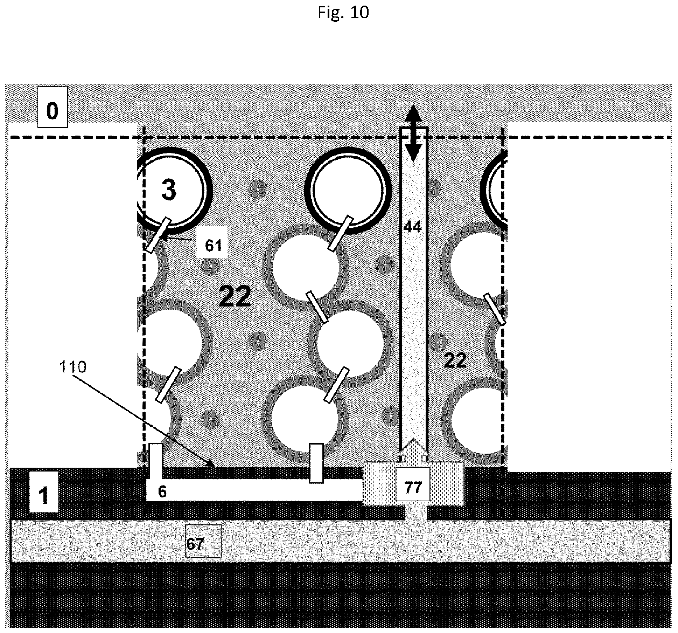

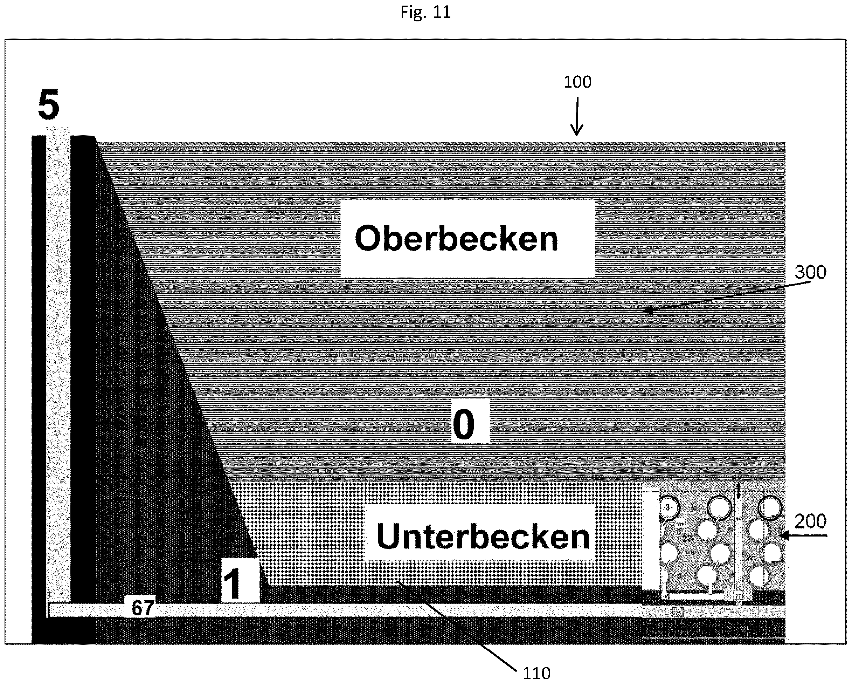

Fig. 10    einen schematischen Querschnitt einer Tagebaugrube, wobei die Speicheranlage zumindest ein Verbindungsrohr 44 zwischen freier See 0 und PT-Station 77 aufweist und ansonsten völlig eingebettet ist, d.h. der in den vorherigen Figuren als freier Zugangsraum 24 ausgewiesene Raum ist nun ebenfalls zugeschüttet, so dass der Zugang zum See durch die oben offene Rohrleitung 44 erfolgt. Wartung und eventueller Ersatz der Pumpturbine kann -wie in einem Bergwerk- über eine im Seeboden verlegte Strecke 67 erfolgen, die mit einem zentralen Versorgungs- und Personenschacht 5 verbunden sein kann (siehe Fig. 11),

Fig. 11    einen schematischen Querschnitt einer Tagebaugrube mit einer im Seeboden 1 verlaufenden befahrbare Strecke 67, die an einen Versorgungs- und Personenschacht 5 angeschlossen ist, wobei dieser auch als befahrbare und wasserdicht übertunnelte Bergstraße am Hang des Sees verlaufen und bereits vor der Flutung des Sees im Trockenen errichtet werden kann,

Fig. 12    einen schematischen Querschnitt einer Tagebaugrube mit einer im Betrieb stehenden Speicheranlage aus Fig. 10 und nachträglich installierten autarken Speicherkugeln ("in situ" Installation),

Fig. 13    eine schematische Darstellung einer Tagebaugrube im Interimsbetrieb mit erst teilweise erstelltem SeeEi-Unterbecken 83 mit oligotarken Pumpturbinen und Rohrverbindung 86 zum Interims-Oberbecken 80 an der späteren Seepromenade, wobei das Interim-Oberbecken durch eine Staumauer 84 zum späteren Arbeits-See hin abgeschottet ist.

Fig. 14    eine schematische Darstellung einer Tagebaugrube mit Unterwasser-Pumpspeicherkraftwerk gemäß einer weiteren Ausführungsform,

Fig. 15    einen schematischen Querschnitt des unteren Reservoirs aus Fig. 14,

Fig. 16    einen schematischen Längsschnitt des unteren Reservoirs aus Fig. 14,

Fig. 17    eine schematische Draufsicht auf das untere Reservoir aus Fig. 14,

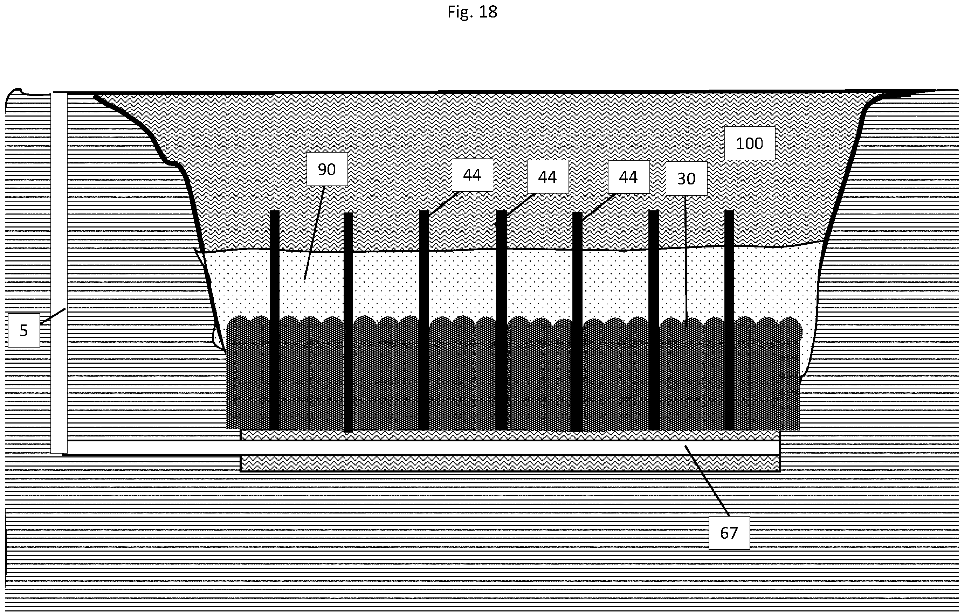

Fig. 18    eine schematische Darstellung einer Tagebaugrube mit Unterwasser-Pumpspeicherkraftwerk gemäß einer weiteren Ausführungsform mit Füllmaterial,

Fig. 19    eine Karte des Tagebaus Hambach im trockenliegenden Zustand,

Fig. 20    eine Karte des Tagebaus Hambach mit Damm im Interims-Betrieb,

Fig. 21    eine Karte des Tagebaus Hambach mit Damm nach Flutung,

Fig. 22    eine weitere Karte des Tagebaus Hambach mit Damm nach Flutung.


DETAILLIERTE BESCHREIBUNG DER ERFINDUNG


Ausbau eines bestehenden Tagebaus als PSKW


Im Folgenden wird auf den Ausbau eines bestehenden Tagebaus als PSKW und die besonderen Verhältnisse eines auslaufenden großen Tagebaues eingegangen. Die Ausführungen gelten aber allgemein für jede bereits bestehende oder zu errichtende trockenliegende Bodenvertiefung. Wie weiter unten noch näher ausgeführt wird, kann bei geeigneter Geologie eine PSKW-Anlage ohne die Vorarbeit eines auslaufenden Tagebaues auf der "Grünen Wiese" (oder auf dem "Gelben Wüstensand") errichtet werden.

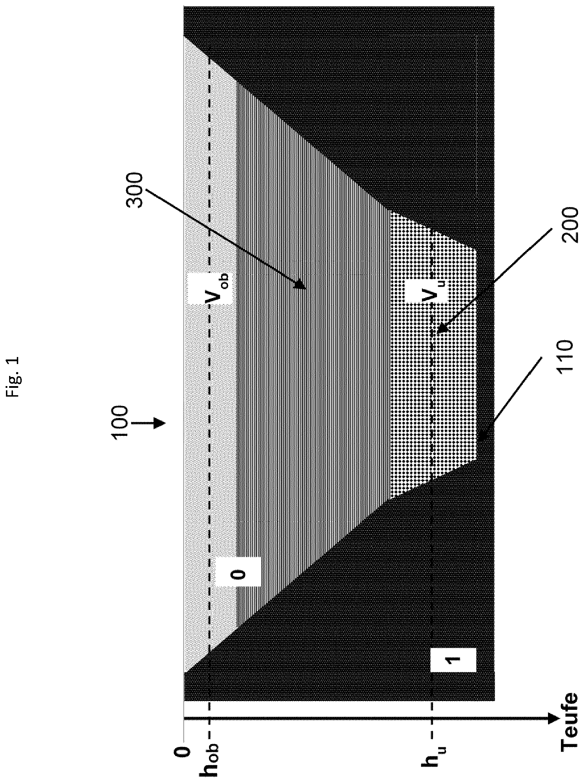

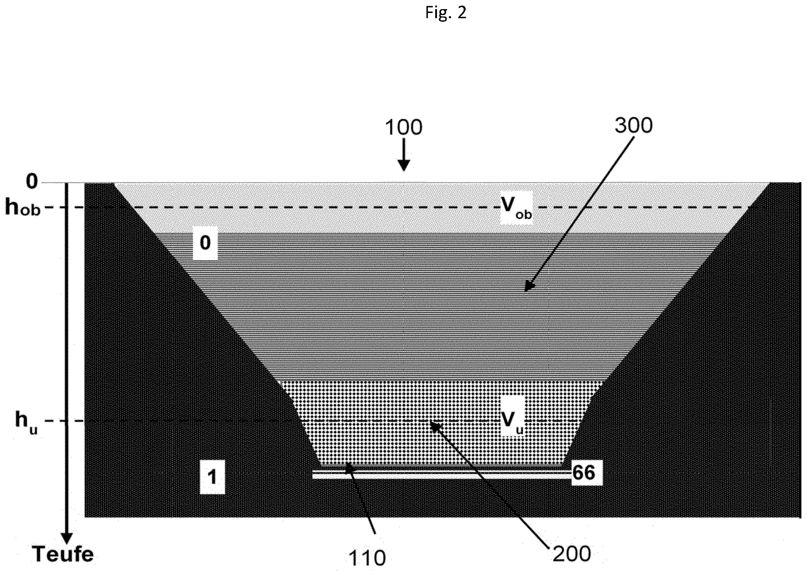

Nachfolgend wird also der Ansatz behandelt, einen bestehenden Tagebau optimal und weitgehend zur Energiespeicherung als "unkonventionelles PSKW" auszubauen, wobei der durch die Rekultivierung vorgesehene See als Oberbecken und eine zu erstellende, geeignete Hohlraumstruktur am Boden 1 des Sees als Unterbecken genutzt werden. Dies wird schematisch in dem **Fig. 1** dargestellt. Das Unterbecken 200 besitzt das Bruttovolumen $V_u$, von dem aber nur der durch den Füllfaktor Ffü$_{ll}$ charakterisierte Teil als nutzbares Nettovolumen beim Energiespeichern genutzt werden kann. Dieses Nettovolumen hebt beim Auspumpen den Wasserspiegel des Oberbeckens 300, d.h. das freie Seewasser 0 (ohne Bebauung), so dass bilanzmäßig dort das Hubvolumen $V_{ob}$ mit Wasser gefüllt wird. Je nach Anforderung können Stromkabel, - aber auch Wasserverbindungsrohre oder ein Zugang oder sogar eine komfortable Zufahrt - unterhalb des Seebodens 1 in einer Verbindungsebene 66 verlegt werden, wie in **Fig. 2** dargestellt. Das untere Reservoir 200 ist auf dem Untergrund 110 der Bodenvertiefung 100 errichtet. Darunter kann sich ein Hohlraum 66 befinden, welcher als Installationsstrecke, unterirdische Verbindungsebene, z.B. mit Kanal für Stromleitung, Wasserverbindungsrohre oder sogar Zugangs/ Zufahrt-Strecke dienen kann.

Je nach Ausführungsform können mit der gegenwärtigen Erfindung eine oder mehrere der folgenden Eigenschaften realisiert werden:

- das gesamte als "Unterbecken" zur Verfügung stehende Volumen kann so weit wie möglich zur Einspeicherung von Energie genutzt werden.
- Die Anlage besteht aus selbständigen Elementen, von denen jedes von außen zugänglich bleibt.
- Sicherheit: Im Falle einer Havarie bleiben die Auswirkungen auf einen in seinem Gefahrenpotential überschaubaren Teil der Gesamtanlage begrenzt und insbesondere eine "Kettenreaktion" von weiteren Havarien bleibt ausgeschlossen.
- Die Montage der Speicheranlage bleibt - zumindest nach Installation einer technischen Verkabelungs-Ebene 66 auf oder im Boden und einer ersten Lage der Speicherebene - grundsätzlich auch nach der Befüllung des Sees möglich.
- Die Kompensation des evtl. noch verbleibenden Auftriebes der vom Wasser entleerten (also energetisch geladenen) Elemente erfolgt in unmittelbarer Nähe jedes Elementes und durch die Symmetrie der auf das Speicherelement wirkenden Kräfte möglichst auch das Entstehen von Drehmomenten vermeiden.
- Die Zu- und Abflüsse des Seewassers zu den Pumpturbinen sind großflächig über die Oberfläche der Anlage verteilt, so dass im Wasserkörper des Sees sich nur sehr geringe Strömungsgeschwindigkeiten ergeben. An Engstellen innerhalb der Speicheranlage können die unvermeidlich etwas höheren Wassergeschwindigkeiten durch stetig sich verengende (bzw. erweiternde) Übergangsstrecken strömungstechnisch angepasst werden.
- Die Pumpturbinen sind im unteren Bereich eines Hohlraumes oder bei direkt auf der Sohle aufliegenden Hohlraumkörpern u.U. auch in Kavernen im Seeboden angebracht, um beim Pumpen ohne Vordruck auszukommen.
- Schon parallel zum auslaufenden Kohleabbau kann der Bau und ein Teilbetrieb der PSKW -Anlage erfolgen.

Je nach Ausführungsform liegen der Erfindung zur Nutzung eines großen zu einem See rekultivierten, aufgelassenen Tagebaues als Pumpspeicher Kraftwerk eine oder mehrere der im folgenden aufgelisteten Konzepte zugrunde. Noch weitere Ausgestaltungen werden weiter unten angegeben.

*(1.) Speicher Grundzelle: HohlkugelSpeicher (SeeEi)*

Als Speicher-Grundzelle wird vorzugsweise ein Hohlkugelspeicher (hier jetzt "SeeEi" genannt) eingesetzt, welcher allgemein als Druckbehälter bezeichnet wird. Die Schalendicke muss grundsätzlich nur so dick sein wie es wg. des Wasserdruckes erforderlich ist, da die Auftriebs-Sicherheit auch durch Einbettung (siehe (8.)) erreicht werden kann; andererseits kann es aber in manchen Fällen praktischer und einfacher sein, auch in kleinen Teufen bei einer intrinsisch auftriebskompensierten "Einheitskugel" zu bleiben.

Weiterhin ist folgendes zu bemerken:

- Es können auch großvolumige "Rohrbündel" als Wasserspeicherschächte in waagerechter oder in senkrechter Anordnung eingesetzt werden. Der im aufgelassenen Tagebau zunächst noch freie und oberirdische Zugang erlaubt jedoch den Einsatz von großen serienmäßig erstellten Kugeln, was Vorteile beim Füllfaktor und eine geringere (ca. halb so dicke) Wandstärke ermöglicht.
- Genauere baustatische Überlegungen werden vermutlich Verbesserungen durch kleine Abweichungen von der Kugelform bis hin zu eher "eiförmigen" Hohlkörper aufzeigen. Wir benutzen aber weiterhin den Begriff "Hohlkugel" als eine idealisierte Bezeichnung auch für derartiger Strukturen und legen den Kapazitätsberechnungen eine Kugel zugrunde.
- Auch geeignete Polyeder sind denkbar, sofern sie fertigungstechnische Vorteile bieten.

*(2.) Pump-Turbine (PT)*

Bei der Bestückung der Speicheranlage mit Pumpen und Turbinen lassen sich insbesondere drei Fälle unterscheiden:

1. Fall: Autark, PT zu jeder SpeicherGrundzelle, keine sonstige Rohrverbindungen.
2. Fall: Oligotark: Wenige benachbarte Grundzellen werden durch kurze Verbindungsrohre verbunden; durch eine symmetrische Anordnung entsteht aus den verbundenen elementaren Grundzellen eine neue Einheitszelle. Für diese Einheitszelle wird nur eine einzige PumpTurbinen- Einheit eingesetzt. Bem.: "Oligotark" -bezeichnet hier die Selbständigkeit der zusammengesetzten Einheitszelle, die aus mehreren Grundzellen besteht.

3. Fall: Zentral: Mehrere Grundzellen bzw. EinheitsZellen, werden zusammengefasst und auf eine leistungsstarke zentrale PumpTurbinen-Einheit geschaltet.

Die Auswahl ergibt sich z.B. aus der Kostenstruktur der Pumpturbinen je nach Leistung und aus Überlegungen zur Anströmung, Sicherheit und den Umweltauswirkungen.

Das Wasser kann - wie in Punkt (5.) gezeigt wird - aufgrund der geometrischen Anordnung der Grundzellen (Speicherkugeln) die Pumpturbinen vom See aus schnell und mit geringem Widerstand erreichen.

*(3.) Rinne, zur Aufnahme der SpeicherEinheiten*

Auf der Sohle des Tagebaues wird eine Rinne hergestellt, die die vornehmlich kugelförmigen SpeicherGrundzellen in geordneter und symmetrischer Anordnung aufnehmen kann. Die Rinne kann sich über den gesamten verfügbaren Seeboden erstrecken. Sie kann auch bei Bedarf abschnittsweise z.B. durch einen Erdwall "parzelliert" werden.

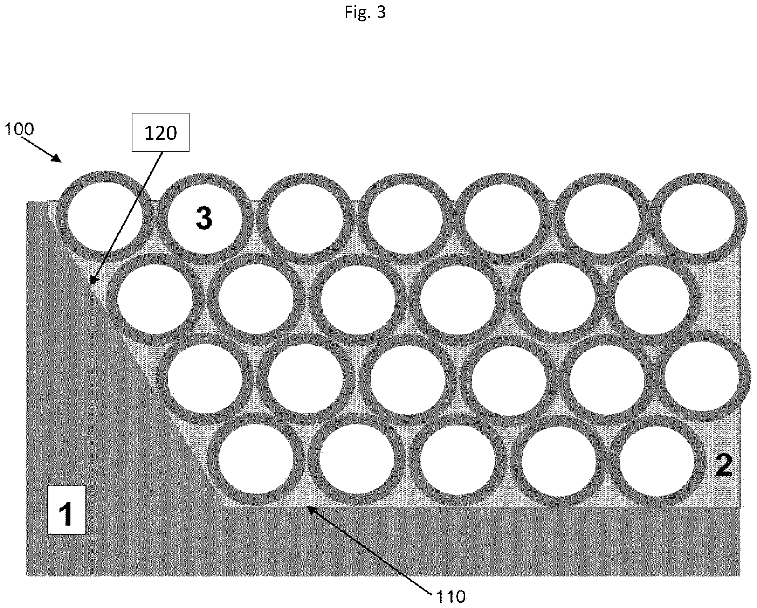

**Fig. 3** zeigt das leicht verständliche Prinzip, wonach die Druckbehälter 3 ("SeeEi"; elementare Speicher-Grundzelle, vornehmlich ein Hohlkugelspeicher) regelmäßig in der durch den Boden 1 definierten Bodenvertiefung 100 auf deren Untergrund 110 angeordnet werden und ggf. seitlich von Wänden 120 gestützt werden können. Die kann man sich z.B. vorstellen als ob Kugeln in einer großen Kiste mit schrägen Wänden angeordnet werden. Zwischen den Kugeln verbleibt in der Regel ein Zwischenraum/Freiraum 2, zumindest in Teilbereichen mit Einbettungsmaterial (Aushub aus Sand, Kies, kleineren Gesteinsbrocken, evtl. auch Leichtbeton zur Stabilisierung) gefüllt werden kann, z.B. um zur Auftriebsverhinderung zu dienen, so dass sich eine ausreichende mittlere Dichte ergibt, und in anderen Teilbereichen (besonders ausgeprägt bei einer hexagonalen Kugelanordnung) als Verbindungsraum vom See zu den unteren Kugeln bzw. zu Installationen am Boden freigehalten wird, wie weiter unten noch näher ausgeführt wird.

Die in **Fig. 3** dargestellte Querschnittsebene weist ggf. noch keine optimale Symmetrie der Kugel-Packung auf: jede obere Kugel sitzt auf nur zwei unteren Kugeln. Es ist günstiger, die optimale hexagonal dichteste Kugelpackung der SpeicherGrundzellen zu verwenden, wie wir das in den folgenden Figuren veranschaulichen werden. Der Unterschied besteht in einer effektiveren Versetzung der waagerechten Kugelebenen, bei der dann jede obere Kugel in der Mulde zwischen 3 unteren Kugeln sitzt, und wird in den folgenden Figuren (**Fig. 4** und folgende Bilder) berücksichtigt werden.

*(4.) Installationsstrecken 66*

Unterhalb der die Speicherelemente aufnehmenden Rinne können Kanäle zur Aufnahme der Stromkabel errichtet werden, die dann am Rande des Unterbeckens seitlich oder in einem Schacht nach oben geführt werden. Diese Installationstrecken werden in einigen Ausführungsformen (siehe weiter unten) als ein Zugang zu am Boden installierten oligotarken Pumpturbinen-Anlagen ausgebaut. Im Trockenbau kann am Hang des Ober- und Unterbeckens entlang eine Zufahrtsröhre erstellt werden, die einen bequemen Zugang für Personal und Materialtransporte zu den technischen Anlagen auf oder im Boden des Unterbeckens ermöglicht. Wie im Untertage- Bergbau sind dann die Produktionsstätten gut erreichbar, aber der dort mühsame untertägige Streckenvortrieb kann vorab im bequemen trockenen Tagebau erfolgen.

*(5.) Geometrische Anordnung der SeeEier: hexagonal dichteste Kugelpackung*

Die SeeEier werden vorzugsweise in hexagonal dichtester Kugelpackung angeordnet. Dabei fixieren sich die Kugeln der folgenden Ebene jeweils in der Hälfte der Mulden der darunterliegenden Ebene. Zwei aufeinanderfolgende waagerechten Ebenen sind dabei um eine durch die Symmetrie vorgegebenen Bruchteil des Kugeldurchmessers versetzt, sodass sich identische Pakete von jeweils zwei der gegeneinander versetzten aufeinander folgenden Ebenen ergeben. In jeder dritten Ebene liegen die Kugeln also wieder exakt über den Kugeln der ersten Ebene. Dies unterscheidet die hexagonal dichteste Kugelpackung von der ebenso dichten "kubisch dichtesten" Kugelpackung, bei der nur jede vierte Ebene wieder exakt über der ersten Ebene liegt.

Ein Vorteil der hexagonal dichtesten Kugelpackung liegt darin, dass sich hier durchgehende senkrechte freie Räume ergeben. Für eine besonders anschauliche und ausführliche Beschreibung dieser Symmetrieformen sei auf die Homepage "Chemie verstehen" von M. Schmidt /Schmidt 2019/ hingewiesen, ansonsten kann man natürlich auch die Lehrbücher der Kristallographie heranziehen. Für das räumliche Vorstellungsvermögen ist es vielleicht hilfreich, in den folgenden Figuren nicht nur die einzelnen Kugeln sondern auch die Tetraeder aus 4 Kugeln zu "sehen" und zwar diejenigen, bei denen 3 Kugeln in einer (senkrechten oder waagerechten) Ebene aneinanderstoßen und die 4. Kugel sich in der Mulde der drei erstgenannten befindet.

In **Fig. 4** ist eine Draufsicht der Bodenvertiefung 100 bzw. Rinne mit eingebetteten als Hohlraum-Kugelspeichern ausgebildeten Druckbehältern 3 in hexagonal dichtester Packung gezeigt, wobei zwischen den Druckbehältern 3 Freiräume 2 verbleiben. Jede Kugel ist hier nur zweidimensional durch ihren waagerechten Querschnitts-Großkreis dargestellt. Man sieht flächendeckend die zweitoberste Lage und auf der linken Seite einen Teilbereich der obersten Lage.

Zwischen den Kugeln ergeben sich freie Räume. Diese Freiräume 2 kann man nach dem Kriterium "senkrechter Zugang" zum darüber liegenden See in zwei Klassen unterteilen. Sie sind:

- Entweder ein "Zugangsraum" (22 und 24), der einen freien senkrechten Zugang zur darüber liegenden freien See besitzt, und der je nach Funktion noch unterscheiden werden kann als

  ◦ "verfüllter" Zugangsraum 22, wenn er z.B. mit Sand, Kies oder Steinen aufgefüllt wird, oder als
  ◦ offenen oder Freiwasser- Zugangsraum 24, wenn er offenbleibt

- Oder ein "Blindschacht- Raum" 27 - wie wir einen zusammenhängenden "gefangenen" Raum zwischen den Kugeln bezeichnen wollen, wenn von ihm aus kein senkrechter Zugang zum See möglich ist.

Die dargestellte hexagonal dichteste Kugelpackung ergibt also aus Symmetriegründen von unten nach oben durchgehende senkrechte Zugangsräume 22 und 24, deren Engstellen in der Draufsicht sichtbar bleiben. Diese Freiräume können zu einem Teil offen bleiben und den Zutritt des Seewassers zu den Pumpturbinen gewährleisten (Freiwasser Zugangsraum 24) und damit im Wartungsfall auch als Zugangs- oder Verbindungsschächte genutzt werden, und sie können zu einem anderen Teil als "verfüllte Zugangsräume" 22 als Auftriebssperre mit Steinen, Kies und Sand verfüllt werden. In **Fig. 4** sind bei den Freiwasser Zugangsräumen 24 das durch die Geometrie der übereinanderliegenden Engstellen gegebene senkrechte Volumenelement als "lichter Engpass-Schacht" 4 markiert.; dieser ist also ein gedachter Teilraum des Freiwasser Zugangsraumes 24. Dieser "lichte geometrische Engpass Schacht" 4, ergibt sich in diesem Beispiel aus der hexagonalen Geometrie der Kugelanordnung und befindet sich in dem Teil 24 der Freiräume 2, der nicht verfüllt wird.

Vorzugsweise hat jede Kugel direkten Zugang zu drei an ihr anliegende Zugangsräume (22 oder 24), und von einem Zugangsraum aus kann man in jeder Ebene drei anliegende Kugeln direkt erreichen. Daher kann man den Zugang von den Kugeln zu den Zugangsräumen so auswählen, dass ein Teil der Zugangsräume überhaupt nicht als Zugang zum See genutzt wird und daher z.B. auch verfüllt werden kann. Im **Fig. 4** wurde genau die Hälfte der Zugangsräume als Freiwasser-Zugangsraum 24 ausgewählt, was auch aus Symmetriegründen nahegelegt wird.

Aus **Fig. 4** kann man ebenfalls ersehen, dass jede Kugel von drei Blindschachträumen 27 umgeben ist. Es liegt nahe, diese Blindschächte im Zuge der Installation der Anlage, solange sie also noch nicht von der darüber liegenden Kugelebene abgedeckt und daher noch von oben zugänglich sind, mit Sand, Kies oder Steinen zu verfüllen. Die kleinen noch verbleibenden seitlichen Löcher zu Freiwasser Zugangsräumen 24 können bei der Ausfüllung mit bindendem Material (z.B. Leichtbeton) oder auch mit Bautextilien verschlossen werden oder auch einfach nur abgeschrägt werden.

Es ist möglich, eine Hohlkugel mit einer Auswuchtung (Wulst) auszustatten, so dass sie gut auf die unter ihr liegenden Kugeln, insbesondere auf die unter ihr liegenden drei Kugeln ("drei " - wg. der hexagonalen Symmetrie, siehe **Fig. 4**), auf die sie aufgesetzt wird, passt. Ggfls. kann man die direkten Kontaktflächen auch mit Verbindungsmaterialien oder einem Mörtel versehen, um kleinflächige Druckstellen auszugleichen (ansonsten siehe auch weiter unten zur "Einbettung"). Außerdem kann man eine Auswuchtung so anbringen, dass der seitliche Zugang zu den später zur Verfüllung vorgesehenen Hohlräume abgedeckt wird.

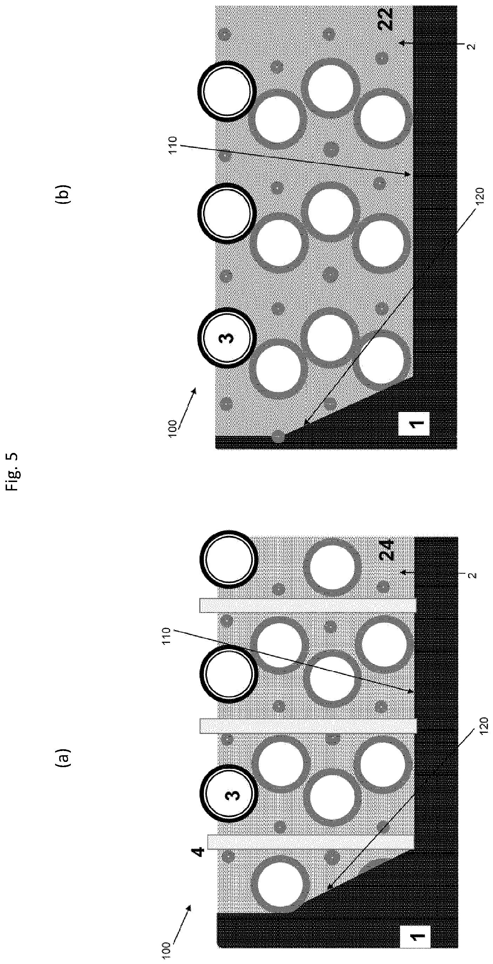

Nun betrachten wir einen Querschnitt zu der Draufsicht aus **Fig. 4** (z.B. der Hambacher Rinne) und zwar in einer Ebene A--A#, in der sich die Freiwasser Zugangsräume 24 zu den Pumpturbinen befinden (**Fig 5a**). Der Schnitt geht durch den senkrechten Großkreis des einen Drittels der Kugeln und berührt die seitlichen Spitzen der anderen 2/3 der Kugel, die sowohl hinter als auch vor der Zeichenebene liegen, was wir jedoch zur Verdeutlichung nur durch einen einzigen fetten Punkt kenntlich gemacht haben.

Zwischen den als Hohlraumspeicher ausgebildeten Druckbehältern 3 sind als "lichte Zugangsschächte" ausgebildete nach oben offene Freiräume 4 dargestellt, die als Zugang zu den Pumpturbinen dienen können. Allgemein kann zwischen den Druckbehältern 3 ein Freiwasser-Zugangsraum 24 vorgesehen sein, ein freier Raum zwischen den Kugeln, in dem ein ausreichenden Zugang zum Seewasser gewährleistet werden kann.

Man sieht, dass in der Schachtebene und dem dazugehörigen Raum zwischen den Kugeln viel Platz ist für den Zugang zu ihren unten seitlich liegenden Ein/Auslässen. Grundsätzlich kann man diesen Raum für das Seewasser offenhalten; dann bezeichnen wir ihn als "Freiwasser Zugangsraum" 24. Man kann ihn jedoch auch teilweise ebenfalls, z.B. mit Steinmaterialien, ausfüllen, insbesondere sofern ein ausreichend großer Raum für freien Zutritt des Wassers zu den Öffnungen jeder Kugel gewährleistet bleibt. Hierbei sollte man auch an Wartungsarbeiten bis hin zu einem irgendwann sicherlich fälligen Austausch der Pumpturbine denken.

Im Prinzip sieht eine um einen Kugelradius verschobene Querschnittsebene (siehe Schnittlinie B-B# in **Fig. 4**) gleich aus (siehe **Fig. 5b**), nur dass hier ggf. kein Zugang zu den Kugeln vorgesehen ist und daher der gesamte Raum, den wir nun als Verfüllungsraum 22 bezeichnen, mit Sand, Kies und Steinen ausgefüllt werden könnte.

Ein Aspekt der gesamten Speicheranlage besteht also insbesondere darin, dass sie sich wie aus Bausteinen aus der symmetrisch geordneten Anordnung von stabilen und statisch optimalen, elementaren Hohlkörpern (insbesondere Hohlkugeln) ergibt. Wie man eine schlichte Mauer aus im Verband gesetzten Klinkersteinen zusammenbauen kann, so bauen wir eine Speicheranlage aus Hohlraumkugeln in der hexagonalen dichtesten Kugelpackung, wobei sich dann der Speicherraum im außerordentlich stabilen Innern der Hohlkugeln befindet und die Symmetrie der Anordnung für zum See offene Zugangsräume und ggfls. auch für geeignete Einbettungsräume für Ballastmaterial sorgt.

Weiter unten wird noch auf einige weitergehende Ausführungsformen und Details zur Konstruktion und Auslegung einer Speicheranlage sowie weiterführende und alternative Überlegungen eingegangen. Zuvor soll jedoch das enorme wirtschaftliche und energetische Potential diskutiert werden.

Energetisches Potential eines zum PSKW umgewandelten Tagebaues

Die Erfindung sieht insbesondere vor, einen bestehenden Tagebau optimal und weitgehend zur Energiespeicherung als "unkonventionelles PSKW" auszubauen, wobei der durch die Rekultivierung vorgesehene See als Oberbecken und eine zu erstellende, geeignete Hohlraumstruktur am Boden des Sees als Unterbecken genutzt werden (vgl. **Fig. 1**).

Das für den Speichervorgang verfügbare Volumen $V_{Sp}$ der Hohlraumstruktur ergibt sich aus dem geometrisch beanspruchten Volumen $V_u$ durch Multiplikation mit einem Füllfaktor $F_{füll}$:

$$V_{Sp} = F_{füll} \cdot V_u \qquad (1)$$

Der Füllfaktor lässt sich aus der für die Stabilität der Behältnisse notwendigen Wandstärke und aus den Lücken zwischen den Behältnissen errechnen. Für die für uns vornehmlich betrachtete Anordnung von Hohlkugeln in hexagonal dichtester Packung (siehe unten) ergibt sich je nach Wandstärke ein Füllfaktor in der Größenordnung von 0.45.

Das Speicherwasser befindet sich nach dem Einspeisen im Oberbecken, also gilt:

$$V_{ob} \quad = \quad V_{Sp} \qquad (2)$$

Die potentielle Energie des Wasserkörpers ist dadurch um

$$\Delta E \quad = g \cdot \rho_w \cdot V_{Sp} \cdot (h_u - h_{ob}) \qquad (3)$$

angestiegen, wobei wir die Erdbeschleunigung g= 9.81 [m/s$^2$] und die Wasserdichte $\rho_w$= 1000 [kg/m$^3$] einsetzen. Streng genommen bezeichnen $h_u$ und $h_{ob}$ die Höhen der Schwerpunkte des Speicherwassers im Unterbecken bzw. des Volumens $V_{ob}$ im Oberbecken. Um uns nicht bei Nebensächlichkeiten aufzuhalten, rechnen wir im Folgenden mit effektiven Werten für die geometrischen Maße des Speichersees, die sich daraus ergeben, dass wir im eigentlichen Arbeitsbereich (also im Unterbecken und im Hubbereich des Wasserspiegels) mit einem rechteckigen Querschnitt arbeiten.

Dann ergibt als Hub des Wasserspiegels einfach zu:

$$Hub = 2 \cdot h_{ob} \qquad (4)$$

Seien nun

$A_{ob}$ = die Fläche des eigentlichen Sees, und
$A_u$ = die Fläche der den Speicherkörper tragenden Rinne, und
H = die Höhe des Speicherkörpers, die wir im gesamten Bereich als einheitlich annehmen.

Dann ergeben sich aus einer einfachen geometrischen Betrachtung und unter Benutzung von GI(1):

$$V_{ob} = A_{ob} \cdot Hub \qquad (5)$$

$$V_{Sp} = F_{füll} \cdot A_u \cdot H \qquad\qquad (6)$$

Mit Gl(2) ergibt sich dann für den maximalen Hub des Sees zwischen Ein- und Ausspeichern:

$$Hub = H \cdot F_{füll} \cdot A_u \, / \, A_{ob} \qquad\qquad (7)$$

Und für die wieder gewinnbare Speicherenergie errechnet sich mit Gl(3) bei einem Turbinenwirkungsgrad $\eta_T$ = 0.90 zu:

$$\Delta E = (g \cdot \rho_w \cdot \eta_T) \cdot F_{füll} \cdot A_u \cdot H \cdot [\, h_u - h_{ob}\,] \qquad\qquad (8)$$

Gl(7) und Gl(8) beschreiben den "landschaftlichen" Aufwand und das energiewirtschaftliche Potential des Speicherbetriebes. Bei Abschätzungen reicht es, für den Füllfaktor einen rechenwert von $Ff\ddot{u}_{ll}$ = 0,45 einzusetzen. Im Folgenden werden wir jedoch noch eine Bestimmungsgleichung für $F_{füll}$ herleiten.

*Der Füllfaktor*

Der Füllfaktor $F_{füll}$, also der Anteil des nutzbaren Speichervolumens am gesamten dafür auszuhebenden Loch, ergibt sich als Produkt zweier Faktoren.

$$F_{füll} = x\_V \cdot x\_Pack \qquad\qquad (9)$$

Der erste Faktor, der Wanddicken-Volumenfaktor x_V, beschreibt das Verhältnis des inneren Volumens der Hohlkugel, also des für die Speicherung verfügbaren Speichervolumens V_Sp, zum gesamten Volumen der Hohlkugel V_a . Der zweite Faktor, der Packungsfaktor x_Pack, berücksichtigt, dass man Hohlkugeln nicht beliebig dicht zusammenpacken kann.

Der zu Speicherzwecken verfügbare Hohlraum, wir nennen ihn das "Nutzloch" oder das Speichervolumen, muss in eine stabile bauliche Hüllstruktur eingebettet und gegen Aufschwimmen gesichert werden. Bei einer Kugelstruktur mit nutzbarem InnenDurchmesser D_i und Wanddicke $d_i$ errechnet man ein nutzbares Speichervolumen von

$$V\_Sp = \pi/6 \cdot D\_i^3 \qquad\qquad (10)$$

und ein äußeres "Brutto" Volumen von

$$V\_a = \pi/6 \cdot (D\_i + 2 \cdot di)^3 \qquad\qquad (11)$$

woraus sich der Wanddicken-Volumenfaktor x_V ergibt:

$$x\_V = V\_Sp \, / \, V\_a = (1 + 2 \cdot di/ D\_i)^{-3} \qquad\qquad (12)$$

Rechnen wir die Gl(12) auf den Außendurchmesser, $D\_a = D\_i + 2 \cdot di$, um, so ergibt sich $x\_V = (1 + 2 \cdot di/ D\_i)^{-3} = [\, D\text{-}i \, / \, (D\_i + 2 \cdot di)\,]^{+3} = [\, (D\_a - 2 \cdot di) \, /D\_a\,]^{+3}$, also:

$$x\_V = [\, 1 - 2 \cdot di/ D\_a\,]^{+3} \qquad\qquad (12a)$$

Für die Wanddicke di der Kugel ergibt sich ein Mindestwert aus der Berechnung der Festigkeit und Stabilität gegenüber dem in der Teufe herrschenden hydrostatischen Druck. Bei einer Kugel von 30 m Innendurchmesser und einem hydrostatischen Druck in 700 m Meerestiefe wurde im Projekt StEnSea (siehe weiter oben) ein Wert di = 3 [m] ermittelt. Dann ergibt sich für diese Umgebung nach Gl(12a) für den Wanddicken-Volumenfaktor

$$x\_V = 0,579 \qquad \text{bei Projekt StEnSea} \tag{12b}$$

Zusätzlich müssen wir berücksichtigen, dass sich Kugeln nicht ohne leere Zwischenräume nebeneinander und übereinander schachteln lassen. Das Verhältnis des von den Kugeln eingenommenen Raum zu dem Gesamtraum eines umschließenden Quaders bezeichnen wir als Packungsfaktor x_Pack. Für einen unendlichen Kristall in hexagonal dichtester Kugelpackung ergibt die Geometrie den Wert (siehe e.g.: /Schmidt 2019/)

$$x\_Pack = 0,74 \tag{13}$$

Das Produkt aus Gl(12b) und dem konstanten Wert Gl(13) ergibt dann gemäß Gl(9) den bereits in Gl(1) definierten Füllfaktor

$$F_{\text{füll}} = x\_V \cdot x\_Pack \tag{9}$$

Für die StEnSea Kugel ergibt sich damit der Zahlenwert des Füllfaktors zu:

$$F_{\text{füll}} = 0,43. \qquad \text{für die StEnSea -Kugel} \tag{14}$$

In geringeren Teufen kommt man mit geringeren Wanddicken di aus. Daher - und wegen der Unsicherheiten- rechnen wir in oft mit einem aufgerundeten Wert des Füllfaktors:

$$F_{\text{füll}} = 0,45 \qquad \text{(Rechenwert für allgemeinere Betrachtungen)} \tag{15}$$

Die Freude an höheren Füllfaktoren bei dünneren Wänden wird jedoch mitunter durch die Notwendigkeit getrübt, einen resultierenden Auftrieb der leeren Hohlkugel durch zusätzlichen Ballast auszugleichen. Im nächsten Abschnitt zeigt sich nämlich, dass die StEnSea- Kugel im Süßwasser gerade ohne zusätzlichen Ballast auskommen kann.

*Auftriebskraft und Ballast*

Einen interessanten Kennwert erhalten wir, wenn wir fordern, dass der Auftrieb der leeren Hohlkugel nicht größer als ihr Gewicht sein soll. Diese Forderung ist optional, denn ein resultierender Auftrieb könnte man auch durch Verankerung oder Ballast kompensieren. Der Auftrieb der leeren Kugel beträgt: $V\_a \cdot g \cdot Rho\_W$ und ihr Gewicht: $(V\_a - V\_Sp) \cdot g \cdot Rho\_Beton$, wobei $Rho\_W = 1000$ $[kg/m^3]$ und $Rho\_Beton = 2400$ $[kg/m^3]$ die Dichten von Wasser und Beton sind. Setzt man beide Kräfte gleich so erhält man unter Benutzung von Gl(12)

$$Rho\_W / Rho\_Beton = 1/ 2,4 = (1 - V\_Sp/V\_a) = 1 - x\_V$$

und schließlich für den Wanddicken-Volumenfaktor des Gleichgewichts zwischen Auftrieb und Schwerkraft, was wir durch den Index "0" als $x\_V_0$ kennzeichnen:

$$x\_V_0 = 1 - Rho\_W / Rho\_Beton = (2400 - 1000) / 2400 = 1,4 / 2,4$$
$$x\_V_0 = 0,5833 \tag{16}$$

Solange der nach Gl(12) berechnete Wanddicken-Volumenfaktor x_V einer Beton-Hohlkugel kleiner als $x\_V_0$ bleibt, bleibt die leere Kugel durch ihr Eigengewicht am Seeboden liegen. Ein Vergleich mit Gl(14) zeigt, dass dies bei der StEnSea Kugel im Süßwasser gerade der Fall ist.

Nun wollen wir diese Zusammenhänge beispielhaft auf den Hambacher Tagebau in seiner jetzigen Planung einerseits und in einer wünschenswerten weiteren Ausbauvariante mit Zielrichtung Speichernutzung andererseits anwenden.

Wir betrachten dabei das Unterbecken als eine Struktur, die sich aus mehrlagigen Schichten von elementaren hexagonal dicht gepackten Hohlkugeln ergibt, und die sich aus der Symmetrie ergebenden Zwischenräume werden genutzt als:

(1.) hydraulischer Zugang zum Obersee (und ggfls. als Revisionsschacht)
(2.) bzw. als Verfüllungsraum zur Auftriebsminderung

Die untersten Schichten und die Hangbefestigung werden bequemerweise im Trockenbau erstellt.

Energetisches Potential am Beispiel der Hambacher Rinne: geplanter Rekultivierungs-See

Aktuell ist nach dem Eintrag in Wikipedia /Wikipedia #Hambacher Tagebau/ für den Tagebau Hambach ein Restsee von 4200 [ha] = 42 [km$^2$] Oberfläche und bis zu 400 m Teufe geplant. Diese Fläche kann wg. der Böschung im Bereich des Hubes des Oberbeckens (siehe $V_{ob}$ in **Fig. 1**) etwas verkleinert werden, damit wir mit senkrechten Begrenzungen rechnen können. Also nehmen wir als Rechenwert:

$$A_{ob} = 40 \text{ km}^2 = 40 \cdot 10^6 \text{ [m}^2] \qquad (21)$$

Eine eigene grobe Ausmessung der Google-Map des Tagebaues Hambach ergibt eine tiefste Sohle, die wir als "Hambacher Rinne" bezeichnen wollen, von $A_u = 4 \cdot 1$ km$^2$. Diese Rinne möge an jeder Stelle eine Teufe von 400 m besitzen. Für das Speicherbauwerk setzen wir eine Höhe H von 130 m an, was etwa 4 Lagen mit dichtest gepackten Kugeln von 30 m Innendurchmesser entspricht. Dann ergibt sich -bei senkrechten Wänden- eine mittlere Teufe $h_u$ des Unterbeckens von (400 - H/2) = 335 [m]. Wir fassen zusammen:

$$A_u = 4 \cdot 10^6 \text{ [m2]} \qquad (22)$$

$$H = 130 \text{ [m]} \qquad (23)$$

$$h_u = 335 \text{ [m]}. \qquad (24)$$

Nach Gl(7) ergibt sich bei einem Füllfaktor von $Ff\ddot{u}_{ll} = 0{,}45$ der Hub im Oberbecken zu

$$\text{Hub} = 130 \cdot 0{,}45 \cdot 1/10 = 5{,}8 \text{ [m]} \qquad (25)$$

und damit eine mittlere Teufe $h_{ob}$ des Oberbeckens von

$$h_{ob} = 2{,}9 \text{ [m]} \qquad (26)$$

Aus diesen Angaben und den weiter oben festgelegten Konstanten ergibt sich nach Gl(8) die (ausspeicherbare) Speicherenergie zu

$$\Delta E = 191 \text{ [GWh]} \qquad (27)$$

Bei dem von uns weiter oben für die vollendete Energiewende zugrunde gelegten zukünftigem deutschen Jahresverbrauch von $Q\_a = 1000$ [TWh/a], was einem mittleren Tagesverbrauch von $Q\_d = 2{,}74$ [TWh/a] entspricht, würde die Speicherkapazität nach Gl(27) nur 7% des Tagesverbrauchs entsprechen; das ist zwar schon fast das 5-fache der heutigen Gesamtkapazität an deutschen PSKW, aber mit etwas großzügigerem Ausbau des Tagesbaugeländes im Hinblick auf eine künftige Verwendung als Rückgrat der Energiewende lassen sich um mehr als eine Größenordnung höhere Kapazitäten erreichen. Das zeigt das Beispiel im nächsten Abschnitt.

Energetisches Potential: Tief Ausgebaggerte und erweiterte Rinne im See

Im nächsten Abschnitt werden wir zeigen, dass es sich lohnen kann mit der vorhandenen Infrastruktur des Braunkohle-Abbaus den Tagebau für die Zwecke des PSKW weiter auszubauen.

Die genehmigte Betriebsfläche für den Tagebau Hambach beträgt 85 km$^2$. Der Restsee, der bisher mit 42 km$^2$ geplant war, könnte also durchaus auf das Doppelte vergrößert werden. Die Geologie der Niederrheinischen Bucht ist gekennzeichnet durch ein bis zu 1300 m mächtiges Sedimentpaket (/Wikipedia #Tagebau Hambach/). Der Speichersee könnte also noch wesentlich tiefer ausgebaggert werden. Genaue Planungsunterlagen zum Hambacher Tagebau liegen uns derzeit nicht vor. Daher beschränken wir uns auf Schätzungen und vorsichtige und grobe Annahmen.

Für unsere zweite Beispielrechnung treffen wir die folgende Wahl:

• Wir setzen eine wesentlich größere Teufe der Rinne von 1000 m an - statt der gegenwärtigen Teufe von 400 m. Außerdem vergrößern wir die Grundfläche der Rinne von den bisher geplanten 4 km$^2$ ganz massiv auf 20 km$^2$, was etwa der Hälfte der Fläche entspricht, die für den geplanten Restsee vorgesehen war.

• Den neuen Gesamtsee teilen wir in zwei Teilbereiche auf. Als eigentliches Oberbecken für das PSKW dient dabei nur eine effektive Fläche von der Größe des früher geplanten Restsees, also 40 km$^2$. Dieses nunmehr nur noch betrieblich zu nutzende Becken wird vom Gesamtsee hydraulisch durch einen Damm abgetrennt und erlaubt daher einen großen Hub seiner Wasserfläche. Die Fläche jenseits dieses Dammes, also der nicht für den Betrieb des PSKW genutzte Teil des Gesamt- See, stellt den als Rekultivierungsmaßnahme versprochenen See zur Freizeitnutzung dar und wird im Bereich der genehmigten Betriebsfläche angelegt. (siehe hierzu weiter unten zum Verfahren zur stufenweisen Errichtung des Groß-PSKW)

• Das Unterbecken bestehe aus 8 Schichten aus Standard-Hohlraumkugeln mit 30 m Innendurchmesser. Hierfür übernehmen wir die Daten aus dem StEnSea -Projekt (siehe weiter oben). Wegen der größeren Teufe ist die Wanddicke etwas stärker als im vorherigen Kapitel und beträgt 3 [m]. Dies wirkt sich auf den Füllfaktor Ffü$_{II}$ aus, den wir nun etwas niedriger ansetzen. Dafür brauchen wir uns aber um einen resultierende Auftrieb der leeren Kugel nicht mehr sorgen. Als Gesamthöhe H des Beckens rechnen wir mit 280 m.

Daraus ergeben sich die folgenden Parameter des PSKW:

$$A_{ob} = 40 \text{ km}^2 = 40 \cdot 10^6 \text{ [m}^2\text{]} \tag{28}$$

$$A_u = 20 \cdot 10^6 \text{ [m}^2\text{]} \tag{29}$$

$$H = 280 \text{ [m]} \tag{30}$$

$$h_u = 860 \text{ [m]}. \tag{31}$$

Nach Gl(7) ergibt sich bei einem Füllfaktor von nun Ffü$_{II}$ = 0,43 der Hub im Oberbecken zu beachtlichen aber immer noch ausbaufähigen und wg. der Umrandung durch den Rekultivierungssee keineswegs abstoßenden:

$$\text{Hub} = 60 \text{ [m]} \tag{32}$$

Nach Gl.(8) ergibt sich die (ausspeicherbare) Speicherenergie zu

$$\Delta E = 4,927 \quad \text{[TWh]} \tag{33}$$

Zur Einordnung: Eingangs sind wir von einem zukünftigen mittleren Tagesverbrauch in Deutschland von Q_d= 2,74 [TWh/a] und einem Kurzzeit-Speicherbedarf von 20 bis 30% dieses Tagesbedarfes ausgegangen. Ein Vergleich zeigt, dass man im Hambacher See ein PSKW mit um eine ganze Größenordnung größerer Kapazität bauen könnte. Man könnte theoretisch also wohl ganz Europa versorgen. Die beliebte Ausrede der Gegner der Energiewende, Deutschland verfüge über keine ausreichenden geographischen Ressourcen für die Kurzzeitspeicherung bei der Energiewende ist daher nichtzutreffend - ja sie ist sogar grundfalsch.

Bemerkung: Da - wie bereits erwähnt - keine Planungsunterlagen zur Verfügung standen, sind die oben genannten Zahlen als vorläufig zu betrachten. Die Erfinder hoffen, dass sich eine Zusammenarbeit mit dem Betreiber des Tagebaues ergibt; dann wird man mit exakteren Vorgaben rechnen können. Allerdings wird das die grundsätzliche Aussage über das gewaltige Kurzzeitspeicher-Potential kaum erschüttern.

Wirtschaftliches Potential pro m$^3$ nutzbarem Hohlraum

Mit dem Tagebau Hambach, dem größten und tiefsten Tagebau in Deutschland, steht bereits ein zur Errichtung von PSKW geeignetes Loch zur Verfügung. Aber darüber hinaus steht auch eine mächtige und erprobte Abbau-Installation bereit, die zu günstigsten Kosten das Loch weiter vergrößern, vertiefen und sonst wie gestalten kann. Bisherige Bestrebungen und Modelle laufen darauf hinaus, nur das sowieso vorhandene Loch einer optimalen Nachnutzung zuzuführen.

Das ist aber nur kurz gesprungen. Es liegt doch nahe, sich die Frage vorzulegen, ob man mit der am Ort vorhandenen, für Erdarbeiten jeder Art und im großen Stil optimalen und bewährten Infrastruktur und den einschlägig erfahrenen Beschäftigten nicht das Tagebau-Loch so erweitern bzw. herrichten kann, dass es noch effizienter und in noch größerem Rahmen für den neuen Betriebszweck "PumpspeicherKraftwerk" aus- und umgebaut werden kann.

Die Zielrichtung ist dabei zweifach: Die Rinne, in der die Hohlkugelspeicher eingebettet werden sollen, kann dazu

- vertieft werden, um höhere Betriebsdrücke und damit eine bessere Ausnutzung des Hohlraumvolumens zu ermöglichen und/oder
- verbreitert werden, um eine noch größere Anzahl von effizient arbeitenden Hohlkugelspeichern und damit eine Kapazitätserweiterung zu erreichen

Das technisch-wirtschaftliche Schlüsselargument liegt hierbei in den geringen Zusatzkosten für die Errichtung eines zusätzlichen Loches auf der Sohle des Tagebaues. Da wir hierfür kein griffiges öffentlich zugängliches Zitat gefunden haben, legen wir zunächst eine etwas holprige, eigene Abschätzung vor und ziehen danach aus dem niedrigen erhaltenen Wert von knapp 20 [€/m$^3$] pro freies Hohlvolumen in der Arbeitsteufe weitrechende Schlüsse.

Was *kostet im Braunkohletagebau die Erzeugung von 1 m$^3$ Loch in großer Teufe H.*

In der von Greenpeace herausgegebenen Broschüre "WAS BRAUNKOHLESTROM WIRKLICH KOSTET" (/Greenpeace 2018/) wird der Marktpreis für Braunkohle auf Basis des Jahresabschlusses 2016 der LEAG (vormals Vattenfall Europe Mining) auf 13,8 €/t abgeschätzt. Bei einer Dichte der Braunkohle von rho_BK = 1250 [kg/m$^3$], - hier gibt es übrigens auch kleinere Werte in der Literatur- ergibt sich daraus ein Braunkohle-Volumenpreis von ca.: 17.5 [€/m$^3$]. Nach Wikipedia /Wikipedia #Braunkohle/ ergibt der Braunkohletagebau ein Volumen-Verhältnis von Abraum zu Kohle von etwa 6,2 zu 1. Leider wird im gleichen Artikel der gleiche Wert auch als Verhältnis der Förder- und Abraummengen in [t] angegeben. Wir wählen daher für den "Lochfaktor", der das Verhältnis des Gesamtloches aus Kohle + Abraum zum reinen Kohlenvolumen angibt, einen runden Rechenwert

$$\text{Loch Faktor} = 6 \qquad\qquad (41)$$

Mit der Förderung von 1 m$^3$ Braunkohle wird also insgesamt ein Gesamtloch von 6 m$^3$ erzeugt. Leider wissen wir nicht genau, wo im Tagebau überall Beiträge zu diesem Gesamtloch entstehen, denn das taube Gestein fällt ja nicht nur in der direkten Umgebung des Förderproduktes, sondern auch in höher liegenden Abraumschichten, deren Beseitigung erst den Zugang zur Braunkohle ermöglicht, an. Im Untertage-Steinkohlebergbau, bei dem zwar totes Gestein aber kein höher liegender Zugangs-Abraum anfällt, kann man von einem Anteil der Abgänge an der Rohförderkohle von ca. 50% ausgehen (/Reuther 2010/, Bild 351, oberes Teilbild). In Anlehnung an diesen Wert nehmen wir als Rechenwert an, dass zu jedem m$^3$ Braunkohle zusätzlich etwa 1 m$^3$ taubes Gestein aus derselben Teufe gefördert wird; es entsteht also in der gleichen Teufe ein Bruttoloch von 2 m$^3$ also setzen wir

$$\text{TaubesGesteinFaktor} = 2 \qquad\qquad (42)$$

Weiter oben wurde dargelegt, dass bei der hexagonal dichtesten Kugelpackung mit einem Füllfaktor von etwa 0,45 zu rechnen ist. Bei einem Wert von ½ würde der Füllfaktor exakt den Effekt des obigen TaubesGesteinFaktor, Gl(42), wieder kompensieren. Angesichts der Grobheit bei der Abschätzung des TaubesGesteinFaktor können wir daher eine anschauliche Aussage abgeben.

Zwischenfazit: Der aktive Braunkohleabbau erzeugt - nach unserer groben Schätzung - für jeden Kubikmeter Braunkohle

- ein Zuwege- Loch von etwa 4 m$^3$ im oberen Bereich.
- ein Loch von etwa 2 m$^3$ in der Tiefe des Tagebaues, welches ein direkt als Speichervolumen einsetzbares Nutzloch von 1 m³ ergibt.

Nach diesen Überlegungen können wir die Frage nach den Kosten eines Speicherloches beantworten.

Fazit: Ein in der Abbauteufe direkt als Speichervolumen einsetzbares Nutzloch kostet ca. 17.5 [€/m³], aufgerundet also rund 20 [€/m³]. Also: Im Vergleich zu dem weiter oben für das Projekt StEnSea dargelegten spezifischen Volumen-Baukosten von 225 € pro m³ eingesetzten Beton (!) fallen die Kosten für die Erstellung des Nutzloches kaum ins Gewicht.

Wenn aber die Erzeugung des Speicherloches so relativ preiswert ist, dann könnte es sogar attraktiv sein, auch ohne Braunkohleförderung alleine für die Speicher-Gewinnung tiefer zu graben. Daher stellen wir uns die Frage: Lohnt es sich überhaupt, schon direkt auf der Sohle zu bauen?

Wir betrachten ein 100 m hohes Unterbecken, welches aus Standard-Hohlkugeln gemäß dem StEnSea -Projekt (siehe weiter oben) aufgebaut ist und auf der aktuellen Sohle der Rinne in 400 m Teufe errichtet wird. Für das Nutzvolumen $V\_Sp$ wird gemäß Gl(12) ein Außenvolumen $V\_a$ eingesetzt mit

$$V\_a \ = \ V\_Sp\,/\,x\_V\,, \quad \text{mit} \quad x\_V = 0{,}579 \tag{43}$$

Der auf das Betonvolumen (V_a-V_Sp) angegeben Einheitspreis von 225 €/m³ kann man mit einem nur von x_V abhängigen Faktor auf einen Bezug auf das Speichervolumen $V\_Sp$ umrechnen. Dann ergeben sich die reinen Baukosten $K\_400$ für das Unterbecken pro m³ zu

$$K\_400 = (V\_a\text{ -}V\_Sp)\cdot 225 \qquad [\,€\,]$$

$$K\_400 = V\_Sp\cdot [(1\text{ - }x\_V\,)\,/\,x\_V\,] \ \cdot\ 225 \qquad [\,€\,] \tag{44}$$

wobei für die "StEnSea Kugel" gilt: [(1 - x_V) / x_V] = 0,728

Nun versenken wir das Unterbecken gedanklich um 100 m nach unten; als Zusatzkosten für diese Baumaßnahme fallen nur die oben erwähnten rund 20 € pro m³ des Speichervolumen $V\_Sp$ an. Wir erhalten also für das Bauwerk auf der größeren Teufe die Kosten $K\_500$ zu

$$K\_500 = \ V\_Sp\cdot ([(1\text{ - }x\_V)\,/\,x\_V]\cdot 225\ +20) \qquad [\,€\,] \tag{45}$$

Damit erhöhen sich die Baukosten für das "eingegrabene" Unterbecken um den Faktor:

$$K\_500\,/\,K\_400 = (225\cdot\ [(1\text{ - }x\_V\,)\,/\,x\_V\,] + 20)\,/\,(225\cdot\ [(1\text{ - }x\_V\,)\,/\,x\_V\,]\ ) \tag{46}$$

$$K\_500\,/\,K\_400 = 1 +\ (20\,/225)\cdot\ [\,x\_V\,/(1\text{ - }x\_V\,)] = 1{,}12 \tag{46a}$$

also nur um 12 %. Andererseits steigt der Speicherinhalt nach Gl(6) um den Faktor

$$x\_h = [\,h_u + 100\text{ - }h_{ob}]\,/\,[\,h_u\text{ - }h_{ob}] = ca.\ 450/350 = 1{,}29 \tag{47}$$

also um 29 %. Das Eingraben kann sich also deutlich lohnen.

Nun könnte man einwenden, die höher gelegenen Kugeln könnten ja mit dünnerer Wand gebaut werden. Das ist grundsätzlich richtig und würde bei Verwendung der allerdings eigentlich nur für dünnwandige Kugeln verwendbaren Kesselformel zu einer Proportionalität der erforderlichen Wanddicke mit dem Druck führen. Allerdings müsste man dann zur Auftriebs-Sicherheit zusätzlichen Ballast anbringen. Außerdem - und das ist das entscheidende Argument - enthält der Einheitspreis von 225 €/m3 vor allem die Kosten für die Schalung und Nebenkosten, und da ließe sich nicht viel einsparen. Spaltet man beispielsweise aus dem Einheitspreis einen Festbetrag von 125 € für die Schalung etc. ab und verringert den Betonaufwand um den Faktor $1/x_h$ dann ergibt eine zu GI(46) analoge Betrachtung unter Beibehaltung der Kosten K_500:

$$K\_500 / K\_400 = (225 / 0{,}728 + 20) / ((125 + 100/x\_h) / 0{,}728) = 1{,}18$$

Der Vergrößerung des Speicherinhaltes um 29 % steht dann also eine Kostenerhöhung um 18 % gegenüber. Auch dies bleibt noch attraktiv, wobei für den zusätzlichen Ballast ja noch keine Kosten angesetzt sind.

Fazit: Es kann sich also lohnen, in der bereits erreichten Teufe mit den vorhandenen Förderungstechnik noch weiter zu graben und neues und tieferes Speichervolumen zu erschließen.

Energetisches Potential pro m³

Im Folgenden vergleichen wir den kumulierten elektrischen Ausspeicherungsstrom aus 1 m³ Speichervolumen mit der einmaligen Stromerzeugung aus der Menge Braunkohle, die bergmännisch mit dem gleichen Aufwand und Kosten gefördert wurde.

Im vorherigen Kapitel haben wir als Fazit festgestellt, dass ein in der Abbauteufe direkt als Speichervolumen einsetzbares Nutzloch ca. 17.5 [€/m³] kostet. Ebenso wurde dort aufgezeigt, dass der geschätzte Braunkohle Förderpreis 13,8 €/t beträgt, was einem Volumenpreis von 17.5 [€/m³] entspricht. Die Produktion von einem m³ Braunkohle und von einem m³ Nutzloch kosten also im Tagebau etwa gleich viel. Wir haben oben mit einer Braunkohledichte rho_BK= 1250 [kg/m³] gerechnet und daher befinden sich in einem m³ Braunkohle 1,25 Tonnen Braunkohle. Für ein modernes Braunkohle Kraftwerk wird als spezifischer Brennstoffeinsatz 0,9 [kg/kWh] angegeben (/Wikipedia #KraffinrerkNiederaußemn, was einem Volumen bezogenen Einsatz von 0,72 [m³/MWh] entspricht. Also: Ein Speicherloch (=Nutzloch) von 1 m³ kostet soviel wie 1 m³ Braunkohle; diese Braunkohle produziert in einem moderne Kraftwerk 1,39 [MWh/m³].

Bei einer Teufe von 500 [m] und einem Turbinen-Wirkungsgrad von 90 % liefert ein Speicherloch 1,24 kWh/m³ $_{hohl}$.

Fazit: Das Speicherloch müsste also 1120 Zyklen Strom ausspeichern, bis es den einmaligen Verbrennungsstrom der Braunkohle erreicht hat. Je nach jährlicher Volllast-Zyklenzahl dürfte das in 5 bis 10 Jahren erreicht sein.

Weitere Ausführungsformen und Details zur Konstruktion und Auslegung

Im Folgenden werden noch einige weitergehende Ausführungsformen und Details zur Konstruktion und Auslegung der erfindungsgemäßen Speicheranlage angegeben; wobei wir die oben begonnene Nummerierung fortführen.

*(6.) Aufweitung der Engpässe*

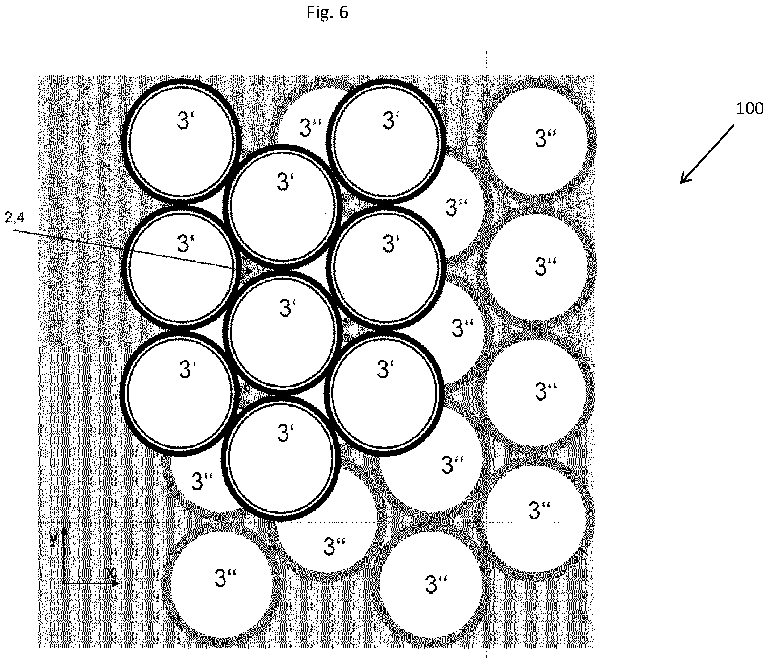

**Fig. 6** zeigt einen Ausschnitt aus **Fig. 4** mit der obersten Schicht von Druckbehältern 3' und der zweit obersten Schicht 3".

Von Bedeutung ist die Form und Größe des Engpasses: In einer bevorzugten Ausführungsform stoßen in jeder Kugelebene die waagerechten Großkreise benachbarter Kugeln an 6 Punkten aneinander. Betrachtet man eine bestimmte Kugel (siehe **Fig. 6**), so ergibt sich an jedem dieser Berührungspunkte mit den Nachbarkugeln ein freies gleichseitiges Dreieck, dessen Seiten Kreisabschnitte sind. Betrachten man die längs einer waagerechten Geraden in x- oder y-Richtung aufeinanderfolgenden derartigen Dreiecke so sieht man, dass sie in zwei Orientierungen A und B vorliegen, die bezüglich der Geraden spiegelsymmetrisch sind.

In der hexagonal dichtesten Kugelpackung sind die einzelnen Kugelebenen identisch, aber benachbarte Kugellagen sind gegeneinander versetzt und erst die übernächsten Kugelebenen liegen wieder deckungsgleich übereinander. Betrachtet man nun die Überdeckung der Dreiecke der unteren Schicht mit den Großkreisen der oberen Schicht, so sieht man, dass die Hälfte der unteren Dreiecke völlig unter einer oberen Kugel liegt und die andere Hälfte der unteren Dreiecke unter einem Dreieck der oberen Schicht liegt, aber die übereinanderliegenden Dreiecke sind von unterschiedlicher Orientierung, d.h. über einem unteren Dreieck der Orientierung "A" liegt in der oberen Ebene ein Dreieck der Orientierung "B". usw.:

In jedes gleichseitige Dreieck lässt sich ein größtmöglicher Kreis einbeschreiben. Diese Kreise ändern sich bei Spiegelung nicht, so dass aus Symmetriegründen alle übereinander liegenden Dreiecke trotz ihrer 2 unterschiedlichen Orientierungen immer an derselben Stelle den gleichen Kreis besitzen. Diese Kreise kann man gedanklich zu einem virtuellen senkrechten Rohr ausdehnen, welches eine völlig freie senkrechte "lichte" Verbindung durch die gesamte Kugelanordnung ergibt. Durch diese virtuelle "Engpassrohr" 4 könnte man beispielsweise einen Gegenstand (z.B. eine nicht zu große Turbine) frei an einem Seil auf den Boden herabsenken.

Da die Dreiecke nur zwei feste Orientierungen annehmen ist der tatsächliche "lichte" Raum durch die Kugelanordnung hindurch sogar noch etwas größer und zu einer Raute "ausgefranzt", wie man aus **Fig. 6** erkennt.

Als Begrenzung für den Transport steht bei streng senkrechter Bewegung die "lichte" Raute zur Verfügung; lässt man aber vor den Engstellen noch eine kleine waagerechte Bewegung oder Drehung zu, so kann man durch die Kugelanordnung alle Gegenstände transportieren, die durch die lichten Dreiecke der einzelnen Kugelebenen passen. Schon aus **Fig. 6** kann man ablesen, dass bei einem Kugelinnendurchmesser von 30 m Gegenstände mit Abmessungen von 4 bis 5 m noch hindurch passen.

Möchte man die Engpassquerschnitte erweitern, ohne irgendwelche Änderungen an der Kugelhülle vorzunehmen, so kann man dies bei der Einbettung durch eine zusätzliche Abstandsschicht aus Füllmaterial zwischen den Kugeln erreichen; diese Abstandschicht kann man dann an den kritischen Engpassstellen wieder lokal abtragen.

Es gibt aber noch weitere Möglichkeiten den Engpass etwas aufzuweiten:

- lokale Abplattung der Kugeln am Engpass, die durch eine konstruktive Verstärkung des Betons an dieser Stelle (z.B. durch Bewehrung, Metallplatten oder -ringe) baustatisch kompensiert wird.
- Benutzung einer zweiten Sorte von Hohlraumkugeln, die einen geringeren Durchmesser als die Standardkugeln aufweisen.
- Weglassen von ausgewählten Kugeln, so dass man in dem dadurch zunächst freigehaltenen Leerraum einen gewundenen Schacht mit dem gewünschten Querschnitt errichten kann. Der nicht funktional genutzte Raum kann dann im Zuge des Fortschreitens der Installation der Kugeln verfüllt werden.

Zusätzlich gibt es auch eine "Software"-Alternative um zu hohe Strömungsgeschwindigkeiten in einer Engpassstelle zu vermeiden: man muss ja nicht alle Pumpturbinen, die einen gemeinsamen und durch Engpassstellen begrenzten Zugang zum oberen Wasserreservoir haben, gleichzeitig mit voller Last betreiben, sondern kann die erforderlichen Wasserströme möglichst gleichmäßig auf alle Zugänge verteilen.

*(7.) Zugänglichkeit der Pumpturbinen*

Die Pumpturbinen sollten vorzugsweise für Wartung oder Austausch über einen hinreichend großen freien Kanal zugänglich bleiben. Dies lässt sich - je nach dem Konzept der Ausstattung mit Pumpturbinen (siehe Punkt (2): autark, oligotark oder zentral) z.B. mit folgenden zwei Konzepten durchführen:

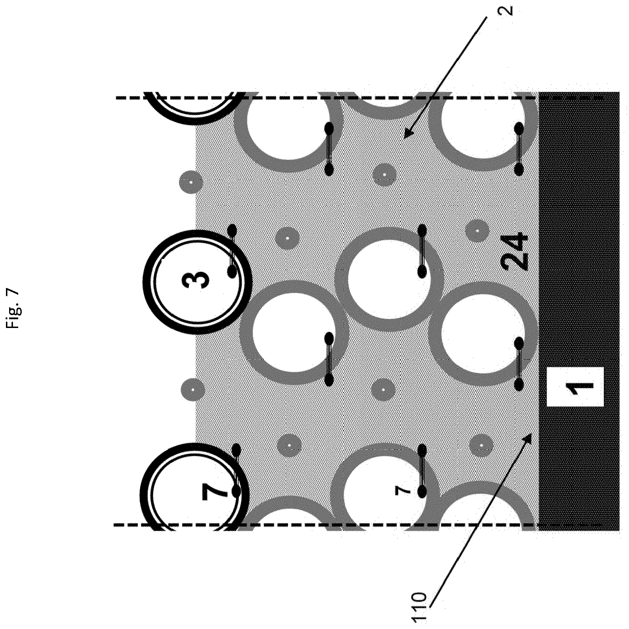

- Die Pumpturbinen 7 werden unten seitlich in und an den tiefsten Punkten der Kugeln angebracht und nutzen als Vorflut einen für mehrere Kugeln zugänglichen, senkrechten und nach oben offenen Schacht 24 (**Fig. 7**). (Autarke, u.U. auch kleine oligotarke PT).
- Gruppen von Kugeln werden über Druckleitungen 6 mit einer für die gesamte Gruppe zuständigen größeren Pumpturbine 77 verbunden (oligotarke / zentrale Pumpturbine). Diese Druckleitungen können direkt von der Kugel über eine externe eigenständige Sammelleitung 6 führen (**Fig. 8a**), wobei es auch möglich ist mehrere Kugeln seriell über kurze Verbindungsleitungen von Kugel zu Kugel (d.h. zwischen benachbarten Kugeln) zusammenfassen und dann z.B. die unterste Kugel einer Serie an die Pumpturbine anschließen (**Fig. 8b**). Man beachte, dass in **Fig. 8a** und

**Fig. 8b** unterschiedliche Elemente zur Versorgung einer Pumpturbine zusammengefasst sind.

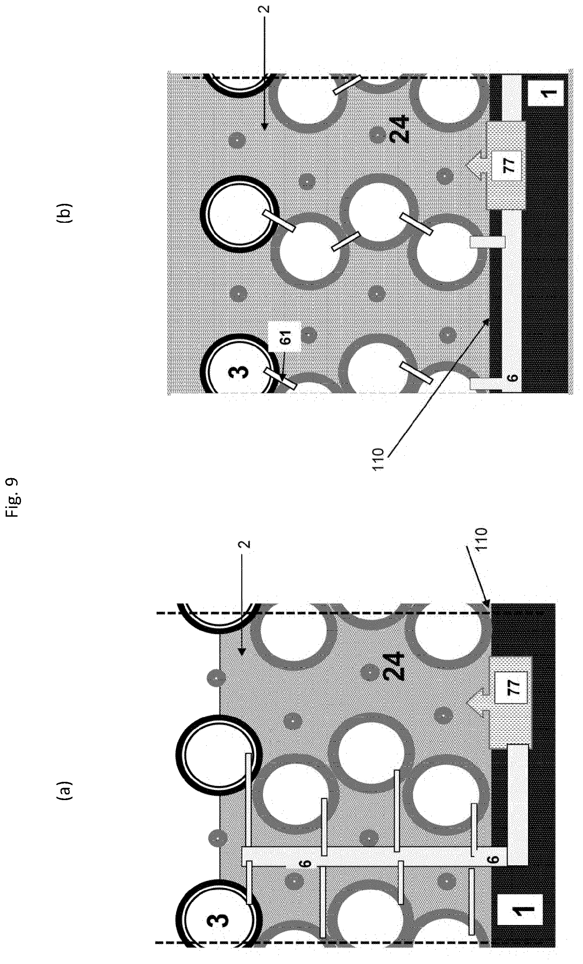

Selbstverständlich sind auch weitere Variationen der Zuordnung von Speicherelementen und oligotarken Pumpturbinen möglich; ein Beispiel für eine umfangreiche Zusammenfassung ist in **Fig. 9a** zu sehen. Ähnlich kann dies natürlich auch über direkte Kugel-zu-Kugel-Verbindung erfolgen, wie in **Fig 9b** zu sehen. Auch weitere Mischformen sind möglich.

Allgemein kann es sich demnach anbieten, dass die Druckbehälter 3 in der trockenliegenden Bodenvertiefung 100 regelmäßig in Schichten nebeneinander und/oder übereinander angeordnet werden (z.B. in hexagonal dichtester Kugelpackung), wobei zwischen den Druckbehältern 3 Freiräume 2 verbleiben (welche zumindest teilweise als nicht-zugeschütteter Freiraum 24 verbleibt) der sich vorzugsweise bereichsweise von oben bis zum Untergrund 110 durch alle Schichten erstrecken (lichte Kanäle 4). Ein Druckbehälter 3 kann dabei z.B. mit einer eigenständigen Turbine 7, Pumpe 7 und/oder Pumpturbine 7 ausgestattet werden, welche z.B. in dem Druckbehälter 3 eingebaut sein kann, z.B. unten und/oder seitlich. Alternativ oder zusätzlich können Druckbehälter-Gruppen vorgesehen sein, die zwei oder mehr über Druckleitungen 6, 61 miteinander verbundene Druckbehälter 3 umfassen und mit einer gemeinsamen Turbine 77, gemeinsamen Pumpe 77 und/oder gemeinsamen Pumpturbine 77 ausgestattet sind. Dabei können unmittelbar benachbarte Druckbehälter 3 über eine direkte Druckleitung 61 (kurzes Verbindungsrohr von Kugel zu Kugel) verbunden werden. Ferner können auf oder im Untergrund 110 Bunker mit gemeinschaftlicher Turbine, Pumpe und/oder Pumpturbine 77 errichtet werden und Druckleitungen 61, 6 von den Speicherkugeln 3 dorthin gelegt werden.

*(8.) Einbettung und Sicherung gegen Auftrieb*

(8a) Auf der Sohle der Rinne kann - noch im Trockenzustand - eine erste Lage der SpeicherGrundzellen (also der Hohlkugeln) in dichter Packung abgelegt werden.

(8aa) Zur Stabilisierung und Absicherung gegen Auftrieb können diese Elemente dann mit Sand, Kies oder Steinen - was immer vor Ort verfügbar ist - eingebettet und/oder "eingeschlämmt" werden. Vorzugsweise erfolgt dies zunächst nur bis zu der Höhe, auf der eine zweite Lage Hohlkugeln abgesetzt werden kann. Durch diese Einbettung kann eine Beschwerung und ein Festsaugen der Hohlkugeln erzielt werden.

(8b) In den Mulden zwischen den Kugeln der untersten und bereits teilweise eingebetteten Lage kann entsprechend versetzt eine zweite Kugellage eingebracht werden. Hierbei können durch Rohre (u.U. auch elastische Rohre) die An- und Abströmwege zu den Pumpturbinen in der untersten Lage freigehalten werden. Nun können entsprechend dem Schritt (8aa) die Hohlkugeln und Rohre durch Ballaststoffe eingebettet werden.

(8c) In gleicher Weise wie in Schritt (8b) können weitere Lagen mit Hohlkugeln ausgebracht und eingebettet werden.

(8d) Möchte man zusätzliche Kugeln noch oberhalb der Oberkante der Rinne ausbringen, so können diese Hohlkugeln eine eigene Auftriebssicherung erhalten; z.B. entweder durch Eigengewicht (Schalendicke) oder zusätzlichen Ballast.

Die Einbettung der Kugeln dient u.a. auch der Druckverteilung bei der Stapelung der Hohlkugeln. Da die Einbettung in der (berandeten) Rinne erfolgt, kann man einfachen Sand benutzen. Wegen der Wände der Rinne kann er nicht wegtreiben.

*(9.) Generatorbetrieb beim Auffüllen (z.B. des Hambacher Sees)*

Während der sich u.U. über viele Jahre erstreckenden Auffüllung eines Tagebaus (z.B. Hambacher Tagebaues) zum See kann ein Teil der Pumpturbinen als Stromgenerator genutzt werden. Hierbei kann z.B. das vom Rhein (oder sonst woher) kommende Zulaufwasser in die Turbinen geleitet werden. Das Ausströmen aus der Hohlkugel kann beispielsweise durch einen eigenständigen Ablaufstutzen, der dann später wieder verschlossen wird, erfolgen. Alternativ hierzu kann man z.B. auch eine (oder auch viele) oligotarke Einheitszelle einsetzen und den Zulauf in einer ersten SpeicherGrundzelle und den Ablauf in einer zweiten SpeicherGrundzelle anordnen.

*(10.) Einsatz der vorhandenen Infrastruktur des Tagebaues:*

Für Erdarbeiten stehen vorzugsweise die vorhandenen großkalibrigen Maschinen des zu Ende gehenden Braunkohle-Tagebaues zur Verfügung. Diese kann man zur Aushebung der Rinne, weiterer Abstufungen des Seebodens, Umlagerungen im späteren Seebett und zur Auffüllung der Hohlräume zwischen den Kugeln einsetzen.

*(11.) Ausweitung der Rinne, Steilheit*

Mit den vorzugsweise vorhandenen großkalibrigen Maschinen (siehe (10.)) kann gegen Ende des Tagebaues und noch vor der Befüllung des Sees der Tagebau, also z.B. die Hambacher Rinne, auch in ihrer Grundfläche erweitert werden. Diese Baumaßnahmen können teilweise mit einer weiteren Braunkohleförderung verknüpft werden, sie sollten jedoch auch mit der eigenständigen Zielsetzung "Herrichtung der möglichst großflächigen Speicher-Rinne" erfolgen.
Die gesamte Rinne kann bis zu ihrem Rand mit Speicherkugeln belegt und im Zuge dieser Installation in Teilbereichen mit Aushubmaterial aufgefüllt werden. Dadurch ergibt sich eine Befestigung des Hanges gegen jede Art von Abrutschen - auch nach der Befüllung des Sees mit Wasser.
Während der Bauphase kann man mithilfe der Kugeln stellenweise auch provisorische Stützvorrichtungen errichten. Dies erlaubt eine ungewöhnlich steile Form der Rinnenwand im Endausbau.

Weiterführende / alternative Überlegungen

*Begrenzung des Speicherhubs im Oberbecken*

Der Hambacher See wird zwar nach bisheriger Planung volumenmäßig nach dem Bodensee der zweitgrößte See Deutschlands werden, aber das Potential des PSKW ist so groß, dass es zu einem erheblichen Wasserstands-Hub an der Seeoberfläche kommen kann. Will man diese verringern, so kann man ins Auge fassen:

*(12.) Gesamte Seenplatte als Oberbecken*

Durch Einbindung benachbarter Tagebaue kann eine hydraulisch verbundene Seenplatte geschaffen werden, so dass der Wasserspiegel der Seenplatte gemeinsam abgesenkt oder angehoben werden kann. Durch Schleusen oder steuerbare Schieber kann der Speicherhub der verschiedenen Seen unterschiedlich hoch eingestellt werden, so dass verschiedene Nutzungsarten der einzelnen Seen oder auch kleine Unterschiede in den Niveaus der verschiedenen Seen berücksichtigt werden können.

*(13.) Der Rhein als weiteres Oberbecken*

Der Rhein liegt ca. 40 m über NN und damit etwa 60 [m] unter dem Pegel des vollgefüllten Hambacher Sees nach bisheriger Planung. Die Teufe der SeeEi-Installation in der Hambacher Rinne von (gegenwärtig) 400 m liegt damit also immer noch 340 m unterhalb des Rheines. Zur Befüllung des Hambacher Sees wurde bereits vorgeschlagen, Wasser aus dem Rhein zu benutzen. Würde man gleich einen groß dimensionierten Stollen zum Rhein bauen und gleichzeitig auch den Hambacher See in der Fläche verkleinern und etwa 60 m tiefer legen, dann wären Hambacher See und Rhein dauerhaft hydraulisch verbunden und beide könnten gemeinsam als Oberbecken des PSKW dienen.
Bei einer kräftigen hydraulischen Verbindung zwischen beiden Vorflutern ergäbe sich eine Pufferung der Pegelschwankungen, so dass der Pegelhub des Hambacher Sees kleiner sein könnte oder zumindest nicht über längere Zeit extrem tief liegen müsste.
Wollte man allerdings das gesamte Potential der Hambacher Rinne über einen Rheinstollen bedienen, so müsste man ungewöhnlich große Stollenquerschnitten vorsehen. Man beachte, dass zur Füllung des Hambacher Sees, die sich ja über Jahre oder gar ein Jahrzehnt erstrecken soll, nur ein vergleichsweise kleiner Querschnitt benötig wird.

*"Bergbauliche" Erschließung der PT-Stationen durch Versorgungsstrecken 67*

Oft führt es weiter, ein Problem von einer völlig anderen Seite her anzugehen. Wir fragen uns nun: kann man die Zugänglichkeit zu den Pumpturbinen statt von oben auch von der Seite her bewerkstelligen?
Der Seeboden 1 liegt ja zunächst trocken, ist frei zugänglich und mit großem und schwerem Gerät bearbeitbar. Bezugnehmend auf **Fig. 10** können wir also die PT-Bunker durch ein geeignetes Streckennetz 67 erschließbar machen, und ggf. zusätzlich einen tiefen Schacht 5 bis zur späteren Sohle des Sees niederbringen (vgl. **Fig. 11**). Dann kann man von einer PT-Station 77 zum freien See 0 ein Rohr 44 vorsehen, das dem Wassertransport dient, aber nicht mehr zwingend als Zugang für Wartung und Instandsetzung zu dienen hat. Allgemein kann ein Verbindungsrohr bzw. ein als Schacht 44 ausgebauter Zwischenraum 2 zwischen gemeinsamer Pumpe/Turbine/Pumpturbine 77 und freier See 0 vorgesehen sein. Später, nach der Flutung des Sees, funktioniert das dann wie eine bergmännische Erschließung von Stationen in einer Sohle: Die Strecken enthalten die Stromleitungen und die Zufahrt für Material und Personal und sind - wie in einem Bergwerk - über eine (oder auch mehrere) Schächte 5 mit der Außenwelt verbunden (**Fig. 11**). Insbesondere kann eine befahrbare Strecke 67 vorgesehen sein, die im Seeboden 1 verläuft und die PT-Stationen 77 mit einem zentralen Versorgungs- und/oder Personen Schacht 5 verbindet.
Der Schacht 5 stellt eine Außenanbindung einer oder mehrerer Strecken 67 bereit; dies kann neben einem Versorgungs- und Personenschacht auch durch eine steile aber noch befahrbare Tunnelröhre realisiert werden. Statt eines Schachtes 5 kann der Zugang zum Streckennetz 67 auch als befahrbare und wasserdicht übertunnelte Bergstraße am Hang des Sees verlaufen und bereits lange vor der Flutung des Sees im Trockenen errichtet werden. Dann kann er auch in der Bauzeit der PSKW -Anlage eingesetzt werden.

*Nachträgliche Erweiterung "in situ" durch autarke Speicherelemente 30*

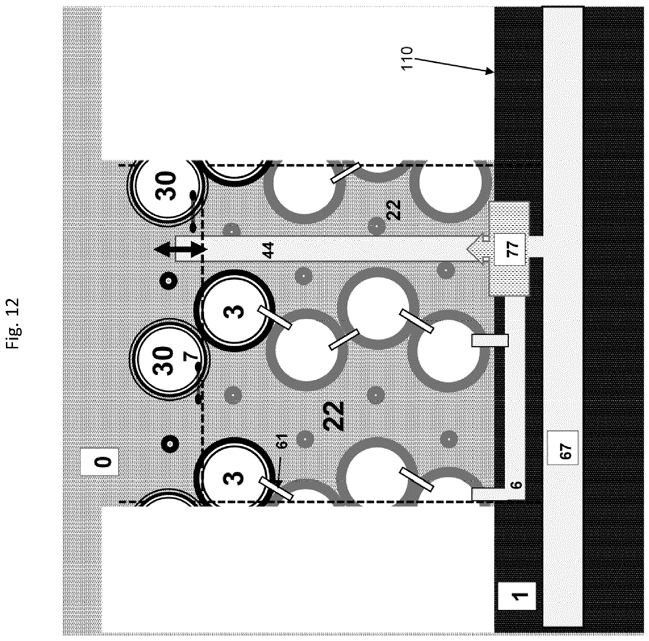

Angenommen, eine PSKW-Anlage, z.B. wie in **Fig. 10** dargestellt, ist bereits in Betrieb und soll nun bei gefülltem See erweitert werden. Dies lässt sich bewerkstelligen, indem auf die bereits angeordneten, am Untergrund befindlichen, Druckbehälter 3 weitere Druckbehälter 30 durch Absenken aufgelagert werden. Insbesondere können auf die vorhandene Anlage in die bereits vorhandenen Mulden (sozusagen "epitaktisch") autarke Druckbehälter 30 (Hohlkugeln) aufgelagert werden (**Fig. 12**). Elektrisch kann man die autarken Speicherelemente zunächst auf der Oberseite des Unterbeckens zusammenfassen und an einer oder mehreren Stellen- z.B. unter Mitbenutzung von Verbindungsrohren 44 der bestehenden Anlage- auf die Strecke 67 herunterführen. Es empfiehlt sich die elektrische Anbindung an die Strecke 67 bereits bei der "trockenen" Installation der Speicheranlage vorzubereiten oder schon vorzunehmen.

*Verfahren zur stufenweisen Errichtung des Groß-PSKW*

Der größte deutsche Braunkohletagebau hätte das Potential, mehr als 10.000 Hohlraumspeicher als Unterbecken für ein zusammengefasstes Groß-PSKW aufzunehmen. Da will man unter Umständen nicht lange warten, bis der Tagebau abgeschlossen ist, dann die Unterstruktur einbauen und alle Hohlraumkugeln installieren, anschließend den See füllen und dann erst nach vielen Jahren das PSKW in Betrieb nehmen.

Es gibt jedoch ein elegantes Verfahren, um einen Teil der Anlagen früher zu errichten, ausgiebig zu testen, abschnittsweise weiter auszubauen und auch ggfls. noch vor der Einstellung der Kohleförderung schon in Betrieb zu nehmen. Bei einem derartigen Großprojekt kann dieses langsame, durch Erfahrung und technische Verbesserungen perfektionierbare Verfahren erwünscht sein.

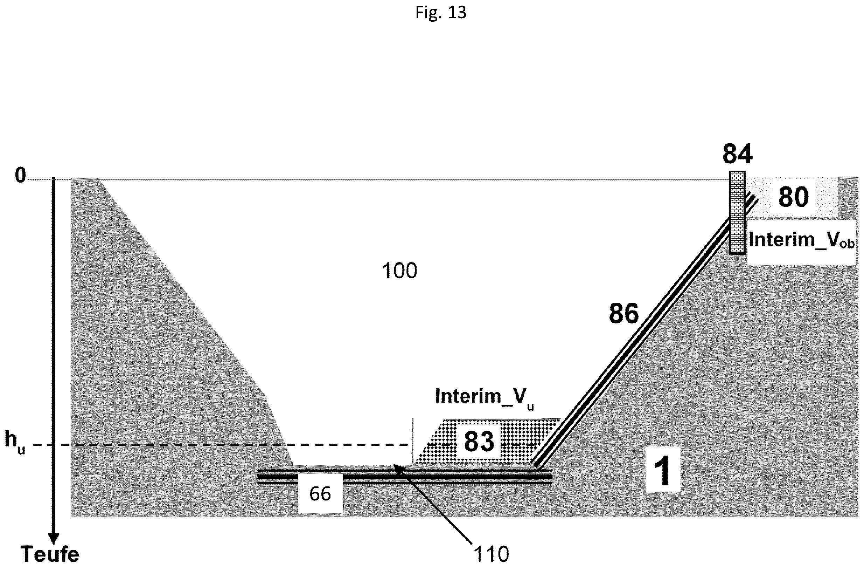

Der einfache Grundgedanke, den es hierbei auszunutzen gilt, besteht in Folgendem: Das aufwendige druckfeste Unterbecken mit seinen eingebauten Pumpturbinen muss nicht unbedingt mit dem später vorgesehenen gesamten Wasserkörper des Rekultivierungssees als Oberbecken betrieben werden. Im Grunde kann man auch jedes andere verfügbare, große oder kleine Becken an der Oberkante des Tagebaues hierfür einsetzen, sofern man nur die durch den See später intrinsisch gegebene hydraulische Verbindung durch vorläufige Druckrohre 86 ersetzt (**Fig. 13**).

In Betracht kommt z.B. eine Verfahrensweise mit einem oder mehreren der folgenden Verfahrensschritte.

1. Insbesondere in der Uferzone des späteren Sees (z.B. Hambacher Sees) errichtet man ein Interim-Oberbecken 80, das durch einen Damm 84 (Staumauer, Beckenmauer) gegenüber dem jetzigen Tagebauloch abgetrennt ist.

2. Man bebaut z.B. zunächst nur einen kleinen Teil der schon ausgebeuteten Rinne (Teilweise errichtetes See-Ei-Unterbecken 83) und schreitet ggf. danach weiter voran. Mit anderen Worten werden für die Interimslösung die bereits angeordneten Druckbehälter 3 über eine Druckleitung 86 mit einem ein vorläufiges oberes Reservoir bildenden von der Bodenvertiefung 100 abgegrenztem Behälter 80 oder Becken 80 verbunden. Es wird also insbesondere eine Druckrohrleitung als hydraulische Verbindung zwischen Interims-Oberbecken und den bereits angeordneten Druckbehältern 3, d.h. den ersten Bauabschnitten des SeeEi-Unterbeckens hergestellt. Beispielsweise kann der "lichte geometrische Engpass Schacht 4" im "Freiwasser-Zugangsraum 24" durch ein internes Druckrohr ersetzt und an ein Interim-Druckrohr 86 angeschlossen werden, welches bis zum vorgenannten Interim-Oberbecken (siehe 1.) verläuft. Man kann z.B. eine Einheit aus mehreren hydraulisch gekoppelten Hohlraumkugeln mit oligotarker Pumpturbine erstellen, man kann aber auch nur eine einzelne autarke Kugel mit eingebauter Pumpturbine zu Testzwecken an eine derartige Interim-Druckleitung anschließen.

3. das Interim-Oberbecken 80 kann so bemessen werden, dass es das Speicherwasser der zunächst geplanten Unterbecken aufnehmen kann, es kann jedoch bei deren weiterem Zubau auch ausgeweitet werden. Noch während des aktiven Tagebaues kann das so erstellte Interim-PSKW nicht nur getestet, sondern auch schon kommerziell betrieben werden ("Interimsbetrieb").

4. Nach Ende des Kohle-Abbaus und weiterem Ausbau des Tagebauloches zu seiner endgültigen Form können im gesamten Planungsbereich die weiteren Unterbecken errichtet bzw. Druckbehälter angeordnet werden. Dann kann die Bodenvertiefung gefüllt werden, um einen künstlichen See zu bilden, der als endgültiges oberes Reservoir das vorläufige ersetzt. Während der Füllzeit kann der bereits mit dem Interim-Oberbecken verbundene Teil der Unterbecken weiter wie bisher betrieben werden.

5. Wenn der ganze See mit Wasser gefüllt ist, kann die Interim Rohrverbindung 86 gelöst werden. Der bisher dem Interim-PSKW zugeordnete Teil des Unterbeckens kann dann in gleicher Weise wie die späteren Installationen erfindungsgemäß als "SeeEi" genutzt werden.

6. Das Interim-Oberbecken 80, das ja vom eigentlichen "Arbeits-See" durch den Damm 84 abgetrennt ist, kann z.B. (später) als Rekultivierungssee für Freizeitaktivitäten und dgl. genutzt werden (Freizeitsee). Man kann beispielsweise wie bei einem großen "infinity pool" bis zur Staumauer rudern (oder auch schwimmen) und einen Blick auf den Arbeits- See werfen.

7. Der Arbeits-See, der dem entspricht was bisher als Oberbecken oder freies Seewasser 0 bezeichnet wurde, kann wg. der hydraulischen und der Zugangs-Trennung vom Rekultivierungssee (dem früheren Interim-Oberbecken 80), nun im Wesentlichen nach technischen Gesichtspunkten betrieben werden und z.B. einen ungewöhnlich großen Hub aufweisen.

Je nach Größe und saisonal unterschiedliche Benutzungsart des Interim-Oberbeckens könnte man natürlich auch dieses für eine bescheidene und kontrollierte Absenkung einsetzen; auch in der Nordsee gehen die Leute ja trotz Ebbe und Flut baden.

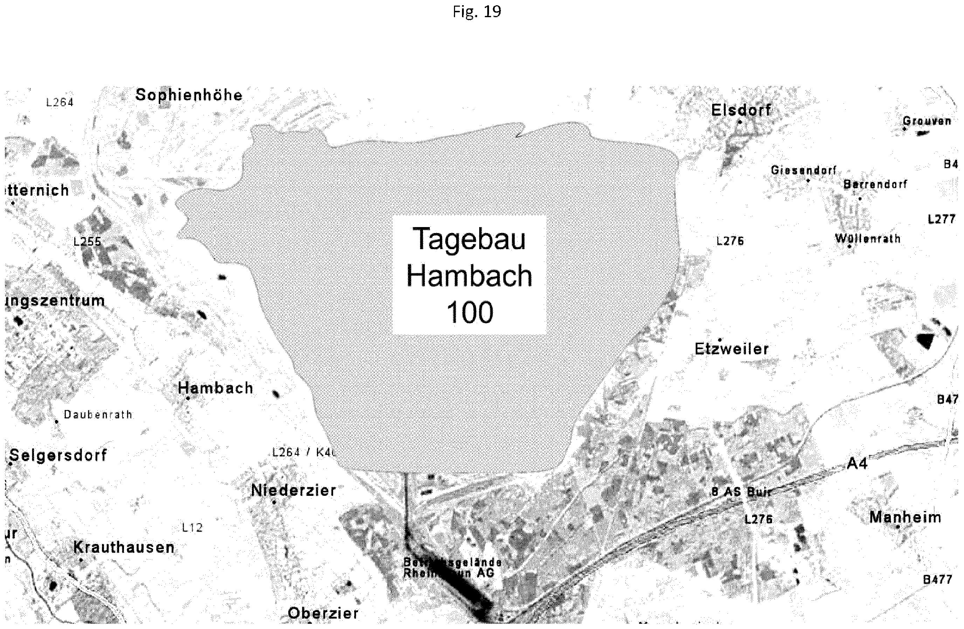

In den **Fig. 19** bis **Fig. 22** sind nochmals verschiedene Stadien bei der Errichtung eines Unterwasser-PSKW in einer Bodenvertiefung 100, hier dem Tagebau Hambach gezeigt. **Fig. 19** zeigt den Tagebau Hambach 100 in trockenliegendem Zustand vor Baubeginn des PSKW.

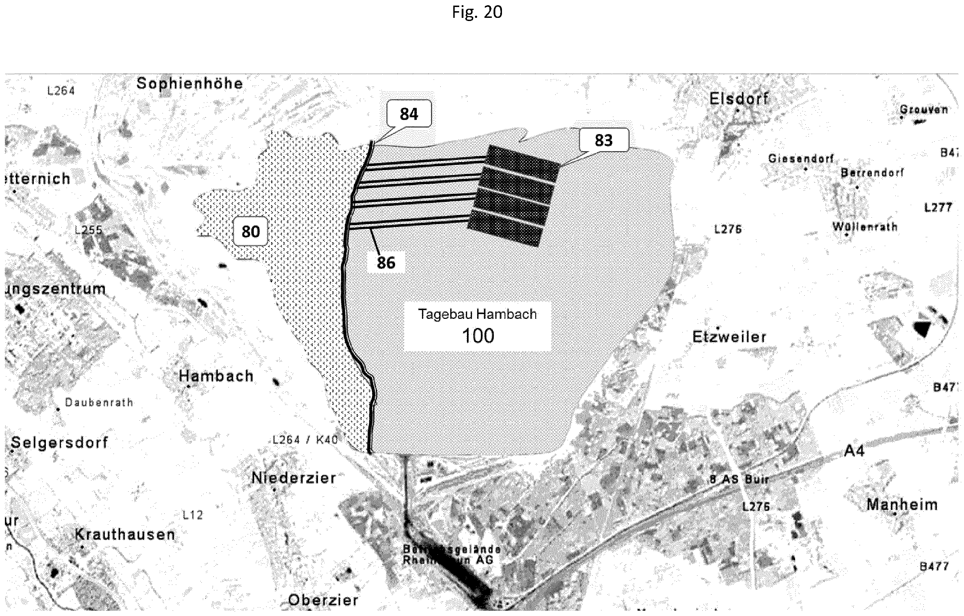

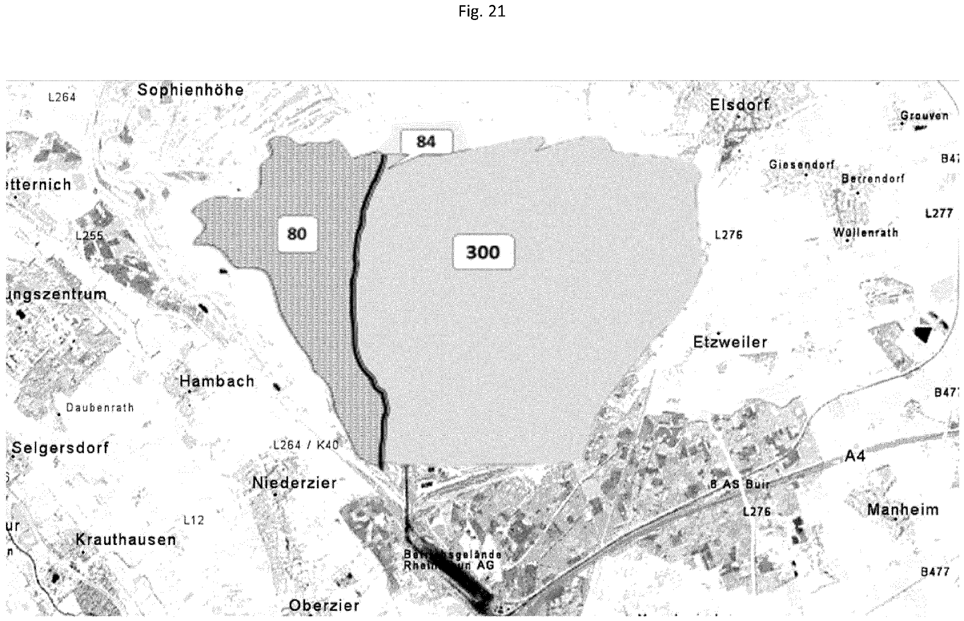

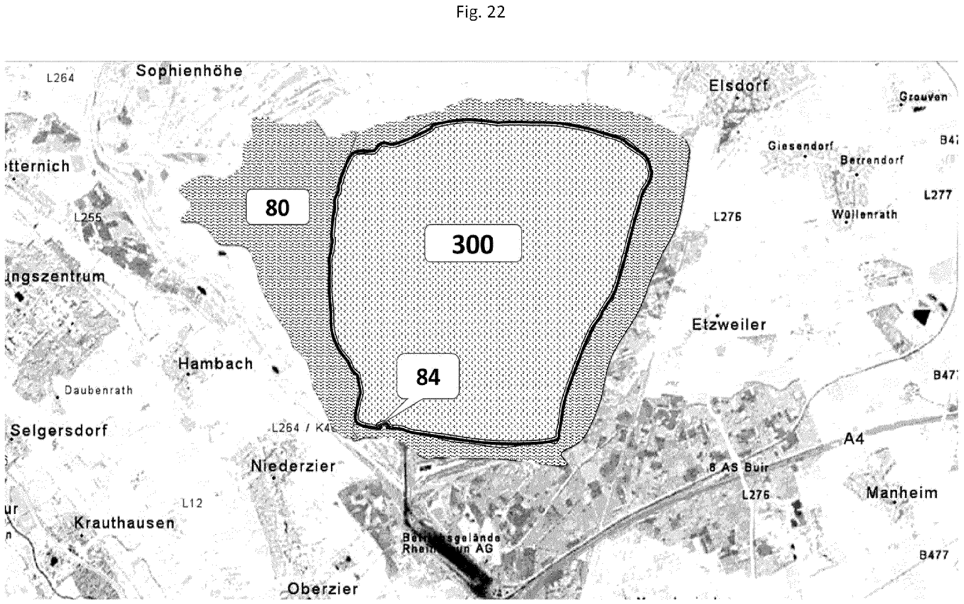

In **Fig. 20** wurde in der Bodenvertiefung 100 zumindest teilweise ein unteres Reservoir 83 (mit Hohlkörpern) errichtet und über Druckleitungen 86 (Rohrverbindungen im Zeitraum der Montage) mit einem vorläufigen oberes Reservoir 80 (Interimssee/Montagesee) verbunden. Das vorläufige obere Reservoir 80, welches höher liegt als das untere Reservoir 83, befindet sich ebenfalls in der Bodenvertiefung 100, insbesondere am Rand der Bodenvertiefung 100, und ist durch eine Abgrenzung 84 (Damm/Trenndamm/Beckenwand) von dem Rest des Tagebaus abgegrenzt. Aus Kostengründen kann es erwünscht sein, das der Interimssee 80 sowie der Damm 84 verhältnismäßig niedrig sind. Der Damm 84 kann vorzugsweise auf einer Höhenlinie der Bodenvertiefung durch die Bodenvertiefung 100 (hier das Hambacher Loch) errichtet werden, um diesen sicher zu gründen. In **Fig. 20** ist der Damm 84 etwa auf einer Terrasse des Tagebaus errichtet, dadurch kann der Interimssee 80 eine druckmäßig gewünschte konkave Form erhalten und sich schön der Landschaft anpassen. In dem in **Fig. 20** gezeigten Stadium kann das bereits teilweise errichtete untere Reservoir 83 bereits genutzt und/oder getestet werden, um Erfahrungen für den weiteren Aufbau des unteren Reservoirs 83 zu sammeln. Dabei erfährt das vorläufige obere Reservoir 80 einen Pegelhub. Bezugnehmend auf **Fig. 21** kann - sobald das untere Reservoir fertiggestellt ist - die Bodenvertiefung 100 geflutet werden, so dass das untere Reservoir am Untergrund verbleibt und durch den künstlich gebildeten See bedeckt ist, welcher das endgültige obere Reservoir 300 mit Pegelhub bildet. Die Druckleitungen 86 zum Interimssee 80 können gelöst werden. Schließlich kann der Interimssee 80 in einen Freizeitsee verwandelt werden, welcher keinen Pegelhub mehr aufweist. Die Dammkrone kann in eine z.B. auch für Radfahrer beliebte Uferpromenade zwischen Freizeitsee 80 und Arbeitssee 300 verwandelt werden. **Fig. 22** zeigt eine Ausführungsform in welcher die Abgrenzung 84 umlaufend in der Bodenvertiefung an deren Rand errichtet wird, so dass das vorläufige obere Reservoir 80 (bzw. ggf. später der Freizeitsee) ringförmig um den Teil der Bodenvertiefung verläuft, in welchem das untere Reservoir errichtet wird.

*Verfahren zum seegestützten Ausbringen der Hohlkörper*

Im Vergleich zum Ausbringen eines Meerei auf hoher und tiefer See kann die Installation eines Hohlkugelspeichers in einem trockenen bzw. zu flutenden Tagebau deutlich weniger aufwendig erfolgen. Eine Möglichkeit besteht z.B. in einer Vorgehensweise mit einem oder mehreren der folgenden Verfahrensschritte:

(1) Errichtung der Installationstrecken 66 und Vorbereitung des Baugrunds.
(2) Errichtung der 1. Ebene der SeeEier vornehmlich als Bauwerk vor Ort. Installation der Verbindungen zu den Installationsstrecken 66. Die Baustellenzufahrt erfolgt z.B. über die noch unbebaute Sohle. Man kann also vorgehen wie bei der Bebauung eines neuen Siedlungsgebietes.
(3) Fluten der Rinne und der Hohlkörper mit Wasser.
(4) Weiteres Fluten mit Überdeckung der baulichen Anlage, so dass aus der Rinne eine "schiffbare" Wasserstraße wird.
(5) Errichtung eines zentralen Bauplatzes für die Serienproduktion der Hohlkörper als Werft am Rande der Wasserstraße.
(6) Stapellauf der ggfls. durch seitlich angebrachte Schwimmkörper ("Luftkissen") schwimm fähig gemachten Hohlkörper.
(7) die schwimmenden Hohlkörper werden vor Ort geschleppt und dort durch gesteuerten Einlass von Wasser langsam und sanft gesteuert so versenkt, dass sie in der richtigen Orientierung in den vorgesehenen Mulden der unteren Etage aufliegen.
(8) in analoger Wiederholung der Schritte 4 bis 7 wird die zweite und danach ebenso die weiteren Stockwerke des Unterbeckens erstellt.

Bemerkung zu Schritt (2): Alternativ zu Schritt (2) könnte bereits die unterste Hohlkörper-Ebene nach geeigneter Vorbereitung des Baugrundes im Schwimmverfahren analog zu den Schritten 3 bis 7 ausgebracht werden.

Weitere Bemerkung: Die Rinne kann durch Erdwälle (und/oder andere geeignete Maßnahmen der Baustellen-Einrichtung) in Bauabschnitte unterteilt werden. Für das Leerpumpen und Auffüllen stehen die Pumpturbinen der bereits installierten Anlagen zur Verfügung (siehe dazu weiter oben).

Anmerkung zu den oben genannten Kalkulationsbeispielen: Diese hier beschrieben Kombination aus schwimmender Anfahrt vor Ort und "trockener" hydraulischer und elektrischer Anbindung sehen wir im Vergleich zu dem entsprechenden Aufwand bei einer Meerei-Installation auf hoher See als geringfügig an. Daher haben wir die einkalkulierten hohen Installationskosten des StEnSea- Projektes (siehe oben) nicht in unsere grobe Kostenschätzung übernommen.

Bemerkung zum Kugeldurchmesser: Der Durchmesser einer Hohlkugel wird durch die Ausmaße der Herstellungswerft und durch Restriktionen beim Transport von der Werft zur Andockungsstelle begrenzt. Durch die oben beschriebene, wassergestützte Methode zur Ausbringung des Hohlkörpers mit ihrem Wechsel von "seichter" Versenkung nach der schwimmenden Anfahrt und "trockener" elektrischer (und ggfls. auch hydraulischer) Anbindung erscheint es möglich, richtig große Kugeln zu bauen. Im Stensea-Projekt hatte man schon den Mut zu 30m-Kugeln, jetzt könnte man vielleicht noch mutiger sein.

Große und kleine Kugeln: Dann wird es erwägenswert, auch eine Konstruktion aus Kugeln mit unterschiedlichem Durchmesser in Betracht zu ziehen. Dies wird interessant, wenn bei intrinsisch Auftriebs-kompensierten Kugeln geeignete kristallographischen Lücken eines Grundgitters aus großen Kugeln durch kleine Kugeln gefüllt werden. Dies erhöht die Packungsdichte und führt dadurch zu einem höheren Füllfaktor Ffüll des gesamten Unterbeckens.

*Verfahren zur Energiegewinnung beim Befüllen des Sees.*

Das oben beschriebe Verfahren zur stufenweisen Errichtung des Groß-PSKW macht vorzugsweise Gebrauch von einer Infrastruktur bestehend aus Interim-Oberbecken 80, Druckleitung 86 und bereits installierten mit Pumpturbinen ausgestatteten Speicher-Einheiten 83 im Unterbecken. Es sind damit die technischen Vorrichtungen bereits vorhanden, mit denen man auch das Speisewasser zur Befüllung des Rekultivierungssees über die vorhandenen Turbinen laufenlassen kann. Ein einfacher Weg wäre eine Befüllung und Entleerung der bereits installierten SeeEi-Speichereinheiten in einem periodischen Batchbetrieb, der aus drei Stufen bestehen kann:

- Das Speisewasser wird zunächst in das Interim-Oberbecken 80 geleitet.
- Von dort fließt es über die Druckleitung 86 in bereits installierte SeeEi-Einheiten 83, und zwar solange bis diese gefüllt sind.
- das Wasser wird aus den bereits installierten SeeEi-Unterbecken 83 in den erst mit zunehmender Füllung langsam ansteigenden See gepumpt.

Wenn mehrere SeeEi-Einheiten bereits installiert sind kann das Verfahren quasi kontinuierlich ablaufen, indem die Befüllung und das Auspumpen einzelner Anlagen zeitversetzt erfolgt.

Falls nicht ausreichend oberirdisches Speiswasser verfügbar ist und man auf eine unterirdische Anzapfung des Rhein zurückgreift, kann man das Rheinwasser zunächst auf das Niveau des Einlaufwerkes der Druckrohrleitungen im Interim-Oberbecken 80 hochpumpen. Es kann auch sinnvoll sein, an die in offener Bauweise verlegten Druckrohre 86 von vorneherein einen Zulauf auf der Höhe des Rheinpegels, das wären etwa 60 [m] unter dem späteren Niveau des Rekultivierungssees (siehe oben), einzubauen. Man könnte auch von vorneherein das Interim-Oberbecken so gestalten, dass es an der entsprechenden Stelle die notwendige Tiefe aufweist.

*Zwei Bemerkungen zum Bau und zum schonenden Betrieb der Speicherkugeln*

Keine kraftschlüssige Druckbeanspruchung: Die Hohlkugeln werden insbesondere auf den von außen wirkenden Druck der Wassersäule des (späteren) Sees ausgelegt. Ein über das Druckrohr im Interimsbetrieb theoretisch möglicher analoger Innendruck kann dann nicht auftreten, wenn -wie vorgesehen - die Hohlraumkugel ohne eingeschlossenes Luftkissen betrieben wird und beim Füllen mit Wasser das Einlassventil der Turbine knapp vor der 100% Füllung zugeht; dann herrscht in der Kugel immer nur der Druck der lokalen Wassermenge und es gibt keinen Druckschlag. Die Hohlkugel wird also im Interimsbetrieb insbesondere nicht durch den nichtkompensierten Wasserdruck aus der Rohrleitung auf Zug (innen nach außen) beansprucht, sondern wirkt hydraulisch eher so wie ein offenes Becken.

Auch im späteren Seebetrieb bleibt gewährleistet, dass es im Innern der Kugel keine kraftschlüssige Druckverbindung mit dem Tiefenwasser gibt und sich der Druck auf die Hohlkugel nicht dauernd zwischen Tiefendruck und Druckausgleich ändert (Ermüdung durch zyklische Druckentlastung). Während des Versuchsbetriebes kann man durch ein Sicherheitsventil das korrekte Vorgehen gewährleisten.

Bemerkung zu einem fortlaufendem 3-D Druck der Hohlkugel-Schalung: Man wird sich bemühen, die Massenproduktion der Hohlkugeln möglichst preiswert zu gestalten, so dass letztendlich nur noch die reinen Betonkosten wirklich ins Gewicht fallen. Die Wandstärke der Hohlkugeln sind ungewöhnlich stark, z.B. 2-3 m, und dies eröffnet die Möglichkeit durch Anwendung von 3D -Druckverfahren ggf. ohne externe Verschalung auszukommen. Hierzu stellen wir uns vor, dass während eines schrittweisen Baues der Hohlkugel zunächst an den inneren und äußeren Rändern der ebenen Querschnittsflache der Kugelschale mit einem geeigneten Beton oder sonstigem Werkstoff jeweils ein Schalungs-Kragen erstellt wird, der dann nach Erstarren mit dem Konstruktionsbeton ausgegossen wird. Auf diese Weise könnte es möglich sein, die gesamte Hohlkugel computergesteuert Schicht um Schicht zu drucken bzw. zu gießen.

*Ausführungsform mit Speicherrohren*

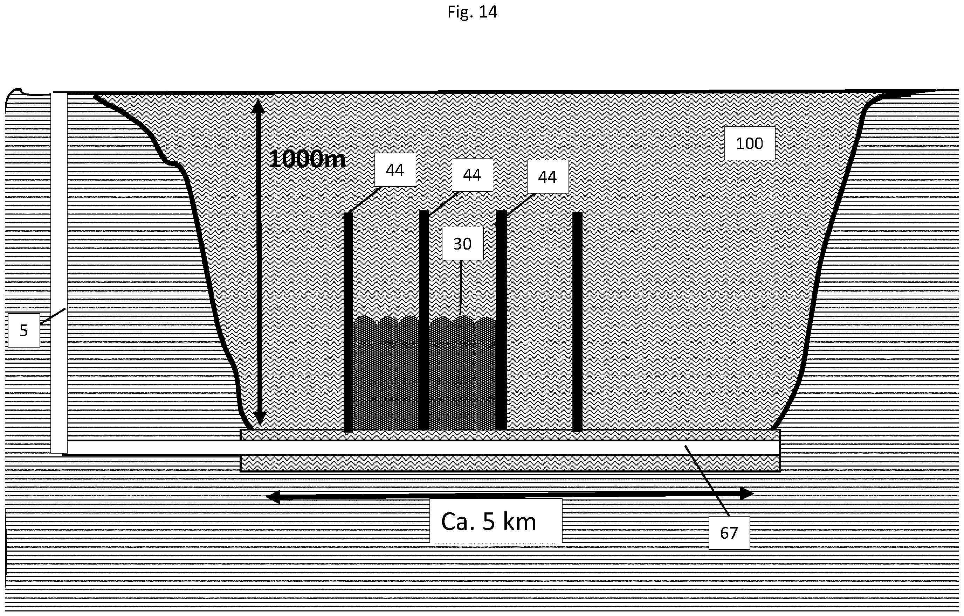

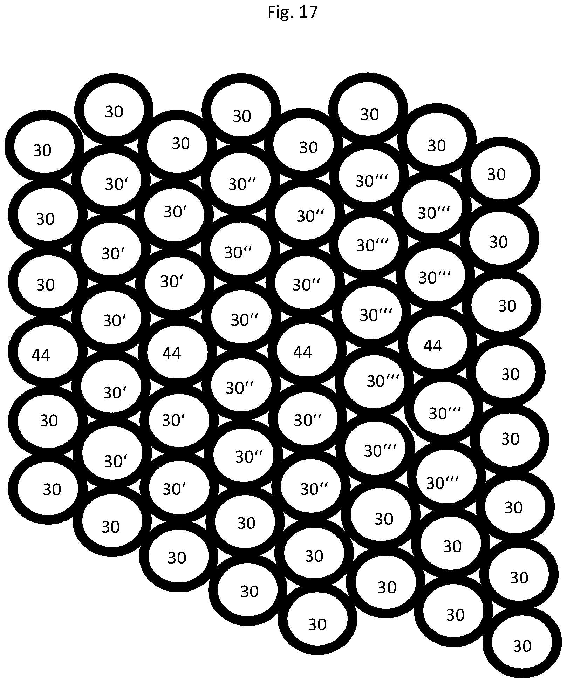

Bezugnehmend auf die **Fig. 14** bis **Fig. 17** können die in der Bodenvertiefung 100 angeordneten Druckbehälter 3 auch als rohrförmige Druckbehälter 30 (Speicherrohrelemente) ausgebildet sein. In dem dargestellten Beispiel weisen die rohrförmig ausgebildeten Druckbehälter 30 einen kreisförmigen Querschnitt auf und sind in der Bodenvertiefung derart senkrecht nebeneinander angeordnet, dass sie eine einzige Ebene bilden in der die Druckbehälter 30 in dichtester Kugelpackung angeordnet sind (siehe **Fig. 17**). Weitere Ebenen sind in diesem Beispiel nicht vorgesehen. Die Druckbehälter 30 sind über Druckleitungen 6 mit gemeinschaftlichen Pumpturbinen 77 verbunden, welche (über ein Ventil 78) mit Verbindungsrohren 44', 44, die zur See führen, verbunden sind.

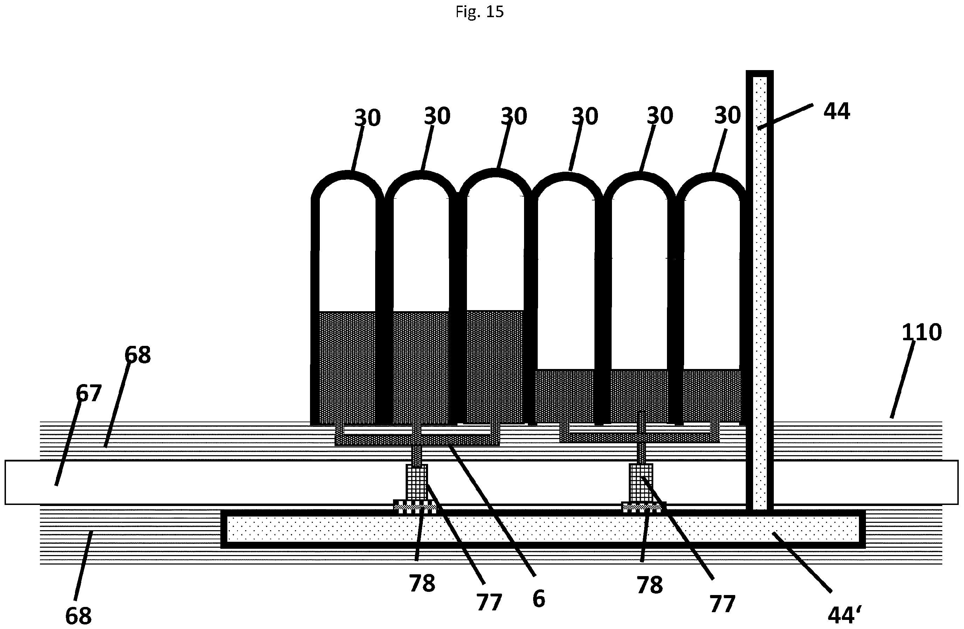

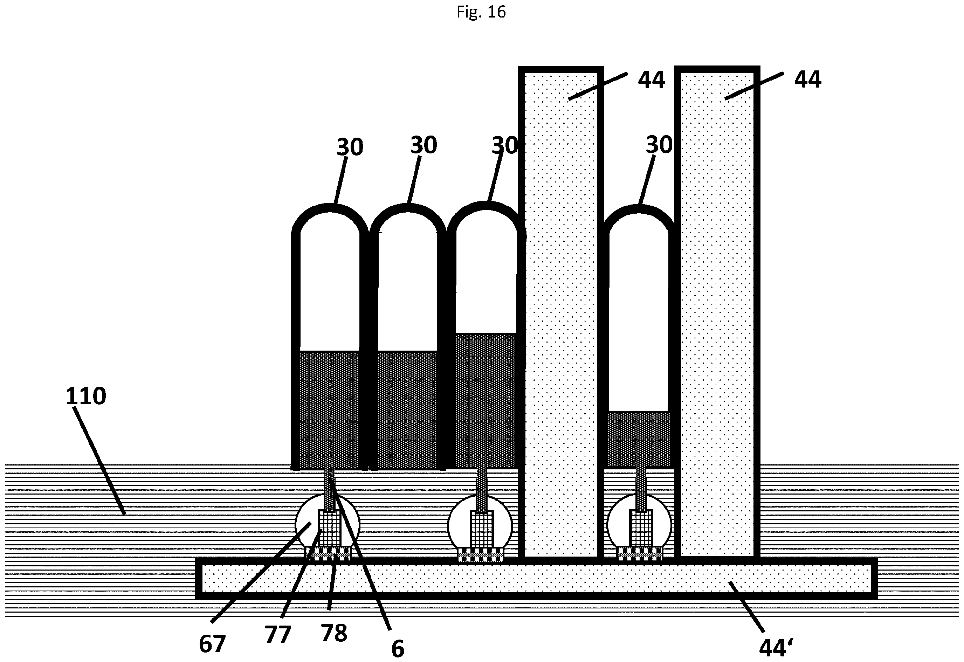

Wie dargestellt, können Verbindungsrohre 44 (wasserführenden Rohre von Obersee zur Turbine) senkrecht und zwischen den Druckbehältern 30 angeordnet sein. Die senkrechten Verbindungsrohre 44 zur See können ihrerseits über waagerechte Verbindungsrohre 44', welche ggf. im Untergrund verlaufen, zu den Pumpturbinen 77 führen. Wie in **Fig. 15** und **Fig. 16** zu sehen ist, können die Pumpturbinen jeweils in einem begehbaren und/oder befahrbaren Versorgungsschacht 67 unterhalb des Untergrunds 110 angeordnet sein. Hierzu kann ein Betonunterbau 68 vorgesehen sein in welchem der Versorgungsschacht 67 oder auch mehrere solcher Schächte 67 verlaufen (Unterbau mit Turbinen, Ventilen, Kabeln etc.).

**Fig. 17** zeigt eine Draufsicht auf die rohrförmigen Druckbehälter 30 und dazwischen angeordneten Verbindungsrohre 44 zur See, in der die Anordnung in dichtester Kugelpackung gut zu erkennen ist. Mehrere, insbesondere benachbarte, senkrecht angeordnete rohrförmige Druckbehälter werden über eine gemeinschaftliche Pumpturbine 77 als Druckbehälter-Gruppe betrieben. In dem gezeigten Beispiel bilden die Druckbehälter 30' eine Gruppe, die Druckbehälter 30" eine Gruppe und die Druckbehälter 30‴ eine Gruppe, welche jeweils über eine gemeinsame Pumpturbine 77 betrieben und über einen gemeinsames Verbindungsrohr 44 mit der See verbunden sind.

Konkret ist in dem dargestellten Beispiel eine Pumpturbineneinheit zur Versorgung von neun Speicherrohren 30', 30", 30‴ vorgesehen. Jedes Speicherrohr ist in dem Beispiel ca. 300m hoch (Höhe h) und hat 30m Außen- und 25m Innendurchmesser.

Daraus ergibt sich folgende beispielhafte Abschätzung: Innenvolumen: $\pi \cdot r2 \cdot h = 3{,}14 \cdot 12{,}52 \, m2 \cdot 300 \, m = 147.187 \, m3$; Volumen pro Turbineneinheit $9 \cdot 147.187 \, m3 = 1.320.000 \, m3$;

Bei 1000m Tiefe beträgt die Speicherenergie pro Turbineneinheit ca. $2{,}0 \cdot 9 \cdot 147.187 \, m3 = 2.600.000$ kWh; Turbinenleistung 200 kW, d.h. diese Einheit kann 200 kW Leistung über ca. 13h erbringen; Da bei 800m Tiefe 1 $m^3$ pro Sekunde 2,0 kW liefert, werden 200 kW Leistung erzeugt, wenn 100$m^3$ pro Sekunde die Turbine durchströmen.

600 Turbinen a 200 kW können somit 120 GigaW Leistung über 13 Stunden erbringen, d.h. einer derartige Anlage alleine kann ganz Deutschland einen vollen Tag mit Elektrizität versorgen. Die Wassermenge pro Sekunde wäre dann 60.000 $m^3$ pro Sekunde. Wenn die Fläche des gefluteten Sees 40 $km^2$ ist, sinkt die Wasserfläche des Sees ca. 1 mm pro Sekunde oder um 50 m pro Tag.

*Einige Vorteile der Erfindung*

Je nach Ausführungsform können sich einige oder mehrere der folgenden Vorteile ergeben.

Vorteile der Größe und Teufe

- Durch die noch vorhandene Verfügbarkeit der (mächtigen) Tagebau-Infrastruktur kann der laufende Betrieb bei grundsätzlich gleicher Arbeitsweise auf eine andere Zielerfüllung umgelenkt werden; daher ergeben sich einmalig günstige Kosten zur Erstellung von Leerraum, der später zu Speicherzwecken mit Hohlraumstrukturen bebaut werden kann.
- Es lohnt sich daher für PSKW ungewohnt große Speicherkapazitäten und Höhendifferenzen herzustellen.
- Durch größere Teufe des "Unterbecken" verringert sich der Pegelhub pro MWh Speicherenergie,

Konstruktive und betriebliche Vorteile

- Durch den Einsatz von gleichartigen elementaren Grundzellen können die Vorteile einer Massenproduktion genutzt werden.

- Die Ränder der Rinne werden durch die Ausfüllung mit Hohlkugeln stabilisiert, so dass sich ein steiler Böschungswinkel und daher eine breite Rinne erreichen lassen.
- Sehr kompakte Anlage mit einem hohen Füllfaktor und daher geringem Höhenverlust
- Freier Zugang zu den Pumpturbinen für Wartung, Reparatur und Austausch.
- Gegenüber einer Errichtung in einem vorhandenen Binnensee oder auf dem Meeresgrund kann eine erste Schicht im trockenen errichtet werden, wobei davor ggf. ein ebener Untergrund geschaffen werden kann. Dies wäre bei Hohlkugeln auf dem Meeresboden nicht ohne weiteres möglich.

Sicherheit und Fehlerfreundlichkeit

- Die im Betrieb verursachte breitflächige Strömung vom Unterbecken zum Oberbecken; die aus vielen dezentralen Ein

    - und Auslässen gespeist werden, gewährleistet niedrige Strömungsgeschwindigkeiten auch im Bereich des zu- oder ablaufenden Wassers. Der trichterförmige Kanal zu den Engstellen ergibt darüber hinaus eine Beruhigung der Strömung.

- Sichere Schadensbegrenzung bei einem "worst case Szenario": Im Autarken Fall bleibt bei einem Bruch einer leergepumpten Kugel das einstürzende Volumen auf den Kugelhohlraum begrenzt (d.h. es kann keinen "Tsunami" im Arbeitssee geben!)
- Fehlerfreundlichkeit: bei Undichtigkeiten ist jeweils nur ein kleiner abgeschlossener Teil der "zellulären" gesamten Speicheranlage betroffen, so dass schlimmstenfalls dieser Teil einfach ausfällt und aufgegeben werden kann, ohne den Betrieb der Restanlage zu behindern.

Vorteile bei der Errichtung

- Ein Teil der PSKW-Anlage kann schon parallel zum auslaufenden Kohleabbau in provisorischer Weise als Interimsbau errichtet und getestet werden. Dieser Teil kann auch bei der Befüllung des Sees zur Stromgewinnung aus der potentiellen Energie des Speisewassers genutzt werden
- die Interims-Installation kann bei der Erstbefüllung des Sees zur Energiegewinnung eingesetzt werden
- durch das seegestützte Ausbringen der Hohlkörper und die "trockene" elektrische bzw. hydraulische Einbindung in die Gesamtanlage ergibt sich eine vergleichsweise einfache und kostengünstige Installation -selbst bei großen Speicherkörpern

Ökologische und soziale Vorteile

- Die Wassermenge im See bleibt unverändert, daher bleibt auch das Gewicht des Sees konstant.
- Lange Lebensdauer: Da im Falle von Kugeln diese im Wesentlichen auf Druck beansprucht werden und auch im Betrieb nur eine sehr geringe dynamische Belastung erfolgt, kann ggf. auf eine Eisenarmierung des Betons verzichtet werden. Dadurch kann die Lebensdauer (kein Rosten der Stahlarmierung) auf hunderte oder tausende von Jahren (römische Bauten) verlängert werden, so dass eine nachhaltige Investition in die zukünftige Energieversorgung getätigt wird, von der viele Generationen profitieren.
- Trotz gewaltiger Speicherkapazität bleibt der Anspruch auf Rekultivierung und Freizeitnutzen gewahrt
- Die Errichtung und Teilinbetriebnahme dieses PSKW kann parallel zur auslaufenden Nutzung (z.B. bis 2038 des Braunkohleabbaus) erfolgen, so dass keine (oder nur sehr wenige) der bisherigen Arbeitsplätze vernichtet werden

*Ausblick: "Hohlraum-Tagebau" nur zum Zweck der PSKW-Errichtung*

Im Rheinischen Braunkohlerevier und insbesondere im Tagebau Hambach steht bereits eine gewaltige Senke zur Verfügung; zur Einrichtung eines Groß- PSKW ist der größte Teil des Aushubes bereits unter anderweitiger Zielsetzung erfolgt, wobei wir dieses große Loch auch noch ausweiten und noch tiefer legen können.

Auch bei Untertage-PSKW schaut man zunächst auf eine Umwidmung und Anpassung der vorhandenen Bergwerke des ausgelaufenen Steinkohlebergbaus, obwohl dort die Frage bereits aufgeworfen wurde, ob es nicht einfacher wäre, neue und sehr große Untertagespeicher ausschließlich nach den Anforderungen des PSKW-Betriebes neu zu errichten (/LuSchmB Bergei2/).

Stellen wir uns also die Frage, ob man große PSKW-Anlagen nicht ebenfalls unabhängig von einer auslaufenden Braunkohleförderung direkt "auf der grünen Wiese" (oder "auf der gelben Sandwüste") von der Oberkante her errichten kann.

Was ist also zu beachten, wenn man in einem geeigneten Umfeld einen tiefen See mit den erprobten Fördermethoden eines Tagebaues als kombiniertes Ober- und Unterbecken für ein Groß-PSKW irgendwo auf der Welt erstellen will.

Diese Frage ist besonders interessant für aride und sonnenreiche Standorte, beispielsweise in Nordafrika. Dort stellt sich nämlich die Frage der Zwischenspeicherung von PV Strom einfacher als bei uns in den gemäßigten Klimazonen. Wegen der großen Gleichförmigkeit der solaren Einstrahlung kann man für die Tagesglättung und Überbrückung der Nachtstunden von einem hohen Bedarf an Kurzzeitspeichern ausgehen, die bei geeigneter Dimensionierung eine weitgehend vorhersagbare nahezu tägliche Auslastung erlauben. Bieringer konnte zeigen, dass man in Marokko bei einer zukünftig weitgehend PV gestützten Stromversorgung und einer zeitlich konstanten Nachfrage selbst große Kurzzeitspeicher mit einer Speicherkapazität von 13 Volllast-Stunden noch auf eine Vollast-Zyklenzahl von ca. 300/a und mehr kommen kann /Bieringer 2019/. Das ist etwa doppelt so viel wie man mit dem gleichen Modell für Kurzzeitspeicher in Deutschland errechnet. Das heißt aber, dass bei gleichem Strompreis die Kosten pro gespeicherte kWh doppelt so hoch sein dürfen.

Vergegenwärtigt man sich nochmal die Kostenstruktur der StEnSea Speicherkugel (siehe oben "Unterirdische und Untersee - PSKW") und die im Kapitel "Wirtschaftliches Potential pro $m^3$ nutzbarem Hohlraum" angestellten Überlegungen, so gelten für das Groß-PSKW im tiefen Tagebau bei etwa 500 m Teufe die folgenden Kosten pro $m^3$ Nutzloch (bezeichnet als [$m^3_{hohl}$]), wobei man die Betonkosten aus GI(45) und den benutzten Volumenfaktor aus GI(44) heranzieht.

| | | |
|---|---|---|
| **(pos. 1):** | Betonkosten (incl. Schalung etc.): | ca. 165 €/$m^3_{hohl}$ (=0,728 · 225) |
| **(pos. 2):** | Erstellung des Nutzloches: | ca. 20 €/ $m^3_{hohl}$ |

Zusammen ergeben sich also 185 €/$m^3_{hohl}$ für eine 100 m hohes Unterbecken mit Fußpunkt auf 500 m Teufe.

Nun müssen wir die Vorleistungen des Tagebaubetriebes bis 400 m Teufe gesondert aufstellen und hinzufügen. Für 1 [$m^3_{hohl}$] Nutzloch haben wir in der Nutzteufe ein Brutto-Loch von 2 $m^2$ Fläche und 1 m Höhe benötigt. Für das betrachtete Unterbecken von 100 [m] Höhe brauchen wir also für 100 $m^3$ Nutzloch eine Grundfläche von ebenfalls 2 [$m^2$] und müssen dafür ab Oberkante ein direktes Aushubvolumen on 2 · 400 = 800 [$m^3$] aufbringen. Hinzu kommt noch der anteilige Aushub für die Böschung, für den wir pauschal 25% ansetzen, so dass sich ein Gesamtaushub von 1000 [$m^3$] ergibt. Bezogen auf ein Einheits-Speichervolumen von 1 [$m^3_{hohl}$] sind also 10 [$m^3$] Bruttoloch zusätzlich auszuheben.

Weiter oben haben wir angegeben, dass man pro $m^3$ geförderte Braunkohle insgesamt (also in verschiedenen Höhen des Tagebaues) ein durchschnittliches Gesamtloch von 6 $m^3$ erzeugt. Bei einem Braunkohlepreis von 17,5 €/$m^3$ sind also für den Aushub ca. 3 €/$m^3$ zu veranschlagen, was bezogen auf das Einheits- Nutzloch 30 [€/$m^3_{hohl}$] bedeutet.

Wir können also die obige Kostenzusammenstellung um eine 3. Position ergänzen. Für die Errichtung eines vergleichbaren Groß-PSKW (500m Sohle, 100m hohes Unterbecken) auf der "grünen Wiese" kommen hinzu:

(pos.3) Zusätzlicher Aushub der Deckschicht: 30 [€/$m^3_{hohl}$]

Die Kosten für Pumpturbine und elektrische Anlage sind im StEnSea-Projekt mit 525 [€/kW] veranschlagt. Bei einer elektrischen Speicherdichte von ca. 1 kWh/ $m^3_{hohl}$ (entsprechend einer Höhendifferenz von ca. 400 [m]) und einer Ein/Ausspeicherzeit von ca. 5 h kommt in beiden Fällen noch folgender Elektro-Aufwand hinzu:

(**pos. 4**) Pumpturbine + Elektro: **105 [€ /$m^3_{hohl}$]** bei 5 h Umschlagszeit

Man erkennt:

- Die baulichen Mehrkosten für die Errichtung einer großen und tiefen PSKW -Anlage auf der "grünen Wiese" statt auf der Sohle eines aufgelassenen Braunkohletagebaues sind verhältnismäßig gering; in unserem grob gerechneten Beispiel waren es ca. 15 %.
- Ein großes und tiefes PSKW kann bei günstiger Auslastung -wie es etwa in sonnenreichen Gebieten bei PV als Stromquelle zu erwarten ist- und bei für den Tagebau günstiger Geologie des Geländes (vergleichbar günstig wie im Braunkohle Tagebau) auch "auf dem gelben Sand" günstig errichtet werden.
- Die obige Rechnung unterstreicht die Bedeutung der Höhe des Unterbeckens, auf die ja der Aushub der Decksichten umgelegt werden kann.

Bei einer Anwendung in ariden oder auch semiariden Gebieten, kann man die Verdunstung aus dem Speichersee durch eine schwimmende Abdeckung vermindern, sofern kein Gewässer zum Nachfüllen verfügbar ist.

LITERATURVERZEICHNIS

/Baufumé e.a.-2011/
Baufumé, Sylvestre; Bongartz, Richard und Peter Markewitzr: STE-Research Report 08/2011, " Unterflur-Pumpspeicher- Eine Kurzsynopse" ,(2011) Forschungszentrum Jülich, Systems Analysis and Technology Evaluation (IEK-STE)    http://www.fz-juelich.de/SharedDocs/Downloads/IEK/IEK-STE/EN/report_08_2011.pdf?_blob=publication-File

/Bieringer 2019/ Kevin R. Bieringer (2019) : "Grobe Modellierung einer solaren Stromerzeugung in Nordafrika mit Kopplung zur deutschen Stromversorgung; Staatsarbeit für das Lehrfach Physik, Universität des Saarlandes, Experimentalphysik, Forschungsstelle Zukunftsenergie, Saarbrücken 2019/; verfügbar über http://www.fze.uni-saarland.de/Speicher.htm

/BMWi 2017/ Bundesministerium für Wirtschaft 2017: "Pumpspeicherkonzept StEnSEA - Kugelpumpspeicher unter Wasser    Projektseite:    https://forschung-energiespeicher.info/projektschau/gesamtliste/projekteinzelansicht/95/Kugelpumpspeicher unter Wasser
Bildquelle: Konzeptüberblick © HOCHTIEF Solutions

/Düren2017/ Düren, M. (2017). Understanding the Bigger energy Picture - DESERTEC and Beyond, Springer Briefs in Energy. Springer. doi: https://dx.doi.org/10.1007/978-3-319-57966-5

/Garg e.a. 2012/ A. Garg, C. Lay und R. Füllmann: "STENSEA, Stored Energy in the Sea -the Feasibility of an Underwater Pumped Hydro Storage System; 7. IRES - Conference, 12. November 2012, Vortrag C2, S.477ff. der Proceedings. Erhältlich bei IRES: https://www.eurosolar.de/en/imaqes/EVENTS/IRES/I RES20 12/Proceedinqs I RES20 12.pdf https://www.eurosolar.de/en/index.php/events/ires-conference-eurosolar

/Küffner FAZ 2011.0401/ Küffner, G.: "Hohlkugeln speichen überflüssigen Windstrom"; FAZ vom 1.4.2011, Seite T2  https://www.faz.net/aktuell/technik-motor/technik/in-der-tiefe-der-meere-hohlkugeln-speichern-ueberschuessigen-windstrom-1608012.html

/Greenpeace  2018/  Greenpeace:  "WAS  BRAUNKOHLESTROM  WIRKLICH  KOSTET"  http://www.foes.de/pdf/2018-06-25-GPE-Studie-Braunkohle.pdf

/AKE2014F/ Luther, G., & Schmidt-Böcking, H. (2014): "Das Zusammenwirken von PSKW - artigen und P2G - artigen Energiespeichern und die mögliche Rolle von Tiefschachtspeichern bei der Energiewende"; http://www.fze.uni-saarland.de/AKE Archiv/AKE2014F/Links AKE2014F.htm. #Vortrag AKE2014F_06;
oder  direkt:  http://www.fze.uni-saarland.de/AKE  Archiv/AKE2014F/Links  AKE2014F.htm/Vortrage/AKE2014F 06LutherSchmB Bergwerksspeicher.pptx

/LuSchmB 2011 -Bergei1/ Luther, G. und Schmidt-Böcking, H. (2011). "Schacht Pumpspeicherkraftwerk", DE 10 2011 105 307
verfügbar über: http://www.fze.uni-saarland.de/Speicher.htm

/LuSchmB 2013 -Bergei2/ Luther,G. und Schmidt-Böcking, H.: "Tiefschacht-Pumpspeicherkraftwerk"; Patent DE 10 2013 019776 B3
verfügbar über: http://www.fze.uni-saarland.de/Speicher.htm

/LuSchmB 2014 -LangeSaar/ Luther, G. und Schmidt-Böcking, H. (2014). "Verfahren zur Nutzung staugeregelter Fließgewässer als Oberbecken für ein Pumpspeicherkraftwerk unter Tage"; DE 10 2014 007 184.7. verfügbar über: http://www.fze.unisaarland.de/Speicher.htm

/LuSchmB 2014/ Luther, G. und Schmidt-Böcking, H. (2014). Pumpspeicherkraftwerke - Unsichtbare Speicher für die Energiewende. ew-Spezial(III), S. 22-24.
verfügbar über: http://www.fze.uni-saarland.de/Speicher.htm

/Lu2016/ Luther, G. (2016). Wärmepumpe oder KWK - was passt zur Wärmewende. In H. Bruhns (Hrsg.), Energie - Forschung und Perspektiven. Vorträge auf der DPG-Frühjahrstagung Regensburg 2016, (S. 123-139). Bad Honnef; ISBN 978-3-9818197-0-0verfügbar über: http://www.fze.uni-saarland.de/Speicher.htm

/DE_Meerei1/: Schmidt-Böcking, H. und Luther, G. (2011): "Pumpspeicherkraftwerk"; EP 2 683 933 B1, DE2011.013 329 verfügbar über: http://www.fze.uni-saarland.de/Speicher.htm

/DE_Meerei2/ Schmidt-Böcking, H. und Luther, G. (2011): "Pumpspeicherkraftwerk"; DE2011.118 206 verfügbar über: http://www.fze.uni-saarland.de/Speicher.htm

/Perau -Korn2013/ Perau, E. und Korn,S. (2013): "Geotechnische Fragestellungen beim Bau von Untertage-Pumpspeicherwerken im rheinischen Braunkohle-Tagebau"; S. 135-146 aus /Ruhr-Uni 2013/

/Reuther 2010/ Reuther, Ernst Ulrich: "Lehrbuch der Bergbaukunde", 12. Auflage, 2010, VGE -Verlag, Essen, ISBN=978-3-86797-0760-1; hier Seite 532, Bild 351.

/Ruhr Uni 2013/ Ruhr Uni: Perau e.a.: Report Geotechnik 40, (2013), "Untertage-Pumpspeicherwerke in Anlagen des Berg- und Tagebaus"; Universität Duisburg-Essen, VGE Verlag, Essen 2013;ISBN: 978-3-86797-155-3, Insbesondere dort p. 148-165 (/Sanio-Mark 2013/) und p. 135-46 (/Perau -Korn2013/)

/Sanio-Mark 2013/ David Sanio und Peter Mark: "Entwurf und Optimierung von Betonkonstruktionen für Pumpspeicherwerke in ehemaligen Braunkohletagebauen", Seite 148 -165 aus /Ruhr-Uni 2013/

/Schmidt 2019/ Schmidt, Michael: Internet homepage: "Chemie verstehen" ; https://www.cumschmidt.de Die hexagonal-dichteste Kugelpackung: https://www.cumschmidt.de/s_styp_hdp.htm
Die kubisch-dichteste Kugelpackung: https://www.cumschmidt.de/s_styp_kdp.htm (abgerufen am 1.3.2019)

/Sinn 2013/ Sinn, H.-W. (2013). Energiewende ins Nichts. Vortrag am 16.12.2013 in der LMU München. Abrufbar von: www.cesifo-group.de/de/ifoHome/events/individual-events/Archive/2013/vortrag-sinn-lmu-20131216.html

/Schreiber e.a. 2010/ U. Schreiber, E. Perau,. A. Niemann und H.-J. Wagner: "Unterflur-Pumpspeicherwerke -Konzepte für regionale Speicher regenerativer Energien" https://www.uni-due.de/imperia/md/content/geotechnik/forschung/upw_unterflur_pumspeicherwerke_forschungsskizze.pdf

/Schulz 2009/ Schulz, Detlev: "Speicherpotenziale von Pumpspeicherwerken in Tagebaurestlöchern ehemaliger Braunkohlereviere"; Folie 8; Vortrag auf Forum Netzintegration, Deutsche Umwelthilfe, Berlin, 30.09.2009; Folien online verfügbar: http://www.forum-netzintegration.de/uploads/media/DUH Schulz 300909 01.pdf

/Slocum 2010/ Slocum, Alexander; Greenlee, Alison und Gregory Fennell: "OFFSHORE ENERGY HARVESTING, STORAGE, AND POWER GENERATION SYSTEM"; US Patent 8,698,338
Homepage zum Patent: https://tlo.mit.edu/technologies/offshore-energy-harvesting-storage-and-power-generation-system

/Slocum 2012/ Alexander Slocum, G. Dundar, B. Hodder, J. Meredith , Elie H. Homsi , A. Garg, C. Lay, H. Schmidt-Böcking und G. Luther: "Large Scale Manufacturing and Deployment of Offshore Renewable Energy Harvesting and Storage System" Proc. of the 12th International euspen Conference , Stockholm Juni 2012;

/Slocum 2013/ Alexander H. Slocum, Gregory E. Fennell, Gökhan Dündar, Brian G. Hodder, James D. C. Meredith, and Monique A. Sager: Ocean Renewable Energy Storage (ORES) - System Analysis of an Undersea Energy Storage Concept Proceedings of the IEEE, Vol. 101, No. 4, April 2013, p. 906-924

/Siol 1995/ Siol, Ursula: "Pumpspeicherwerk", DE19513817 B4

/StEnSea/ Fraunhofer Institut für Energiewirtschaft und Energiesystemtechnik (IEE): Homepage des Forschungsprojektes "Stored energy in the Sea (StEnSea)" https://www.iee.fraunhofer.de/de/projekte/suche/laufende/stensea-storing-energy-at-sea.html

/Stenzel e.a. 2012/ Peter Stenzel, Sylvestre Baufumé, Richard Bongartz, Jochen Linssen, Peter Markewitz und Jürgen-Friedrich Hake: STE-Research Report 03/2012 : " Unkonventionelle Energiespeicher" https://www.fz-juelich.de/SharedDocs/Downloads/IEK/IEK-STE/DE/Publikationen/research_reports/2012/report_03_2012.pdf?_blob=publicationFile

/Thema 2019/ Johannes Thema und Martin Thema: "PSKW in stillgelegten Tagebauen -am Beispiel Hambach-Garzweiler-Inden"; Wuppertal Paper 194 (2019); ISSN 0949-5266; Wuppertal, 2. Auflage März 2019. verfügbar über: https://wupperinst.orp/a/wi/a/s/ad/4612/

/Wikipedia, ## Kaftwerk Niederaußem/ Wikipedia (abgerufen am 1.4.2019) http://www.wikiwand.com/de/Kraftwerk Niederaußem

/Wikipedia, ## Tagebau Hambach/ Wikipedia (aufgerufen am 1.3. 2019) https://www.wikiwand.com/de/Taqebau Hambach

BEZUGSZEICHENLISTE

| 0 | Seewasser |
| 1 | Boden, |
| 2 | Zwischenraum zwischen Druckbehältern, |
| 22 | "Verfüllter" Zugangsraum, |
| 24 | "Offener" oder "Freiwasser"-Zugangsraum, |
| 27 | Blindschacht, |
| 3 | Druckbehälter, |
| 30 | Rohrförmiger Druckbehälter, |
| 4 | "Lichter geometrischer Engpass Schacht", |
| 44 | Verbindungsrohr zur See, |
| 5 | Schacht, |
| 6 | Verbindungsrohr, Verteilungsrohrwerk, |
| 61 | Verbindungsrohr von Druckbehälter zu Druckbehälter, |
| 66 | Verbindungsebene, |
| 67 | Begehbare/Befahrbare Strecke, |
| 68 | Betonunterbau, |
| 7 | Pumpturbine, |
| 77 | Gemeinschaftliche Pumpturbine, |
| 78 | Ventil, |
| 80 | Vorläufiges oberes Reservoir, |
| 83 | Teilweise errichtetes unteres Reservoir, |
| 84 | Staumauer, |
| 86 | Druckrohrleitung, |
| 90 | Füllmaterial, |
| 100 | Bodenvertiefung im Boden, |
| 110 | Untergrund der Bodenvertiefung, |
| 120 | Wand der Bodenvertiefung, |
| 200 | Unteres Reservoir, |
| 300 | Oberes Reservoir |

**Patentansprüche**

1. Verfahren zur Errichtung eines Unterwasser-Pumpspeicherkraftwerks in einer trockenliegenden aber flutbaren Bodenvertiefung (100), insbesondere in einer aufgelassenen oder noch betriebenen Tagebaugrube,

wobei eine Vielzahl von Druckbehältern (3, 30) bereitgestellt oder vor Ort gebaut werden, insbesondere in der trockenliegenden Bodenvertiefung (100) gebaut werden, z.B. auf einer unteren Sohle der Tagebraugrube, wobei die Vielzahl von Druckbehältern (3, 30) in der trockenliegenden Bodenvertiefung (100), z.B. auf einer unteren Sohle der Tagebraugrube, nebeneinander und/oder übereinander angeordnet werden, um dort als unteres Reservoir (200) für das zu errichtende Unterwasser- Pumpspeicherkraftwerk zu dienen und wobei die Druckbehälter (3, 30) derart ausgebildet sind, derart gebaut werden oder derart bearbeitet werden, dass diese jeweils zumindest eine Durchflussöffnung zum Einlassen und/oder Auslassen von Wasser aufweisen und derart druckfest sind, dass sie formstabil gegen einen hydrostatischen Wasserdruck leergepumpt werden können, der von außen auf den Druckbehältern (3, 30) lastet, wenn die trockenliegende Bodenvertiefung (100) mit Wasser geflutet wird.

2. Verfahren zur Errichtung eines Unterwasser-Pumpspeicherkraftwerks gemäß dem vorstehenden Anspruch,

wobei die Vielzahl von Druckbehältern (3, 30) mit einer oder mehreren Turbinen, Pumpen und/oder Pumpturbinen (7, 77) ausgestattet werden, so dass, wenn die trockenliegende Bodenvertiefung (100) mit Wasser geflutet ist, das Unterwasser-Pumpspeicherkraftwerk derart betrieben werden kann, dass elektrische Energie gewonnen wird, wenn Wasser aus der gefluteten Bodenvertiefung in die Druckbehälter (3, 30) eingelassen wird, und elektrische Energie gespeichert wird, wenn Wasser aus den Druckbehältern (3, 30) in die geflutete Bodenvertiefung ausgelassen wird, und
wobei von der Vielzahl von Druckbehältern (3, 30) einzelne als eigenständige Druckbehälter eingerichtet werden indem diese Druckbehälter jeweils über ihre zumindest eine Durchflussöffnung mit einer eigenen Turbine, Pumpe und/oder Pumpturbine (7, 77) ausgestattet werden und/oder
wobei von der Vielzahl von Druckbehältern (3, 30) mehrere als Druckbehälter-Gruppe eingerichtet werden indem diese Druckbehälter (3, 30) über Druckleitungen zwischen jeweiligen Durchflussöffnungen miteinander verbunden werden und mit einer gemeinsamen Turbine, Pumpe und/oder Pumpturbine (7, 77) ausgestattet werden und
wobei vorzugsweise mehrere Druckbehälter-Gruppen eingerichtet werden.

3. Verfahren zur Errichtung eines Unterwasser-Pumpspeicherkraftwerks gemäß einem der vorstehenden Ansprüche, wobei zumindest einige der Druckbehälter (3, 30) gemäß der Struktur einer dichtesten Packung in zwei Dimensionen angeordnet werden, z.B. indem längliche oder rohrförmige Druckbehälter im Querschnitt gemäß der Struktur einer dichtesten Packung angeordnet werden oder wobei Druckbehälter gemäß der Struktur einer dichtesten Kugelpackung in drei Dimensionen angeordnet werden.

4. Verfahren zur Errichtung eines Unterwasser-Pumpspeicherkraftwerks gemäß einem der vorstehenden Ansprüche,

wobei zumindest einige der Druckbehälter (3, 30) eine Masse aufweisen, die größer oder zumindest nicht wesentlich kleiner ist, als die Masse des von dem Druckbehälter verdrängten Wassers, wenn die trockenliegende Bodenvertiefung (100) mit Wasser geflutet ist, so dass die Druckbehälter (3, 30) ohne Beschwerung oder Verankerung oder zumindest ohne erhebliche Beschwerung oder Verankerung unten in der gefluteten Bodenvertiefung verbleiben und/oder
wobei zumindest einige der Druckbehälter (3, 30), insbesondere die Druckbehälter einer unteren Druckbehälter-Schicht, am Untergrund fixiert oder verankert werden und/oder
wobei zumindest einige der Druckbehälter (3, 30), insbesondere die Druckbehälter einer oberen Druckbehälter-Schicht, mit Ballast, insbesondere mit Aushub aus der Bodenvertiefung, beschwert werden.

5. Verfahren zur Errichtung eines Unterwasser-Pumpspeicherkraftwerks gemäß einem der vorstehenden Ansprüche,

wobei zwischen Druckbehältern (3, 30) verbleibende Freiräume, welche nicht als Zugang zu Turbinen, Pumpen und/oder Pumpturbinen dienen, mit Aushub oder Baustoff verfüllt oder ausgegossen werden und/oder
wobei die Vielzahl von Druckbehältern (3, 30) als eine Druckbehälter-Gesamtheit eingerichtet wird indem diese Druckbehälter über jeweilige Durchflussöffnungen miteinander kommunizieren und mit einer gemeinsamen Verschalung nach außen abgeschlossen werden, wobei die gemeinsame Verschalung zumindest eine Durchflussöffnung nach außen aufweist, um die Druckbehälter-Gesamtheit mit einer gemeinsamen Turbine, Pumpe und/oder Pumpturbine (7, 77) ausstatten zu können.

6. Verfahren zur Errichtung eines Unterwasser-Pumpspeicherkraftwerks gemäß einem der vorstehenden Ansprüche,

wobei die trockenliegende Bodenvertiefung (100), insbesondere die aufgelassene oder zumindest teilweise noch betriebene Tagebaugrube, zunächst weiter verbreitert und/oder vertieft wird, vorzugsweise mit bereits vor Ort vorhandenen Tagebaumaschinen, so dass insbesondere eine Tiefe von über 300 Meter, vorzugsweise über 400 Meter, besonders bevorzugt über 500 Meter erreicht wird oder

wobei die trockenliegende Bodenvertiefung (100) für die Errichtung des Unterwasser-Pumpspeicherkraftwerks zunächst geschaffen wird, insbesondere mit einer Tiefe von über 300 Metern, vorzugsweise über 400 Metern, besonders bevorzugt über 500 Metern.

7. Verfahren zur Errichtung eines Unterwasser-Pumpspeicherkraftwerks gemäß einem der vorstehenden Ansprüche,

wobei die Druckbehälter (3, 30) derart ausgebildet sind, derart angeordnet werden, derart mit einer oder mehreren Turbinen, Pumpen und/oder Pumpturbinen (7, 77) ausgestattet werden und/oder derart über Druckleitungen zwischen jeweiligen Durchflussöffnungen miteinander verbunden werden, dass beim Auslassen von Wasser aus dem Druckbehälter (3, 30) keine Luft in den Druckbehälter (3, 30) nachströmt, sondern vorzugsweise ein nur durch den Partialdruck des Wasserdampfes begrenztes Vakuum in dem Druckbehälter (3, 30) entsteht, und/oder dass beim Einlassen von Wasser in den Druckbehälter (3, 30), der Druckbehälter (3, 30) nicht vollständig mit Wasser gefüllt wird, sondern vorzugsweise ein gewisses Restvolumen mit einem insbesondere nur durch den Partialdruck des Wasserdampfes begrenztem Vakuum verbleibt.

8. Verfahren zur Errichtung eines Unterwasser-Pumpspeicherkraftwerks gemäß einem der vorstehenden Ansprüche,

wobei nachdem die Vielzahl von Druckbehältern (3, 30) in der Bodenvertiefung (100) angeordnet wurde, die Bodenvertiefung (100) mit Wasser geflutet wird, um einen als oberes Reservoir (300) für das zu errichtende Pumpspeicherkraftwerk dienenden künstlichen See in der Bodenvertiefung (100) zu bilden, wobei die die Bodenvertiefung (100) vorzugsweise derart mit Wasser geflutet wird, dass das Wasser zunächst über eine dafür vorgesehene Druckleitung (86) unter Abgabe elektrischer Energie in einen oder mehrere der Druckbehälter (3, 30) eingelassen wird, und danach unter Aufnahme elektrischer Energie aus dem oder den Druckbehältern (3, 30) in die Bodenvertiefung (100) hinausgepumpt wird, um die Bodenvertiefung (100) schrittweise zu fluten und dabei elektrische Energie zu gewinnen.

9. Verfahren zur Errichtung eines Unterwasser-Pumpspeicherkraftwerks gemäß einem der vorstehenden Ansprüche,

wobei nachdem die Vielzahl von Druckbehältern (3, 30) in der Bodenvertiefung (100) angeordnet wurde und die Bodenvertiefung (100) zumindest teilweise mit Wasser geflutet wurde, derart, dass ein als oberes Reservoir (300) dienender künstlicher See gebildet ist, ein oder mehrere weitere Druckbehälter von der Oberfläche des Sees auf die bereits angeordneten Druckbehälter (3, 30) abgesenkt werden, wobei die weiteren abgesenkten Druckbehälter insbesondere als eigenständige Druckbehälter mit einer eigenen Turbine, Pumpe und/oder Pumpturbine (7, 77) eingerichtet werden, und wobei die bereits angeordneten Druckbehälter (3, 30) insbesondere als eine oder mehrere Druckbehälter-Schichten angeordnet sind und die weiteren abgesenkten Druckbehälter in Vertiefungen einer der Druckbehälter-Schichten stabil angeordnet werden.

10. Unteres Reservoir (200) für ein Unterwasser-Pumpspeicherkraftwerk, errichtet in einer trockenliegenden aber flutbaren Bodenvertiefung (100), insbesondere in einer aufgelassenen oder noch betriebenen Tagebaugrube, umfassend

eine Vielzahl von Druckbehältern (3, 30), welche in der trockenliegenden Bodenvertiefung (100), z.B. auf einer unteren Sohle der Tagebraugrube, nebeneinander und/oder übereinander angeordnet sind, wobei die Druckbehälter (3, 30) derart ausgebildet sind, dass diese jeweils zumindest eine Durchflussöffnung zum Einlassen und/oder Auslassen von Wasser aufweisen und derart druckfest sind, dass sie formstabil gegen einen hydrostatischen Wasserdruck leergepumpt werden können, der von außen auf den Druckbehältern lastet, wenn die trockenliegende Bodenvertiefung (100) mit Wasser geflutet ist.

11. Unteres Reservoir (200) für ein Unterwasser-Pumpspeicherkraftwerk gemäß dem vorstehenden Anspruch 10,

wobei die Vielzahl von Druckbehältern (3, 30) mit einer oder mehreren Turbinen, Pumpen und/oder Pumpturbinen (7, 77) ausgestattet sind, so dass, wenn die trockenliegende Bodenvertiefung (100) mit Wasser geflutet ist, das Unterwasser-Pumpspeicherkraftwerk derart betrieben werden kann, dass elektrische Energie abgegeben werden kann, indem Wasser in die Druckbehälter (3, 30) eingelassen wird, und Wasser aus den Druckbehältern (3, 30) ausgelassen werden kann, indem elektrische Energie aufgenommen wird und wobei von der Vielzahl von Druckbehältern (3, 30) einzelne als eigenständige Druckbehälter eingerichtet sind indem diese Druckbehälter jeweils über ihre zumindest eine Durchflussöffnung mit einer eigenen Turbine, Pumpe und/oder Pumpturbine (7, 77) ausgestattet sind und/oder
wobei von der Vielzahl von Druckbehältern (3, 30) mehrere als Druckbehälter-Gruppe eingerichtet sind indem diese Druckbehälter (3, 30) über Druckleitungen zwischen jeweiligen Durchflussöffnungen miteinander verbunden sind und mit einer gemeinsamen Turbine, Pumpe und/oder Pumpturbine (7, 77) ausgestattet sind und wobei vorzugsweise mehrere Druckbehälter-Gruppen eingerichtet sind.

12. Unteres Reservoir (200) für ein Unterwasser-Pumpspeicherkraftwerk gemäß einem der Ansprüche 10 bis 11, wobei die trockenliegende Bodenvertiefung (100) eine Tiefe von über 300 Meter, vorzugsweise über 400 Meter, besonders bevorzugt über 500 Meter aufweist.

13. Unterwasser-Pumpspeicherkraftwerk mit einem unterem Reservoir (200) gemäß einem der Ansprüche 10 bis 12, ferner umfassend
ein oberes Reservoir (300) ausgebildet als ein in der Bodenvertiefung (100) künstlich gebildeter See.

14. Verfahren zur vorläufigen Nutzbarmachung eines in einer trockenliegenden Bodenvertiefung (100) errichteten unteren Reservoirs (200) für ein Unterwasser-Pumpspeicherkraftwerk, gemäß einem der Ansprüche 10 bis 12, als vorläufiges Pumpspeicherkraftwerk, und vorzugsweise zur späteren Umwandlung in ein Unterwasser-Pumpspeicherkraft, insbesondere gemäß Anspruch 13,

wobei die oder einige der das untere Reservoir (200) bildenden in der Bodenvertiefung (100) angeordneten Druckbehälter (3, 30) über eine Druckleitung verbunden werden mit einem ein vorläufiges oberes Reservoir (80) bildenden Behälter oder Becken welches abgegrenzt von der trockenliegenden Bodenvertiefung (100) und oberhalb des unteren Reservoirs (200) angeordnet ist, beispielsweise oben am Hang der trockenliegenden Bodenvertiefung angeordnet ist, so dass das vorläufige Pumpspeicherkraftwerk derart betrieben werden kann, dass elektrische Energie gewonnen wird, wenn Wasser aus dem vorläufigen oberen Reservoir (80) in die Druckbehälter eingelassen wird, und elektrische Energie gespeichert wird, wenn Wasser aus den Druckbehältern (3, 30) in das obere Reservoir gepumpt wird,
und wobei vorzugsweise die trockenliegende Bodenvertiefung (100) später mit Wasser geflutet wird, um das vorläufige obere Reservoir (80) durch ein als künstlicher See in der Bodenvertiefung ausgebildetes oberes Reservoir (300) zu ersetzen und damit das vorläufige Pumpspeicherkraft in ein Unterwasser-Pumpspeicherkraftwerk umzuwandeln, so dass das Unterwasser-Pumpspeicherkraftwerk derart betrieben werden kann, dass elektrische Energie gewonnen wird, wenn Wasser aus der gefluteten Bodenvertiefung in die Druckbehälter (3, 30) eingelassen wird, und elektrische Energie gespeichert wird, wenn Wasser aus den Druckbehältern in die geflutete Bodenvertiefung ausgelassen wird.

15. Verfahren zur Planung der Errichtung eines Unterwasser-Pumpspeicherkraftwerks in einer trockenliegenden aber flutbaren Bodenvertiefung (100), gemäß einem Verfahren nach einem der Ansprüche 1 bis 9 wobe vorläufige Bauarbeiten durchgeführt werden, um die Vielzahl von Druckbehältern (3, 30) bereitzustellen, vor Ort zu bauen und/oder nebeneinander und/oder übereinander in der trockenliegenden Bodenvertiefung (100) anzuordnen, um dort als unteres Reservoir (200) für das zu errichtende Unterwasser-Pumpspeicherkraftwerk zu dienen.

**Claims**

1. Method of constructing an underwater pumped storage power plant in a dry, but floodable ground depression (100), in particular in an abandoned or still operating open-cast mine, wherein a plurality of pressure containers (3, 30) are provided or mounted on site, in particular are mounted in the dry ground depression (100), for example on a lower level of the open-cast mine,

wherein the plurality of pressure containers (3, 30) are arranged side by side and/or one above the other in the dry ground depression (100), for example on a lower level of the open-cast mine, in order to serve as a lower reservoir (200) for the underwater pumped storage power plant to be built, and
wherein the pressure containers (3, 30) are configured, mounted or machined in such a way that they each comprise at least one passage opening for the inflow and/or outflow of water and are pressure-resistant in such a way that they can be pumped out in a dimensionally stable manner against hydrostatic water pressure, which presses from the outside onto the pressure containers (3, 30) when the dry ground depression (100) is flooded with water.

2. Method of constructing an underwater pumped storage power plant according to the preceding claim,

wherein the plurality of pressure containers (3, 30) are equipped with one or more turbines, pumps and/or pump turbines (7, 77) so that, when the dry ground depression (100) is flooded with water, the underwater pumped storage power plant can operate in such a way that electric energy is obtained when water is introduced from the flooded ground depression into the pressure containers (3, 30), and electrical energy is stored when water is discharged from the pressure containers (3, 30) into the flooded ground depression, and
wherein some of the plurality of pressure containers (3, 30) are configured as self-contained pressure containers in that these pressure containers are each equipped with their own turbine, pump and/or turbine-pump (7, 77) via their at least one through-opening, and/or
wherein several of the plurality of pressure containers (3, 30) are configured as a pressure container group in that these pressure containers (3, 30) are connected to one another via pressure lines between respective through-openings and are equipped with a common turbine, pump and/or turbine-pump (7, 77), and
wherein preferably several groups of pressure containers are set-up.

3. Method of constructing an underwater pumped storage power plant according to any one of the preceding claims, wherein at least some of the pressure containers (3, 30) are arranged in accordance with the structure of a most compact pack in two dimensions, for example in that elongated or tubular pressure containers are arranged in cross-section in accordance with the structure of a most compact pack, or wherein pressure containers are arranged in accordance with the structure of a most compact sphere pack in three dimensions.

4. Method of constructing an underwater pumped storage power plant according to any one of the preceding claims,

wherein at least some of the pressure containers (3, 30) have a mass which is greater than, or at least not substantially less than, the mass of the water discharged from the pressure container when the dry ground depression (100) is flooded with water, so that the pressure containers (3, 30) remain unballasted or unanchored, or at least without considerable ballasting or anchoring, down in the flooded ground depression and/or wherein at least some of the pressure containers (3, 30), in particular the pressure containers of a lower pressure container layer, are fixed or anchored to the ground, and/or
wherein at least some of the pressure containers (3, 30), in particular the pressure containers of an upper pressure container layer, are ballasted with ballast, in particular with excavated material from the ground depression.

5. Method of constructing an underwater pumped storage power plant according to any one of the preceding claims,

wherein free spaces remaining between pressure containers (3, 30), which do not serve as access to turbines, pumps and/or pump-turbines, are filled or grouted with excavated material or building material, and/or
wherein the plurality of pressure containers (3, 30) are configured as a pressure container assembly in that these pressure containers communicate with one another via respective through-openings and are closed off from the outside with a common casing, wherein the common casing comprises at least one through-opening to the outside in order to be able to equip the pressure container assembly with a common turbine, pump and/or pump-turbine (7, 77).

6. Method of constructing an underwater pumped storage power plant according to any one of the preceding claims,

wherein the dry ground depression (100), in particular the abandoned or still at least partially operating open-cast mine, is initially further widened and/or deepened, preferably with open-cast mining machines already present on site, so that in particular a depth of more than 300 metres, preferably more than 400 metres, particularly preferably more than 500 metres, is reached, or
wherein the dry ground depression (100) is initially created for the construction of the underwater pumped storage power plant, in particular with a depth of more than 300 meters, preferably more than 400 meters, particularly preferably more than 500 meters.

7. Method of constructing an underwater pumped storage power plant according to any one of the preceding claims,

wherein the pressure containers (3, 30) are configured in such a way, are arranged in such a way, are equipped in such a way with one or more turbines, pumps and/or pump-turbines (7, 77) and/or are connected to one another via pressure lines between respective through-openings in such a way that, when water is discharged from the pressure container (3, 30), no air continues to flow into the pressure container (3, 30), but preferably a vacuum limited by the partial pressure of the water vapor is formed in the pressure container (3, 30), and/or when water enters the pressure container (3, 30), the pressure container (3, 30) is not completely filled with water, but preferably a certain residual volume remains with a vacuum limited in particular only by the partial pressure of the water vapor.

8. Method of constructing an underwater pumped storage power plant according to any one of the preceding claims,

wherein after the plurality of pressure containers (3, 30) have been arranged in the ground depression (100), the ground depression (100) is flooded with water to form in the ground depression (100) an artificial lake acting as an upper reservoir (300) for the pumped storage power plant to be constructed,
wherein the ground depression (100) is preferably flooded with water in such a way that initially the water is introduced into one or more of the pressure containers (3, 30), along with the discharge of electrical energy, via a pressure conduit (86) provided for this purpose, and is then pumped from the one or more pressure containers (3, 30) into the ground depression (100), along with obtaining electrical energy, to progressively flood the ground depression (100) and obtain electrical energy thereby.

9. Method of constructing an underwater pumped storage power plant according to any one of the preceding claims,

wherein, after the plurality of pressure containers (3, 30) have been arranged in the ground depression (100) and the ground depression (100) has been at least partially flooded with water so as to form an artificial lake acting as an upper reservoir (300), one or more further pressure containers are lowered from the lake surface onto the pressure containers (3, 30) already arranged,
wherein the further lowered pressure containers are configured in particular as self-contained pressure containers with their own turbine, pump and/or pump-turbine (7, 77), and
wherein the already arranged pressure containers (3, 30) are arranged in particular as one or more pressure container layers and the further lowered pressure containers are stably arranged in recesses of one of the pressure container layers.

10. Lower reservoir (200) for an underwater pumped-storage power plant, built in a dry but floodable ground depression (100), in particular in an abandoned or still operating open-cast mine,
comprising

a plurality of pressure containers (3, 30) which are arranged side by side and/or one above the other in the dry ground depression (100), for example on a lower level of the open-cast mine,
wherein the pressure containers (3, 30) are configured in such a way that they each comprise at least one passage opening for the inflow and/or outflow of water and are pressure-resistant in such a way that they can be pumped out in a dimensionally stable manner against hydrostatic water pressure, which presses from the outside onto the pressure containers when the dry ground depression (100) is flooded with water.

11. Lower reservoir (200) for an underwater pumped storage power plant according to preceding claim 10,

wherein the plurality of pressure containers (3, 30) are equipped with one or more turbines, pumps and/or pump turbines (7, 77) so that, when the dry ground depression (100) is flooded with water, the underwater pumped storage power plant can be operated in such a way that electrical energy can be discharged in that water is introduced into the pressure containers (3, 30), and water can be discharged from the pressure containers (3, 30) in that electrical energy is obtained, and
wherein individual ones of the plurality of pressure containers (3, 30) are configured as self-contained pressure containers in that these pressure containers are each equipped with their own turbine, pump and/or turbine-pump (7, 77) via their at least one through-opening, and/or
wherein several of the plurality of pressure containers (3, 30) are configured as a pressure container group in that these pressure containers (3, 30) are connected to one another via pressure lines between respective through-openings and are equipped with a common turbine, pump and/or turbine-pump (7, 77), and
wherein preferably several pressure container groups are set-up.

12. Lower reservoir (200) for an underwater pumped storage power plant according to any one of claims 10 to 11, wherein the dry ground depression (100) has a depth of more than 300 meters, preferably more than 400 meters, particularly preferably more than 500 meters.

**13.** Underwater pumped storage power plant, comprising a lower reservoir (200) according to any one of claims 10 to 12, further comprising
an upper reservoir (300) configured as an artificially formed lake in the ground depression (100).

**14.** Method for preliminary utilization of a lower reservoir (200) constructed in a dry ground depression (100) for an underwater pumped storage power plant according to any one of claims 10 to 12 as a preliminary pumped storage power plant, and preferably for subsequent conversion into an underwater pumped storage power plant, in particular according to claim 13,

wherein the or some of the pressure containers (3, 30) forming the lower reservoir (200), arranged in the ground depression (100), are connected via a pressure line to a container or basin forming a preliminary upper reservoir (80), which is arranged separately from the dry ground depression (100) and above the lower reservoir (200), for example, is arranged at the top on the side of the dry ground depression, so that the preliminary pumped storage power plant can operate in such a way that electrical energy is obtained when water is discharged from the preliminary upper reservoir (80) into the pressure containers, and electrical energy is stored when water from the pressure containers (3, 30) is pumped into the upper reservoir,
and wherein preferably the dry ground depression (100) is subsequently flooded with water to replace the preliminary upper reservoir (80) with an upper reservoir (300) realized as an artificial lake in the ground depression and thus convert the preliminary pumped storage power plant into an underwater pumped storage power plant, so that the underwater storage power plant can be operated in such a way that electrical energy is obtained when water from the flooded ground depression is introduced into the pressure containers (3, 30), and electrical energy is stored when water is discharged from the pressure containers into the flooded ground depression.

**15.** Method for planning the construction of an underwater pumped storage power plant in a dry, but floodable ground depression (100) using a method according to any one of claims 1 to 9,
wherein preliminary construction work is carried out to provide the plurality of pressure containers (3, 30), to build them on site and/or to arrange them side by side and/or one above the other in the dry ground depression (100) to act there as a lower reservoir (200) for the underwater pumped storage power plant.

**Revendications**

**1.** Procédé de construction d'une centrale à accumulation par pompage sous-marine dans une fosse (100) située au sec, toutefois inondable, en particulier dans une mine à ciel ouvert abandonnée ou encore en fonctionnement,

dans lequel une pluralité de contenants sous pression (3, 30) sont fournis ou sont montés sur place, en particulier sont montés dans la fosse (100) située au sec, par exemple sur une semelle inférieure de la mine à ciel ouvert, dans lequel la pluralité de contenants sous pression (3, 30) sont disposés côte à côte et/ou les uns au-dessus des autres dans la fosse (100) située au sec, par exemple sur une semelle inférieure de la mine à ciel ouvert pour y faire office de réservoir inférieur (200) pour la centrale à accumulation par pompage sous-marine à construire, et
dans lequel les contenants sous pression (3, 30) sont réalisés de telle manière, sont montés de telle manière ou sont usinés de telle manière que ceux-ci présentent respectivement au moins une ouverture de passage pour faire entrer et/ou faire sortir de l'eau et sont résistants à la pression de telle manière qu'ils peuvent être vidés par pompage avec une stabilité de forme à l'encontre d'une pression d'eau hydrostatique, qui exerce une contrainte depuis l'extérieur sur les contenants sous pression (3, 30) lorsque la fosse (100) située au sec est inondée d'eau.

**2.** Procédé de construction d'une centrale à accumulation par pompage sous-marine selon la revendication précédente,

dans lequel la pluralité de contenants sous pression (3, 30) sont équipés d'une ou de plusieurs turbines, pompes et/ou turbines-pompes (7, 77) de sorte que, lorsque la fosse (100) située au sec est inondée d'eau, la centrale à accumulation par pompage sous-marine peut fonctionner de telle manière que de l'énergie électrique est obtenue lorsque de l'eau provenant de la fosse inondée entre dans les contenants sous pression (3, 30) et de l'énergie électrique est stockée lorsque de l'eau provenant des contenants sous pression (3, 30) sort dans la fosse inondée, et
dans lequel parmi la pluralité de contenants sous pression (3, 30), certains sont mis au point en tant que contenants sous pression autonomes en ce que ces contenants sous pression sont équipés respectivement par l'intermédiaire de leur au moins une ouverture de passage d'une turbine, pompe et/ou turbine-pompe (7, 77) qui leur est propre, et/ou dans lequel parmi la pluralité de contenants sous pression (3, 30), plusieurs sont mis au point en tant que groupe de contenants sous pression en ce que ces contenants sous pression (3, 30) sont reliés les uns aux autres par l'intermédiaire de conduits de pression entre des ouvertures de passage respectives et sont équipés d'une turbine, pompe et/ou turbine-pompe (7, 77) commune, et

dans lequel de préférence plusieurs groupes de contenants sous pression sont mis au point.

3. Procédé de construction d'une centrale à accumulation par pompage sous-marine selon l'une quelconque des revendications précédentes,

dans lequel au moins certains des contenants sous pression (3, 30) sont disposés selon la structure d'un empilement le plus compact dans deux dimensions, par exemple en ce que des contenants sous pression allongés ou tubulaires sont disposés dans la section transversale selon la structure d'un empilement le plus compact ou dans lequel des contenants sous pression sont disposés selon la structure d'une empilement de sphères le plus compact dans trois dimensions.

4. Procédé de construction d'une centrale à accumulation par pompage sous-marine selon l'une quelconque des revendications précédentes,

dans lequel au moins certains des contenants sous pression (3, 30) présentent une masse, qui est supérieure ou du moins qui n'est pas sensiblement inférieure à la masse de l'eau refoulée du contenant sous pression lorsque la fosse (100) située au sec est inondée d'eau de sorte que les contenants sous pression (3, 30) restent sans lestage ou ancrage ou du moins sans lestage ou ancrage considérable en bas dans la fosse inondée et/ou dans lequel au moins certains des contenants sous pression (3, 30), en particulier les contenants sous pression d'une couche inférieure de contenants sous pression, sont bloqués ou ancrés sur le sol, et/ou

dans lequel au moins certains des contenants sous pression (3, 30), en particulier les contenants sous pression d'une couche supérieure de contenants sous pression, sont lestés avec un ballast, en particulier avec du déblai issu de la fosse.

5. Procédé de construction d'une centrale à accumulation par pompage sous-marine selon l'une quelconque des revendications précédentes,

dans lequel des espaces libres restant entre des contenants sous pression (3, 30), lesquels ne font pas office d'accès à des turbines, des pompes et/ou des turbines-pompes, sont remplis ou sont coulés avec du déblai ou de la matière de construction, et/ou

dans lequel la pluralité de contenants sous pression (3, 30) est mise au point en tant qu'un ensemble de contenants sous pression en ce que ces contenants sous pression communiquent les uns avec les autres par l'intermédiaire d'ouvertures de passage respectives et sont fermés par rapport à l'extérieur avec un coffrage commun, dans lequel le coffrage commun présente au moins une ouverture de passage vers l'extérieur pour pouvoir équiper l'ensemble des contenants sous pression d'une turbine, d'une pompe et/ou d'une turbine-pompe (7, 77) commune.

6. Procédé de construction d'une centrale à accumulation par pompage sous-marine selon l'une quelconque des revendications précédentes,

dans lequel la fosse (100) située au sec, en particulier la mine à ciel ouvert abandonnée ou encore en fonctionnement au moins partiel, est dans un premier temps davantage élargie et/ou creusée, de préférence avec des machines de construction de mine à ciel ouvert déjà présentes sur place de sorte qu'en particulier une profondeur de plus de 300 mètres, de préférence de plus de 400 mètres, de manière particulièrement préférée de plus de 500 mètres, est atteinte, ou

dans lequel la fosse (100) située au sec est d'abord créée pour la construction de la centrale à accumulation par pompage sous-marine, en particulier avec une profondeur de plus de 300 mètres, de préférence de plus de 400 mètres, de manière particulièrement préférée de plus de 500 mètres.

7. Procédé de construction d'une centrale à accumulation par pompage sous-marine selon l'une quelconque des revendications précédentes,

dans lequel les contenants sous pression (3, 30) sont réalisés de telle manière, sont disposés de telle manière, sont équipés de telle manière d'une ou de plusieurs turbines, pompes et/ou turbines-pompes (7, 77) et/ou sont reliés les uns aux autres par l'intermédiaire de conduits de pression entre des ouvertures de passage respectives de telle manière que lors de la sortie d'eau du contenant sous pression (3, 30), aucun air ne continue à couler dans le contenant sous pression (3, 30), mais de préférence un vide limité par la pression partielle de la vapeur d'eau se forme dans le contenant sous pression (3, 30),

et/ou lors de l'entrée d'eau dans le contenant sous pression (3, 30), le contenant sous pression (3, 30) n'est pas rempli totalement avec de l'eau, mais de préférence un certain volume résiduel reste avec un vide limité en particulier seulement par la pression partielle de la vapeur d'eau.

**8.** Procédé de construction d'une centrale à accumulation par pompage sous-marine selon l'une quelconque des revendications précédentes,

dans lequel après que la pluralité de contenants sous pression (3, 30) a été disposée dans la fosse (100), la fosse (100) est inondée d'eau pour former dans la fosse (100) une mer artificielle faisant office de réservoir supérieur (300) pour la centrale à accumulation par pompage à construire,

dans lequel la fosse (100) est inondée de préférence d'eau de telle manière que l'eau entre dans un ou plusieurs des contenants sous pression (3, 30) tout en distribuant de l'énergie électrique d'abord par l'intermédiaire d'un conduit de pression (86) prévu à cet effet, puis est pompée depuis le ou les contenants sous pression (3, 30) dans la fosse (100) tout en absorbant l'énergie électrique pour inonder progressivement la fosse (100) et pour obtenir ce faisant de l'énergie électrique.

**9.** Procédé de construction d'une centrale à accumulation par pompage sous-marine selon l'une quelconque des revendications précédentes,

dans lequel, après que la pluralité de contenant sous pression (3, 30) a été disposée dans la fosse (100) et que la fosse (100) a été inondée au moins en partie d'eau de manière à former une mer artificielle faisant office de réservoir supérieur (300), un ou plusieurs autres contenants sous pression sont abaissés depuis la surface de la mer sur les contenants sous pression (3, 30) déjà disposés,

dans lequel les autres contenants sous pression abaissés sont mis au point en particulier en tant que contenants sous pression autonomes avec une turbine, une pompe et/ou une turbine-pompe (7, 77) propre, et

dans lequel les contenants sous pression (3, 30) déjà disposés sont disposés en particulier en tant qu'une ou plusieurs couches de contenants sous pression et les autres contenants sous pression abaissés sont disposés de manière stable dans des renfoncements d'une des couches de contenants sous pression.

**10.** Réservoir inférieur (200) pour une centrale à accumulation par pompage sous-marine, construite dans une fosse (100) située au sec toutefois inondable, en particulier dans une mine à ciel ouvert abandonnée ou encore en fonctionnement,

comprenant

une pluralité de contenants sous pression (3, 30), lesquels sont disposés côte à côte et/ou les uns au-dessus des autres dans la fosse (100) située au sec, par exemple sur une semelle inférieure de la mine à ciel ouvert, dans lequel les contenants sous pression (3, 30) sont réalisés de telle manière que ceux-ci présentent respectivement au moins une ouverture de passage pour faire entrer et/ou faire sortir de l'eau et sont résistants à la pression de telle manière qu'ils peuvent être vidés par pompage avec une stabilité de forme à l'encontre d'une pression d'eau hydrostatique, qui exerce une contrainte depuis l'extérieur sur les contenants sous pression lorsque la fosse (100) située au sec est inondée d'eau.

**11.** Réservoir inférieur (200) pour une centrale à accumulation par pompage sous-marine selon la revendication 10 précédente,

dans lequel la pluralité de contenants sous pression (3, 30) sont équipés d'une ou de plusieurs turbines, pompes et/ou turbines-pompes (7, 77) de sorte que, lorsque la fosse (100) située au sec est inondée d'eau, la centrale à accumulation par pompage sous-marine peut fonctionner de telle manière que de l'énergie électrique peut être distribuée en ce que de l'eau entre dans les contenants sous pression (3, 30) et de l'eau peut sortir des contenants sous pression (3, 30) en ce que de l'énergie électrique est absorbée, et dans lequel parmi la pluralité de contenants sous pression (3, 30), certains sont mis au point en tant que contenants sous pression autonomes en ce que ces contenants sous pression sont équipés respectivement par l'intermédiaire de leur au moins une ouverture de passage d'une turbine, pompe et/ou turbine-pompe (7, 77) qui leur est propre, et/ou dans lequel parmi la pluralité de contenants sous pression (3, 30), plusieurs sont mis au point en tant que groupe de contenants sous pression en ce que ces contenants sous pression (3, 30) sont reliés les uns aux autres par l'intermédiaire de conduits de pression entre des ouvertures de passage respectives et sont équipés d'une turbine, pompe et/ou turbine-pompe (7, 77) commune, et

dans lequel de préférence plusieurs groupes de contenants sous pression sont mis au point.

12. Réservoir inférieur (200) pour une centrale à accumulation par pompage sous-marine selon l'une quelconque des revendications 10 à 11,

dans lequel la fosse (100) située au sec présente une profondeur de plus de 300 mètres, de préférence de plus de 400 mètres, de manière particulièrement préférée de plus de 500 mètres.

13. Centrale à accumulation par pompage sous-marine avec un réservoir inférieur (200) selon l'une quelconque des revendications 10 à 12, comprenant en outre un réservoir supérieur (300) réalisé en tant qu'une mer formée de manière artificielle dans la fosse (100).

14. Procédé d'exploitation temporaire d'un réservoir inférieur (200) construit dans une fosse (100) située au sec pour une centrale à accumulation par pompage sous-marine selon l'une quelconque des revendications 10 à 12 en tant que centrale à accumulation par pompage temporaire, et de préférence de transformation ultérieure en une force d'accumulation par pompage sous-marine, en particulier selon la revendication 13, dans lequel les ou certains des contenants sous pression (3, 30) formant le réservoir inférieur (200), disposés dans la fosse (100) sont reliés par l'intermédiaire d'un conduit sous pression à un contenant ou bassin formant un réservoir supérieur temporaire (80), lequel est disposé de manière séparée de la fosse (100) située au sec et au-dessus du réservoir inférieur (200), par exemple est disposé en haut sur le flanc de la fosse située au sec de sorte que la centrale à accumulation par pompage temporaire peut fonctionner de telle manière que de l'énergie électrique est obtenue lorsque de l'eau provenant du réservoir supérieur temporaire (80) entre dans les contenants sous pression, et de l'énergie électrique est stockée lorsque de l'eau provenant des contenants sous pression (3, 30) est pompée dans le réservoir supérieur, et dans lequel de préférence la fosse (100) située au sec est inondée ultérieurement d'eau pour remplacer le réservoir supérieur temporaire (80) par un réservoir supérieur (300) réalisé en tant qu'une mer artificielle dans la fosse et ainsi convertir la force temporaire d'accumulation par stockage dans une centrale à accumulation par pompage sous-marine de sorte que la centrale à accumulation par stockage sous-marine peut fonctionner de telle manière que de l'énergie électrique est obtenue lorsque de l'eau provenant de la fosse inondée entre dans les contenants sous pression (3, 30), et de l'énergie électrique est stockée lorsque de l'eau provenant des contenants sous pression sort dans la fosse inondée.

15. Procédé de planification de la construction d'une centrale à accumulation par pompage sous-marine dans une fosse (100) située au sec toutefois inondable selon un procédé selon l'une quelconque des revendications 1 à 9, dans lequel des travaux de construction temporaires sont effectués pour fournir la pluralité de contenants sous pression (3, 30), les construire sur place et/ou pour les disposer côte à côte et/ou les uns au-dessus des autres dans la fosse (100) située au sec pour faire office à cet endroit de réservoir inférieur (200) pour la centrale à accumulation par pompage sous-marine.

Fig. 1

EP 3 997 329 B1

Fig. 2

EP 3 997 329 B1

Fig. 3

Fig. 4

EP 3 997 329 B1

Fig. 5

(a)

(b)

EP 3 997 329 B1

Fig. 6

Fig. 7

Fig. 8

(a)                                        (b)

EP 3 997 329 B1

Fig. 9

Fig. 10

Fig. 11

Oberbecken

Unterbecken

0

1

5

67

100

300

200

110

Fig. 12

Fig. 13

Teufe

EP 3 997 329 B1

Fig. 14

EP 3 997 329 B1

Fig. 15

Fig. 16

EP 3 997 329 B1

Fig. 17

Fig. 18

Fig. 19

Fig. 20

Fig. 21

Fig. 22

EP 3 997 329 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19513817 B4
- DE 102013020984 A1
- DE 102011105307
- DE 102013019776 B3
- DE 102014007184

- EP 2683933 B1
- DE 2011013329
- DE 2011118206
- US 8698338 B, Slocum, Alexander; Greenlee, Alison und Gregory Fennell

**In der Beschreibung aufgeführte Nicht-Patentliteratur**

- *Internationalen Speicherkonferenz, 7th IRES Conference,* 07. November 2012
- **BAUFUMÉ ; SYLVESTRE ; BONGARTZ ; RICHARD ; PETER MARKEWITZR.** STE-Research Report 08/2011, '' Unterflur-Pumpspeicher- Eine Kurzsynopse. *Forschungszentrum Jülich, Systems Analysis and Technology Evaluation (IEK-STE),* 2011, http://www.fz-juelich.de/SharedDocs/Downloads/IEK/IEK-STE/EN/report_08_2011.pdf?_blob= publicationFile
- Grobe Modellierung einer solaren Stromerzeugung in Nordafrika mit Kopplung zur deutschen Stromversorgung. **KEVIN R. BIERINGER.** Staatsarbeit für das Lehrfach Physik. Universität des Saarlandes, 2019
- Pumpspeicherkonzept StEnSEA. *Bundesministerium für Wirtschaft,* 2017, https://forschung-energiespeicher.info/projektschau/gesamtliste/projekteinzelansicht/95/Kugelpumpspeicher
- Understanding the Bigger energy Picture - DESERTEC and Beyond. **DÜREN, M.** Springer Briefs in Energy. Springer, 2017
- **A. GARG ; C. LAY ; R. FÜLLMANN.** STENSEA, Stored Energy in the Sea -the Feasibility of an Underwater Pumped Hydro Storage System. *7. IRES - Conference,* 12. November 2012, vol. C2, 477ff, https://www.eurosolar.de/en/imaqes/EVENTS/IRES/I RES20 12/Proceedinqs I RES20 12.pdf https://www.eurosolar.de/en/index.php/events/ires-conference-eurosolar
- **KÜFFNER, G.** Hohlkugeln speichen überflüssigen Windstrom. *FAZ,* 01. April 2011, T2, https://www.faz.net/aktuell/technik-motor/technik/in-der-tiefe-der-meere-hohlkugeln-speichern-ue berschuessigen-windstrom-1608012.html
- **GREENPEACE.** *WAS BRAUNKOHLESTROM WIRKLICH KOSTET,* http://www.foes.de/pdf/2018-06-25-GPE-Studie-Braunkohle.pdf

- **LUTHER, G. ; SCHMIDT-BÖCKING, H.** *Das Zusammenwirken von PSKW - artigen und P2G - artigen Energiespeichern und die mögliche Rolle von Tiefschachtspeichern bei der Energiewende,* 2014, http://www.fze.uni-saarland.de/AKE Archiv/AKE2014F/Links AKE2014F.htm.
- **LUTHER, G. ; SCHMIDT-BÖCKING, H.** *Schacht Pumpspeicherkraftwerk,* 2011
- **LUTHER,G. ; SCHMIDT-BÖCKING, H.** *Tiefschacht-Pumpspeicherkraftwerk*
- **LUTHER, G. ; SCHMIDT-BÖCKING, H.** *Verfahren zur Nutzung staugeregelter Fließgewässer als Oberbecken für ein Pumpspeicherkraftwerk unter Tage,* 2014
- **LUTHER, G. ; SCHMIDT-BÖCKING, H.** *Pumpspeicherkraftwerke - Unsichtbare Speicher für die Energiewende. ew-Spezial(III),* 2014, 22-24
- Wärmepumpe oder KWK - was passt zur Wärmewende. **LUTHER, G.** Energie - Forschung und Perspektiven. Vorträge auf der DPG-Frühjahrstagung Regensburg. 2016, 123-139
- **SCHMIDT-BÖCKING, H. ; LUTHER, G.** *Pumpspeicherkraftwerk,* 2011
- **PERAU, E. ; KORN,S.** *Geotechnische Fragestellungen beim Bau von Untertage-Pumpspeicherwerken im rheinischen Braunkohle-Tagebau,* 2013, 135-146
- **REUTHER ; ERNST ULRICH.** Lehrbuch der Bergbaukunde. VGE -Verlag, 2010, vol. 12, 532
- Untertage-Pumpspeicherwerke in Anlagen des Berg- und Tagebaus. Universität Duisburg-Essen, VGE Verlag, 2013, 148-165, 135-46
- **DAVID SANIO ; PETER MARK.** *Entwurf und Optimierung von Betonkonstruktionen für Pumpspeicherwerke in ehemaligen Braunkohletagebauen,* 2013, 148-165
- **SINN, H.-W.** *Energiewende ins Nichts.,* 16. Dezember 2013, www.cesifo-group.de/de/ifo-Home/events/individual-events/Archive/2013/vortrag-sinn-lmu-20131216.html

- **U. SCHREIBER ; E. PERAU ; A. NIEMANN ; H.-J. WAGNER.** *Unterflur-Pumpspeicherwerke -Konzepte für regionale Speicher regenerativer Energien, https://www.uni-due.de/imperia/md/content/geotechnik/forschung/upw_unterflur_pumspeicherwerke_forschungsskizze.pdf*
- **SCHULZ, DETLEV.** Speicherpotenziale von Pumpspeicherwerken in Tagebaurestlöchern ehemaliger Braunkohlereviere. *Vortrag auf Forum Netzintegration, Deutsche Umwelthilfe, Berlin,* 30. September 2009, http://www.forum-netzintegration.de/uploads/media/DUH Schulz 300909 01.pdf
- **ALEXANDER SLOCUM ; G. DUNDAR ; B. HODDER ; J. MEREDITH ; ELIE H. HOMSI ; A. GARG ; C. LAY ; H. SCHMIDT-BÖCKING ; G. LUTHER.** Large Scale Manufacturing and Deployment of Offshore Renewable Energy Harvesting and Storage System. *Proc. of the 12th International euspen Conference , Stockholm,* Juni 2012
- **ALEXANDER H. SLOCUM ; GREGORY E. FENNELL ; GÖKHAN DÜNDAR ; BRIAN G. HODDER ; JAMES D. C. MEREDITH ; MONIQUE A. SAGER.** Ocean Renewable Energy Storage (ORES) - System Analysis of an Undersea Energy Storage Concept. *Proceedings of the IEEE,* 04. April 2013, vol. 101, 906-924
- **PETER STENZEL ; SYLVESTRE BAUFUMÉ ; RICHARD BONGARTZ ; JOCHEN LINSSEN ; PETER MARKEWITZ ; JÜRGEN-FRIEDRICH HAKE.** Unkonventionelle Energiespeicher. *STE-Research Report 03/2012, https://www.fz-juelich.de/SharedDocs/Downloads/IEK/IEK-STE/DE/Publikationen/research_reports/2012/report_03_2012.pdf?_blob=publicationFile*
- PSKW in stillgelegten Tagebauen -am Beispiel Hambach-Garzweiler-Inden. **JOHANNES THEMA ; MARTIN THEMA.** Wuppertal Paper. Wuppertal, Marz 2019, vol. 2